# EUROPEAN PATENT SPECIFICATION

(11) **EP 3 828 108 B1**
(45) Date of publication and mention of the grant of the patent: **22.01.2025**
(21) Application number: 19894729.3
(22) Date of filing: 09.12.2019
(51) Int. Cl.: B65G 67/04, B65G 61/00

(54) **LOADING AND UNLOADING EQUIPMENT**
BE- UND ENTLADEVORRICHTUNG
ÉQUIPEMENT DE CHARGEMENT ET DE DÉCHARGEMENT

(30) Priority: 12.12.2018 CN 201811517756
(43) Date of publication of application: 02.06.2021
(73) Proprietor: GUANGDONG TIANNIANG INTELLIGENT EQUIPMENT COMPANY LIMITED, Foshan, Guangdong 528511 (CN); FOSHAN HAITIAN FLAVOURING & FOOD COMPANY LIMITED, Foshan, Guangdong 528000 (CN)
(72) Inventor: WANG, Lizhan, Foshan, Guangdong 528511 (CN); YE, Ruihan, Foshan, Guangdong 528511 (CN); REN, Yunchao, Foshan, Guangdong 528511 (CN); GUO, Yatao, Foshan, Guangdong 528511 (CN); PANG, Mingyu, Foshan, Guangdong 528511 (CN)
(74) Representative: Kolster Oy Ab
(86) International application number: PCT/CN2019/123960
(87) International publication number: WO 2020/119622

(56) References cited:
- WO-A1-2017/005690
- WO-A1-2017/220215
- CN-A- 107 472 932
- CN-A- 107 472 932
- CN-A- 108 190 112
- CN-A- 108 750 723
- CN-A- 108 860 728
- CN-A- 110 482 268
- CN-U- 206 939 915
- CN-U- 207 243 008
- CN-U- 208 217 898
- CN-U- 209 291 573
- US-B2- 9 315 345
- US-B2- 9 623 569

## Description

### Cross-Reference to Related Applications

The present disclosure is based on, and claims the priority of Chinese Application No. 201811517756.8, filed in the Chinese Patent Office on December 12, 2018, and entitled "LOADING AND UNLOADING EQUIPMENT AND PACKAGE LOADING AND UNLOADING SYSTEM".

### Field of the Invention

The present invention relates to the technical field of logistics, and in particular to a kind of loading and unloading equipment and a package loading and unloading system.

### Background of the Invention

Along with the development of the economic level of China, the labor cost is continuously increased, the production costs of more and more enterprises are sharply increased, and particularly, the labor cost is higher in the work of loading and unloading packages with higher labor intensity. In order to reduce the production cost, automatic equipment is generally adopted to complete the storage and transportation links in the logistics industry at present.

In an automatic logistics transportation line, when box bodies are loaded and stacked, the box bodies need to be arranged and marshalled at first, and then the marshalled box bodies are grabbed through a robot. In an existing production line, a marshalling procedure and a grabbing procedure are completed at one station, so that a grabbing robot may only wait during the marshalling, and the marshalling equipment may only wait during the grabbing, in this way, excessive waiting time is consumed, and the efficiency is lower.

US9315345B2, disclosing the preamble of claim 1, provides a robotic carton unloader for automatic unloading of cartons from a carton pile.

### Summary of the Invention

The purpose of the present disclosure is to provide a kind of loading and unloading equipment. When the loading and unloading equipment is used to load and unload packages, the procedures of marshalling the packages and taking the packages by a stacking device are separated, thereby improving the loading and unloading efficiency of the packages. The present disclosure further provides a loading and unloading system having the loading and unloading equipment provided by the present disclosure.

The present invention discloses a loading and unloading equipment as defined in claim 1 and the dependent claims 2 - 14.

In some embodiments, the marshalling device includes:
a marshalling platform, configured to carry the packages;
a force applying mechanism, being switchable between a force applying working position and a non-force applying working position; wherein, at the force applying working position, the force applying mechanism is configured to drive the packages located on the marshalling platform to move to the predetermined marshalling position according to the requirements of the predetermined marshalling mode; and
a force applying mechanism driving portion, in driving connection with the force applying mechanism, and configured to drive the force applying mechanism to move to a preset position of the force applying mechanism.

In some embodiments, the force applying mechanism has an extension state and a retraction state;
wherein in the extension state, the force applying mechanism is at the force applying working position; and
in a retraction state, the force applying mechanism is at the non-force applying working position.

In some embodiments, the marshalling device includes:
a marshalling conveyance mechanism, configured to convey the packages received by the marshalling device to a package marshalling preset position;
a spacing mechanism, configured to be switchable between a spacing working position and a non-spacing working position; wherein at the spacing working position, a spacer of the spacing mechanism is configured to move to a position of spacing a package from other packages or components; and
a spacing mechanism driving portion, in driving connection with the spacing mechanism and configured to move the spacing mechanism to a preset position of the spacing mechanism.

In some embodiments, the spacing mechanism is configured to switch between the spacing working position and a non-spacing working position through rotating or swinging or telescoping motion.

In some embodiments, the spacing mechanism further includes a spacer driving portion, and the spacer driving portion is in driving connection with the spacer to drive the spacer to rotate; and the spacer driving portion includes a spacer driver, one end of the spacer driver is rotatably installed on the spacing mechanism driving portion, the other end thereof is rotatably connected to the spacer, and the extension and retraction of the spacer driver drives the spacer to rotate relative to the spacing mechanism driving portion.

In some embodiments, the loading and unloading equipment further includes a marshalling-pre-storage intermediate mechanism disposed between the marshalling device and the pre-storage device; wherein the marshalling-pre-storage intermediate mechanism has a package group conveying state and a package group limiting state, and is configured:
in the package group conveying state, the marshalling-pre-storage intermediate mechanism at least partially covers the gap between the marshalling device and the pre-storage device; and
in the package group limiting state, the marshalling-pre-storage intermediate mechanism is disposed at a tail end of the marshalling device in the package transporting direction to prevent the packages on the marshalling device from leaving the marshalling device.

In some embodiments, the marshalling-pre-storage intermediate mechanism includes a baffle that is rotatably connected to the tail end of the marshalling device.

In some embodiments, the package group transfer device has a package bearing state and a package group pushing state, and is configured:
in the package bearing state, the package group transfer device is located at the upstream of a package receiving end of the marshalling device, and at least a part of the package group transfer device is flush with the upper surface of the marshalling device, so that the packages are conveyed by the package group transfer device to the marshalling device; and
in the package group pushing state, the package group transfer device is located above the marshalling device to push the package group on the marshalling device to the pre-storage device.

In some embodiments, the package group transfer device is disposed in a liftable manner relative to the marshalling device, the package group transfer device includes a push plate and a package transfer roller disposed on one side of the push plate, and the package transfer roller is configured:
in the package bearing state, the package transfer roller is flush with the upper surface of the marshalling device, so that the package is able to be conveyed to the marshalling device through the package transfer roller; and
in the package group pushing state, the package transfer roller is located above the marshalling device and is driven by the push plate to singly push the package group or together with the push plate.

In some embodiments, the pre-storage device and the marshalling device are switchable between a pre-storage station and a marshalling station, and their functions are interchanged after the switch.

In some embodiments, the height and/or the width of at least one of the pre-storage device or the marshalling device is adjustable.

In some embodiments, the pre-storage device and the marshalling device have multiple sockets, the stacking device includes mechanical fingers, and the multiple sockets are configured to be inserted with the mechanical fingers of the stacking device.

In some embodiments, the loading and unloading equipment further includes a package conveying device, configured to convey the packages to the marshalling device, and the package conveying device includes:
a package conveying mechanism, including a package conveying portion for conveying the packages;
a package passage limiting mechanism, configured to adjustably limit the width and/or the position of a package passage when the packages are conveyed on the package conveying portion; and
a package output mechanism, including an output force applying portion, configured to apply an output force to the packages in the package passage and output the packages to the marshalling device; and
wherein the package passage limiting mechanism is connected to the package output mechanism, the package passage limiting mechanism is configured to, when adjusting the width and/or the position of the package passage, drive the package output mechanism to move along the width direction of the package passage, so that the output force applying portion of the package output mechanism is located in the package passage in the width direction of the package passage.

In some embodiments, in the width direction of the package passage, the ratio of the distance from the center of the output force applying portion to the both sides of the package passage remains unchanged.

In some embodiments, the package passage limiting mechanism includes a first limiting member of package passage and a second limiting member of package passage, and the package passage limiting mechanism is configured to adjust the width or the position of the package passage through the relative movement of the first limiting member of package passage and the second limiting member of package passage.

In some embodiments, the package conveying device further includes a limiting member following mechanism connected to the first limiting member of package passage and the second limiting member of package passage, the limiting member following mechanism includes a connecting portion connected to the package output mechanism, and the package passage limiting mechanism drives the package output mechanism to move along the width direction of the package passage through the connecting portion.

In some embodiments,
the connecting portion includes a connecting hinge point, and the package output mechanism is connected to the connecting hinge point; and
the limiting member following mechanism includes a scissor-type telescoping mechanism, and the telescoping direction of the scissor-type telescoping mechanism is disposed along the width direction of the package passage; the two first end portions of the first end in the telescoping direction of the scissor-type telescoping mechanism are rotatably connected to the first limiting member of package passage, respectively, and at least one of the two first end portions is movable along the length direction of the package passage; the two second ends of the second end in the telescoping direction of the scissor-type telescoping mechanism are rotatably connected to the second limiting member of package passage, and at least one of the two second end portions is movable along the length direction of the package passage; and an internal hinge point of the scissor-type telescoping mechanism forms the connecting hinge point.

In some embodiments, the package conveying device further includes a package guide mechanism for guiding the packages into the package passage, the package guide mechanism includes a telescopic first package guide member hinged with the first limiting member of package passage at one end, and a telescopic second package guide member hinged with the second limiting member of package passage at one end, and the other ends of the first package guide member and the second package guide member are disposed at intervals along the width direction of the package passage and are hinged with a package conveying mechanism rack of the package conveying device.

In some embodiments, the package output mechanism includes a lifting mechanism configured to lift the output force applying portion and a package pushing mechanism configured to move the lifting mechanism along the length direction of the package passage, the lifting mechanism includes a first stage telescoping mechanism and a second stage telescoping mechanism, which are disposed side by side, each of the first stage telescoping mechanism and the second stage telescoping mechanism includes a body and a telescoping portion capable of telescoping up and down relative to the body, the lower end of the telescoping portion of the first stage telescoping mechanism is fixedly connected with the body of the second stage telescoping mechanism, and the top end of the body of the second stage telescoping mechanism is higher than with the joint with the telescoping portion of the first stage telescoping mechanism.

In some embodiments, the conveying portion includes:
a low-speed conveyor line;
a high-speed conveyor line, disposed at the downstream of the low-speed conveyor line and forming an interval with the low-speed conveyor line; and
a blocking transition mechanism, including a movable blocking transition portion, the blocking transition mechanism has a transition working state and a blocking working state, and is configured:
   in the transition working state, the blocking transition portion is located in the interval, so that the packages conveyed from the low-speed conveyor line are transited onto the high-speed conveyor line through the blocking transition portion; and
   in the blocking working state, the blocking transition portion is located above the interval to block the packages conveyed from the low-speed conveyor line from being conveyed to the downstream of the interval.

In some embodiments, the blocking transition portion includes a blocking transition rolling body with a movable axis, which is configured:
in the transition working state, the blocking transition rolling body is located in the interval, so that the packages conveyed from the low-speed conveyor line are transited onto the high-speed conveyor line through the rolling of the blocking transition rolling body; and
in the blocking working state, the blocking transition rolling body is located above the interval, in order to prevent the packages conveyed from the low-speed conveyor line from being conveyed to the downstream of the interval.

In some embodiments, the blocking transition rolling body with the movable axis includes a liftable first transition roller, the blocking transition mechanism further includes two second transition rollers with fixed axes and located at the both ends of the first transition roller respectively.

In some embodiments, the low-speed conveyor line includes a conveyor belt provided with a plurality of rolling bodies on the surface, and in the blocking working state, the rolling bodies are configured to reduce the mutual extrusion between the blocked packages.

In some embodiments, the stacking device includes a mechanical arm formed a four-link mechanism with the rack; in the stacking working state, the pre-storage support plate is connected to a rod member in the four-link mechanism away from the rack, so that the pre-storage support plate is driven to move to the vicinity of the stacking position by the swing of the four-link mechanism, and the mechanical arm is configured in such a manner that the length of at least one rod member used for forming the four-link mechanism is adjustable, so that the inclination angle of the pre-storage support plate is adjusted according to current working state.

In some embodiments, the stacking device further includes a first driving portion of mechanical arm and a second driving portion of mechanical arm; the first driving portion of mechanical arm is configured to drive the four-link mechanism to swing; the second driving portion of mechanical arm is configured to drive the connecting rod with an adjustable length to extend and retract; and the first driving portion of mechanical arm and the second driving portion of mechanical arm are controlled independently of each other.

In some embodiments, the four-link mechanism includes a first rod member of four-link mechanism hinged with the rack and a second rod member of four-link mechanism hinged with the rack, the length of the second rod member of four-link mechanism is adjustable; the first rod member of four-link mechanism is a single rod member spaced apart from the second rod member of four-link mechanism, or the first rod member of four-link mechanism includes a first rod of first rod member and a second rod of first rod member which are hinged with the rack and respectively disposed on the both sides of the second rod member of four-link mechanism at intervals.

In some embodiments, the stacking device includes a mechanical arm and a package group push-out mechanism connected with the mechanical arm, the pre-storage support plate is provided with a connecting end for connecting with the mechanical arm; in the stacking working state, the package group push-out mechanism is rotatably disposed on one side of the connecting end of the pre-storage support plate, and the package group push-out mechanism is configured to rotate to a first position of package group push-out mechanism in a non-working state, so as to reduce the space occupied on the side of the connecting end of the pre-storage support plate, and to rotate to a second position of package group push-out mechanism in the working state, so as to push out the package groups on the pre-storage support plate.

In some embodiments, the package group push-out mechanism includes a plurality of package push-out members that are disposed at intervals along the length direction of the pre-storage support plate in the stacking working state.

In some embodiments,
the package group push-out mechanism further includes a push-out member connecting shaft is configured to rotatably dispose on one side of the connecting end of the pre-storage support plate along the length direction of the pre-storage support plate and drive the package group push-out mechanism to rotate as a whole by its own rotation in the stacking working state; and
the plurality of package push-out members are disposed on the push-out member connecting shaft at intervals along the length direction of the push-out member connecting shaft.

In some embodiments, the loading and unloading equipment further includes a position switching mechanism position configured to drive the package group push-out mechanism to move to switch between the first position of package group push-out mechanism and the second position of package group push-out mechanism; and the position switching mechanism includes:
a position switching connecting member, wherein the first end of the position switching connecting member is disposed at the push-out member connecting shaft; and
a connecting shaft driving portion, being a linear driving portion, wherein the first end of the connecting shaft driving portion is rotatably connected to a mounting base of the mechanical arm away from the pre-storage support plate, the second end of the connecting shaft driving portion is rotatably connected to the second end of the position switching connecting member, the connecting shaft driving portion is configured to drive the push-out member connecting shaft to rotate through the position switching connecting member during the telescoping movement of the second end, and the force applying direction of the second end of the connecting shaft driving portion on the position switching connecting member deviates from the axis of the push-out member connecting shaft.

In some embodiments,
the stacking device includes a first connecting mechanism of pre-storage support plate, which has a locked state of connecting the stacking device with the pre-storage support plate and an unlocked state of disconnecting the stacking device with the pre-storage support plate; and/or
the pre-storage device includes a second connecting mechanism of pre-storage support plate, which has a locked state of connecting the pre-storage support plate with the pre-storage support structure and an unlocked state of disconnecting the pre-storage support plate with the pre-storage support structure.

In some embodiments,
the stacking device includes the first connecting mechanism of pre-storage support plate, and the pre-storage device includes the second connecting mechanism of pre-storage support plate;
the first connecting mechanism of pre-storage support plate and the second connecting mechanism of pre-storage support plate are independently disposed, and are configured in such a way that when one connecting mechanism is switched to the locked state, the other connecting mechanism is in its unlocked state at first; or,
the first connecting mechanism of pre-storage support plate and the second connecting mechanism of pre-storage support plate are disposed in a linkage manner, and are configured in such a way that when one connecting mechanism is switched to the locked state, the other connecting mechanism is located in its unlocked state.

In some embodiments, the first connecting mechanism of pre-storage support plate includes:
a plate arm connection component driving portion;
a first plate arm connection positioning portion, disposed on the pre-storage support plate; and
a second plate arm connection positioning portion, disposed at the output end of the plate arm connection component driving portion; and
the plate arm connection component driving portion is configured to cause the first plate arm connection positioning portion and the second plate arm connection positioning portion to engage or disengage through the movement of its own output end, in order to connector disconnect the mechanical arm and the pre-storage support plate.

In some embodiments,
the first plate arm connection positioning portion includes a pre-storage support plate connecting pin disposed at the end of the pre-storage support plate;
the second plate arm connection positioning portion includes at least one movable connecting pin slot, and the connecting pin slot is configured to cooperate with a support plate connecting pin to clamp the pre-storage support plate connecting pin; and
the plate arm connection component driving portion includes a first connecting mechanism locking device configured to lock the connecting pin slot on the pre-storage support plate connecting pin.

In some embodiments,
the first connecting mechanism locking device includes a first connecting mechanism power cylinder, and a first connecting mechanism locking block connected between the first connecting mechanism power cylinder and the movable connecting pin slot; and
the first connecting mechanism locking block is driven by the first connecting mechanism power cylinder to press the connecting pin slot on the pre-storage support plate connecting pin, so that the first connecting mechanism of pre-storage support plate is in the locked state, or, disengage the connecting pin slot from the pre-storage support plate connecting pin, so that the first connecting mechanism of pre-storage support plate is in the unlocked state.

In some embodiments, the pre-storage device includes a pre-storage support plate bearing platform, a plate platform connection installation position is disposed in the pre-storage support plate bearing platform, and the second connecting mechanism of pre-storage support plate includes:
a plate platform connection component driving portion, disposed in the plate platform connection installation position;
a first plate platform connection positioning portion, disposed on the pre-storage support plate; and
a second plate platform connection positioning portion, disposed at the output end of the plate platform connection component driving portion; and
wherein the plate platform connection component driving portion is configured to engage or disengage the first plate platform connection positioning portion and the second plate platform connection positioning portion through the movement of its own output end, in order to connect or disconnect the pre-storage support plate and the pre-storage support plate bearing platform.

In some embodiments, the loading and unloading equipment further includes a traveling device configured to carry and move the loading and unloading equipment.

In some embodiments, the traveling device includes a crawler-type walking mechanism, and the loading and unloading equipment adjusts the walking posture of the loading and unloading equipment by adjusting the speed difference of the crawlers on the both sides of the crawler-type walking mechanism; or, the traveling device includes a wheel-type walking mechanism, and the loading and unloading equipment adjusts the walking posture of the loading and unloading equipment by adjusting the speed difference of wheel sets on the both sides of the wheel-type walking mechanism.

In some embodiments, the traveling device includes a track-type walking mechanism, the loading and unloading equipment includes a loading and unloading main body loaded on the track-type walking mechanism and walk along the track-type walking mechanism, the track-type walking mechanism includes:
a travelling track;
a track support mechanism, configured to adjust the distance between the travelling track and a track reference surface; and
a track driving mechanism, configured to drive the travelling track to move relative to the track reference surface.

A second aspect of the present disclosure provides a package loading and unloading system, including the loading and unloading equipment according to any one of the first aspect of the present disclosure.

Based on the loading and unloading equipment provided by the present disclosure, the marshalling device and the pre-storage device are disposed to separate the procedures of marshalling the packages to be stacked and taking the marshalled packages by the stacking device, so that the loading and unloading efficiency of the loading and unloading equipment is improved.

Further, by disposing a separable pre-storage support plate on the pre-storage device, the stacking device and a pre-storage support plate have a working state that may be connected and disengaged, so that the stacking device may take and stack the packages located on the support plate and reset the pre-storage support plate on which the stacking work has been completed more flexibly and efficiently.

The package loading and unloading system provided by the present disclosure has the same advantages as the loading and unloading equipment provided by the present disclosure.

Other features and advantages of the present disclosure will become clear from the following detailed description of exemplary embodiments of the present disclosure with reference to the drawings.

### Brief Description of the Drawings

The drawings described herein are used to provide a further understanding of the present disclosure and constitute a part of the present application. The exemplary embodiments of the present disclosure and the description thereof are used to explain the present disclosure, but do not constitute improper limitations to the present disclosure. In the drawings:
Fig. 1 is a structural schematic diagram of loading and unloading equipment in one embodiment of the present disclosure;
Fig. 2a is a schematic front view of a marshalling device of loading and unloading equipment in another embodiment of the present disclosure in a working state;
Fig. 2b is a schematic upward view of the marshalling device of the loading and unloading equipment in the embodiment as shown in Fig. 2a in the working state;
Fig. 2c is a schematic left view of the marshalling device of the loading and unloading equipment in the embodiment as shown in Fig. 2a in the working state;
Fig. 2d is a schematic front view of the marshalling device of the loading and unloading equipment in the embodiment as shown in Fig. 2a in a working process of conveying a package to the right side of a marshalling platform;
Fig. 2e is a schematic upward view of the marshalling device of the loading and unloading equipment in the embodiment as shown in Fig. 2a in the working process of conveying the package to the right side of the marshalling platform;
Fig. 2f is a schematic left view of the marshalling device of the loading and unloading equipment in the embodiment as shown in Fig. 2a in the working process of conveying the package to the right side of the marshalling platform;
Fig. 2g is a schematic front view of the marshalling device of the loading and unloading equipment in the embodiment as shown in Fig. 2a in the working process of conveying the next package to the left side of the marshalling platform;
Fig. 2h is a schematic front view of a marshalling device of loading and unloading equipment in another embodiment of the present disclosure in the working state;
Fig. 2i is a schematic upward view of the marshalling device of the loading and unloading equipment in the embodiment as shown in Fig. 2h in the working state;
Fig. 2j is a schematic front view of a marshalling device of loading and unloading equipment in yet another embodiment of the present disclosure in the working state;
Fig. 2k is a schematic upward view of a marshalling device of loading and unloading equipment in another embodiment of the present disclosure in the working state;
Fig. 2l is a schematic left view of a marshalling device of loading and unloading equipment in another embodiment of the present disclosure in the working state;
Fig. 3a is a schematic front view of a spacing mechanism of a marshalling device of loading and unloading equipment in another embodiment of the present disclosure in the working state of moving to the right side of the platform;
Fig. 3b is a schematic left view of the spacing mechanism of the marshalling device of the loading and unloading equipment in the embodiment as shown in Fig. 3a in the working state of moving to the right side of the platform;
Fig. 3c is a schematic vertical view of the spacing mechanism of the marshalling device of the loading and unloading equipment in the embodiment as shown in Fig. 3a in the working state of moving to the right side of the platform;
Fig. 3d is a schematic front view of the spacing mechanism of the marshalling device of the loading and unloading equipment in the embodiment as shown in Fig. 3a in a non-working state of moving to the left side of the platform;
Fig. 3e is a schematic left view of the spacing mechanism of the marshalling device of the loading and unloading equipment in the embodiment as shown in Fig. 3a in the non-working state of moving to the left side of the platform;
Fig. 3f is a schematic vertical view of the spacing mechanism of the marshalling device of the loading and unloading equipment in the embodiment as shown in Fig. 3a in the non-working state of moving to the left side of the platform;
Fig. 4a to Fig. 4d are process schematic diagrams of loading and unloading equipment in yet another embodiment of the present disclosure to move a package group from the marshalling device to a pre-storage device;
Fig. 4e to Fig. 4f are schematic diagrams before a package group transfer device of loading and unloading equipment in yet another embodiment of the present disclosure transfers the packages to the marshalling device and in the process of transferring the packages to the marshalling device;
Fig. 5a is a schematic diagram of a working process of a movable pre-storage support structure of a pre-storage device of loading and unloading equipment in yet another embodiment of the present disclosure;
Fig. 5b to Fig. 5d are schematic diagrams of a meeting process of two movable pre-storage support structures of loading and unloading equipment in yet another embodiment of the present disclosure at work;
Fig. 5e to Fig. 5g are schematic diagrams of a process in which a stacking device and a pre-storage device of loading and unloading equipment in yet another embodiment of the present disclosure cooperate to take the packages;
Fig. 6a is a structural schematic diagram of a package conveying device of loading and unloading equipment in yet another embodiment of the present disclosure;
Fig. 6b is a structural schematic diagram of a package conveying device of loading and unloading equipment in yet another embodiment of the present disclosure;
Fig. 7a is a structural schematic diagram of a package conveying mechanism of loading and unloading equipment in yet another embodiment of the present disclosure;
Fig. 7b is a vertical view of the package conveying mechanism of the loading and unloading equipment in the embodiment as shown in Fig. 7a;
Fig. 7c is a sectional view of the package conveying mechanism of the loading and unloading equipment in the embodiment as shown in Fig. 7b;
Fig. 7d is a structural schematic diagram of a blocking transition mechanism of the package conveying mechanism of the loading and unloading equipment in the embodiment as shown in Fig. 7a;
Fig. 8a is a principle schematic diagram of a stacking device of loading and unloading equipment in yet another embodiment of the present disclosure;
Fig. 8b is a structural schematic diagram of a stacking device of loading and unloading equipment in yet another embodiment of the present disclosure;
Fig. 8c is a structural schematic diagram of a stacking device of loading and unloading equipment in yet another embodiment of the present disclosure;
Fig. 9a is a structural schematic diagram of a package group push-out mechanism of a stacking device of loading and unloading equipment in yet another embodiment of the present disclosure at a first position of package group push-out mechanism;
Fig. 9b is a structural schematic diagram of the package group push-out mechanism of the stacking device of the loading and unloading equipment the embodiment as shown in Fig. 9a at a second position of package group push-out mechanism;
Fig. 9c is a structural schematic diagram of the package group push-out mechanism of the stacking device of the loading and unloading equipment the embodiment as shown in Fig. 9a when pushing out the package group;
Fig. 10a is a local schematic diagram of a connection of a pre-storage support plate of loading and unloading equipment in yet another embodiment of the present disclosure with a pre-storage support plate bearing platform and a mechanical arm;
Fig. 10b is a structural schematic diagram of a connection between a stacking device and a pre-storage support plate of loading and unloading equipment in yet another embodiment of the present disclosure;
Fig. 10c is a structural schematic diagram of a connection between a stacking device and a pre-storage support plate of loading and unloading equipment in yet another embodiment of the present disclosure;
Fig. 10d to Fig. 10h are structural schematic diagrams of a connection between a stacking device and a pre-storage support plate of loading and unloading equipment in yet another embodiment of the present disclosure;
Fig. 11a is a schematic diagram of an application scenario of loading and unloading equipment with a track type walking mechanism in yet another embodiment of the present disclosure;
Fig. 11b is a structural schematic diagram of loading and unloading equipment with a track type walking mechanism in yet another embodiment of the present disclosure;
Fig. 11c and Fig. 11d are respectively partial enlarged drawings of the right side and the left side in Fig. 11b;
Fig. 11e is a structural schematic diagram of loading and unloading equipment with a track type walking mechanism in yet another embodiment of the present disclosure at an overlooking visual angle;
Fig. 11f is a structural schematic diagram of loading and unloading equipment with a track type walking mechanism in yet another embodiment of the present disclosure;
Fig. 11g and Fig. 11h are respectively partial enlarged drawings of the right side and the left side in Fig. 11f;
Fig. 11i is a structural schematic diagram of loading and unloading equipment with a track type walking mechanism in yet another embodiment of the present disclosure at the overlooking visual angle;
Fig. 12a to Fig. 12e are structural schematic diagrams of loading and unloading equipment in yet another embodiment of the present disclosure at different working states and at different inclination angles of the pre-storage support plate;
Fig. 13a to Fig. 13I are process schematic diagrams of loading and unloading equipment in yet another embodiment of the present disclosure to unload the packages on a package storage position.

### Detailed Description of the Embodiments

A clear and complete description of technical solutions in the embodiments of the present disclosure will be given below, in combination with the drawings in the embodiments of the present disclosure. Apparently, the embodiments described below are merely a part, but not all, of the embodiments of the present disclosure. The following description of at least one exemplary embodiment is merely illustrative and is in no way used as any limitation to the present disclosure and its application or use. All of other embodiments, obtained by those of ordinary skill in the art based on the embodiments of the present disclosure without any creative effort, fall into the protection scope of the present disclosure.

The relative arrangements, numerical expressions and numerical values of components and steps set forth in these examples do not limit the scope of the present disclosure, unless specifically stated otherwise. At the same time, it should be understood that, for the convenience of description, the dimensions of various parts shown in the drawings are not drawn according to the actual proportional relationship. Techniques, methods and equipment known to those of ordinary skill in the related art may not be discussed in detail, but where appropriate, the techniques, methods and equipment should be considered as a part of the authorized description. In all examples shown and discussed herein, any specific value should be construed as exemplary only and not as a limitation. Therefore, other examples of the exemplary embodiments may have different values. It should be noted that similar reference signs and letters indicate similar items in the following drawings, so once a certain item is defined in one drawing, it does not need to be discussed further in subsequent drawings.

For the convenience of description, spatially relative terms such as "over", "above", "on the upper surface", "upper side" and the like may be used herein to describe the spatial position relationship between one device or feature and other devices or features as shown in the drawings. It should be understood that the spatially relative terms are intended to encompass different orientations in use or operation in addition to the orientations of the device as described in the figures. For example, if the device in the figure is turned over, it is described as "above other devices or constructions", or, the device "above the other devices or constructions" is located "below the other devices or constructions" thereafter, or "below the other devices or constructions". Thus, the exemplary term "above" may include both orientations of "above" and "below". The device may also be positioned in other different ways (rotated 90 degrees or at other orientations), and the relative description of space used herein is explained accordingly.

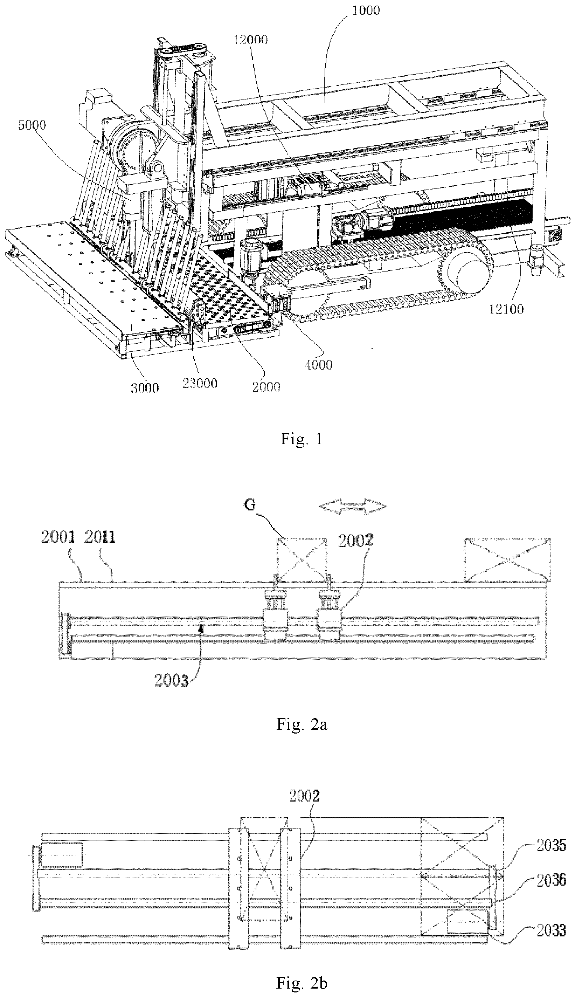

As shown in Fig. 1, the present embodiment discloses a kind of loading and unloading equipment, which mainly includes a rack 1000, a marshalling device 2000, a pre-storage device 3000, a package group transfer device 4000 and a stacking device 5000. The marshalling device 2000, the pre-storage device 3000, the package group transfer device 4000 and the stacking device 5000 are disposed on the rack 1000.

The marshalling device 2000 is configured to receive packages and group the packages in a predetermined marshalling mode to form package groups. In order to effectively stack the packages at a stacking position and stack the packages in a desired shape, the packages need to be marshalled in advance. marshalling refers to arranging multiple packages before entering the pre-storage device 3000. The predetermined marshalling mode refers to a pre-designed arrangement mode of the packages. For example, the packages may be arranged in a row, arranged in a column, or arranged in multiple rows or columns, the packages may be close to each other, and gaps may also be reserved among the packages. The marshalling mode of the packages is set in advance according to the size, shape, stacked position and stacked shape of the packages to be placed.

The pre-storage device 3000 includes a pre-storage support structure and a pre-storage support plate detachably disposed on the pre-storage support structure. The pre-storage device 3000 is configured to receive and temporarily store the marshalled package groups to wait for the stacking device 5000 to take away the marshalled package groups for stacking.

The package group transfer device 4000 is configured to transfer the marshalled package groups to the pre-storage support plate of the pre-storage device 3000 for temporary storage.

The stacking device 5000 is configured to cooperate with the pre-storage support plate to remove the package groups from the pre-storage support plate to the stacking position.

The loading and unloading equipment provided in the present embodiment is provided with the marshalling device 2000 and the pre-storage device 3000 to separate the marshalling procedure of the stacked packages and the procedure of taking the marshalled packages by the stacking device, so that the two procedures may be performed simultaneously, thereby shortening the waiting time and improving the loading and unloading efficiency of the loading and unloading equipment.

According to the invention, the stacking device 5000 has a stacking working state and a no-load state. In the stacking working state, the stacking device 5000 cooperates with the pre-storage support plate, drives the pre-storage support plate carrying the package groups to move to the vicinity of the stacking position of the package group, removes the package group from the pre-storage support plate to the stacking position, and drives the empty pre-storage support plate to return to the pre-storage support structure. In the no-load state, the stacking device relieves the cooperation with the pre-storage support plate to evade the package group, when the package group is transferred to the pre-storage support plate. The stacking device 5000 may cooperate with and relieve the cooperation with the pre-storage support plate. In the stacking working state, the stacking device 5000 is connected to the pre-storage support plate, and may take away the pre-storage support plate and the package group located on the pre-storage support plate and move to the vicinity of a target position for stacking. The stacking device 5000 may convey the pre-storage support plate back to the pre-storage support structure of the pre-storage device 3000. Then, the stocking device 5000 relieves the cooperation with the pre-storage support plate, so that the stocking device 5000 switches to the no-load state, in this way, the pre-storage support plate may receive and temporarily store the next marshalled package group without any obstacle, and wait for the next time taking away and stacking by the stocking device 5000.

Since the separable pre-storage support plate is disposed on the pre-storage device 3000, and the stacking device and the pre-storage support have the cooperation stacking working state and the no-load state in which the cooperation is relieved, the pre-storage device 5000 may take and stack the package group on the pre-storage support plate and reset the pre-storage support plate after the completion of the stacking more flexibly and efficiently. After the pre-storage support plate is reset, the cooperation between the stacking device 5000 and the pre-storage support plate is relived, which is conducive to preventing the stacking device 5000 from interfering with the reception of the package group by the pre-storage device, and the arrangement is particularly conducive to the entire-row marshalling and entire-row stacking of the packages. The entire-row refers to marshalling the packages into a complete row according to the width of a container receiving the packages, the entire-row marshalling includes marshalling one complete row at a time and marshalling multiple complete rows at a time, thereby being conducive to improving the stacking efficiency.

In some embodiments, the marshalling device 2000 includes a marshalling platform 2001, a force applying mechanism 2002 and a force applying mechanism driving portion 2003. The marshalling platform 2001 is configured to place the packages G. The force applying mechanism 2002 is configured to be able to switch between a force applying working position and a non-force applying working position. When the force applying mechanism 2002 is at the force applying working position, the force applying mechanism 2002 is capable of driving the packages G located on the marshalling platform 2001 to move to the predetermined marshalling position according to the requirements of the predetermined marshalling mode. The force applying mechanism driving portion 2003 is in driving connection with the force applying mechanism 2002 for moving the force applying mechanism 2002 to a preset position of the force applying mechanism.

The force applying mechanism 2002 applies an acting force to the package G by using, for example, clamping, adsorption or other modes.

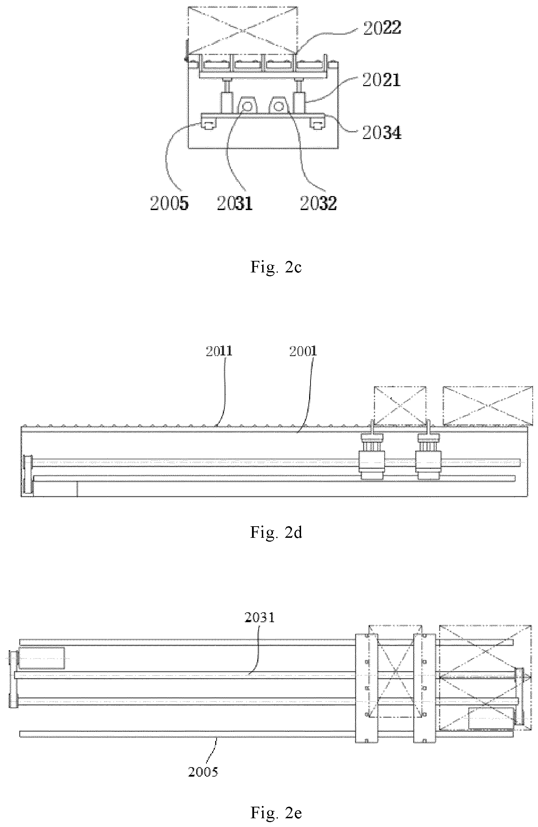

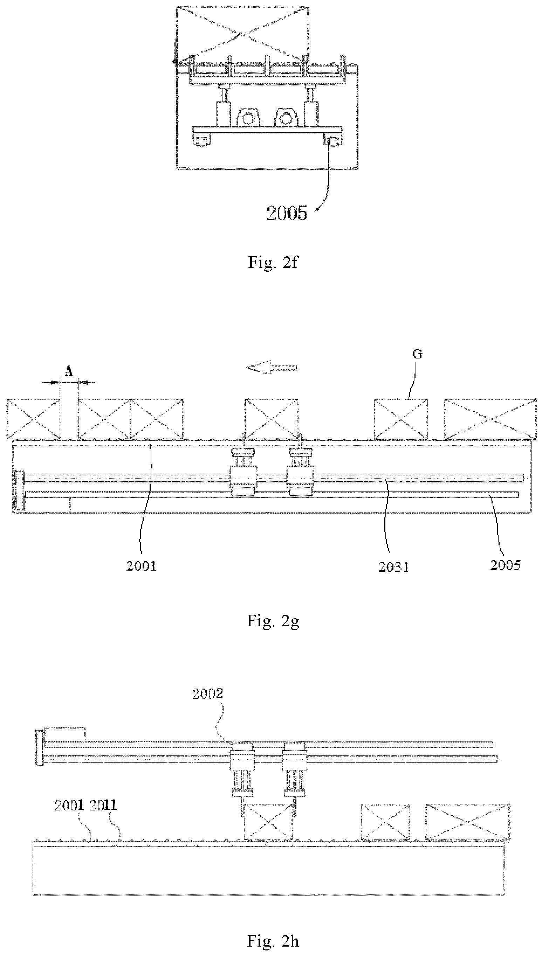

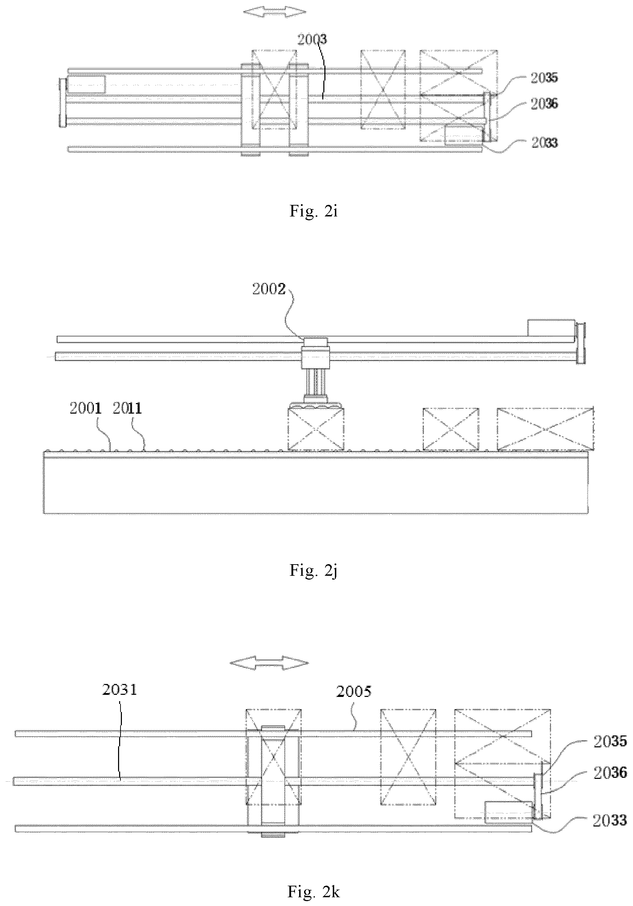

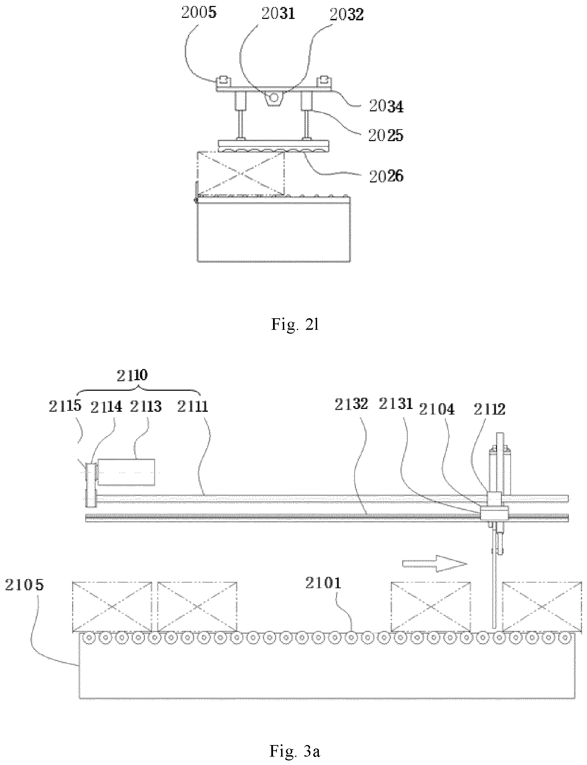

In some embodiments, as shown in Fig. 2a to Fig. 2g, the force applying mechanism 2002 is disposed below the marshalling platform 2001; wherein the force applying mechanism 2002 is configured to be able to extend out and retract; when the force applying mechanism 2002 is in an extension state, the force applying mechanism 2002 is at the force applying working position; and when the force applying mechanism 2002 is in a retraction state, the force applying mechanism 2002 is at the non-force applying working position.

There are many specific ways to achieve the extension and retraction, such as a telescoping cylinder, a rack and pinion mechanism, and a guide rail mechanism.

In some embodiments, the force applying mechanism 2002 includes a first force applying telescoping cylinder 2021 and a first force applying package shifting member 2022. One end of the first force applying telescoping cylinder 2021 is installed on the force applying mechanism driving portion 2003. The first force applying package shifting member 2022 is fixed on the other end of the first force applying telescoping cylinder 2021.

In order to realize the extending and moving of the force applying mechanism 2002, a chute, which is formed along the length direction of the marshalling platform 2001 and cooperates with the first force applying package shifting member 2022, is formed in the marshalling platform 2001.

The first force applying telescoping cylinder 2021 is, for example, a hydraulic cylinder, a pneumatic cylinder or the like.

In some embodiments, two force applying mechanisms 2002 are provided, and the two force applying mechanisms 2002 independently extend out and retract back. Whether the force applying mechanisms 2002 are in the working state is set according to the demands due to such setting.

In various above embodiments, when a package G are conveyed to the marshalling platform 2001, one or two first force applying package shifting members 2022 are raised. The first force applying package shifting members 2022 may also be raised before the package G arrive at the marshalling platform 2001, and the first force applying package shifting members 2022 are moved and positioned to the required positions on both sides through a driving device serving as the force applying mechanism driving portion at the lower side.

Further, when the package G is stacked on the edge, one first force applying package shifting member 2022 is used to shift the package G. When the package G is stacked at the middle and has a gap with the adjacent package G, two first force applying package shifting members 2022 are used to shift the package G.

When the package G is stacked at the middle and is close to the adjacent package G, two first force applying package shifting members 2022 are used at first, when approaching the package G, the first force applying package shifting member 2022 on the side with the package G retracts back, and then one first force applying package shifting member 2022 is used to shift the package G at a slow speed and make the package G close to the adjacent package G. The purpose is to prevent the inertia of the package G from pushing the adjacent package G, so as not to affect the accuracy of the stacking.

Further, the interval placement of the packages G is to adapt to the placement of the row of packages G in a package container such as a container or a carriage. Due to the free control of the gaps among the packages G, the packages G on the next layer and the previous layer may be placed in a stagger manner more conveniently, and thus the packages are unlikely to collapse. As shown in Fig. 2a to Fig. 2g. A in Fig. 2g illustrates the gaps among the packages G. The arrow in the figure indicates the moving direction of the packages G.

Further, for small packages G or boxes, after two or more packages G are conveyed to the marshalling platform 2001, the packages are laterally shifted by the first force applying package shifting member 2022.

Further, a mechanism for driving the ascending and descending of the first force applying package shifting member 2022 is driven by a guide cylinder in some embodiments, and may also be driven by an elevator, a motor, a hydraulic cylinder or the like. The force applying mechanism 2002 is driven by a lead screw-motor in some embodiments, and may also be driven by a chain-motor or a synchronous belt-motor or a servo hydraulic cylinder or a servo pneumatic cylinder.

The two first force applying package shifting members 2022 are conducive to accurately positioning the packages G and realizing the accurate placement of the packages G with or without a gap. In addition, the actions of the two first force applying package shifting members 2022 are independent of each other, and one or two of them may be used as needed for package shifting.

The marshalling device 2000 in a specific embodiment is described below.

As shown in Fig. 2a to Fig. 2g: the marshalling platform 2001 is provided with a plurality of marshalling platform universal balls 2011; and the marshalling platform 2001 may also be made of pattern sliding plates or smooth sliding plates.

When the package G is pushed from the previous procedure to the marshalling platform 2001, a baffle may be disposed in the front. After the package G is pushed to the marshalling platform 2001, the first force applying package shifting member 2022 is raised, and it may also be raised before the package G is pushed in. If the package G is close to the previous package G, one first force applying package shifting member 2022 is raised or two first force applying package shifting members 2022 are raised, and one first force applying package shifting member 2022 is used to complete the package shifting after approaching to the target placement position. The use of the first force applying package shifting member 2022 on the left side or the right side shown in Fig. 2a is determined by the direction in which the package G need to be shifted.

If there is a gap between the package G and the previous package G, the two first force applying package shifting members 2022 are raised to clamp the package G to move laterally. The first force applying package shifting members 2022 are fixed on an extension rod of the first force applying telescoping cylinder 2021, and the first force applying telescoping cylinder 2021 drives the first force applying package shifting members 2022 to rise or retract back.

A force applying mechanism connecting plate 2034 is connected with a cylinder seat of the first force applying telescoping cylinder 2021 and a force applying mechanism nut 2032. The force applying mechanism nut 2032 is driven by the rotation of a force applying mechanism lead screw 2031 to move linearly. A slide rail and slide block mechanism 2005 causes the force applying mechanism connecting plate 2034 to move along a linear direction and may bear the lateral force of shifting the package G.

The force applying mechanism lead screw 2031 is connected with a force applying mechanism synchronous belt pulley 2035, and two force applying mechanism synchronous belt pulleys 2035 are connected with a force applying mechanism synchronous belt 2036. The other force applying mechanism synchronous belt pulley 2035 is connected with a servo motor (serving as a force applying mechanism power source 2033). After the servo motor is started, the force applying mechanism synchronous belt pulley 2035 rotates, and the force applying mechanism synchronous belt 2036 connected thereto drives the other force applying mechanism synchronous belt pulley 2035 and the force applying mechanism lead screw 2031 to rotate. The force applying mechanism lead screw 2031 rotates to drive the force applying mechanism nut 2032 to move linearly, and meanwhile drives the first force applying package shifting member 2022 connected thereto to move linearly through the force applying mechanism connecting plate 2034.

The above actions are repeated, until the packages G fill the marshalling platform 2001 or are placed at required positions and number. At this time, a marshalling-pre-storage intermediate mechanism (detailed later in detail) between the marshalling device and the pre-storage device is a state of conveying the package group, for example, its baffle is connected to a cylinder hinge to rotate 90 degrees to at least partially fill the gap between the marshalling device and the pre-storage device, which serves as a "bridge" for the packages G to slide away to the next procedure. A package group transfer device, for example, an entire-row package pushing mechanism, acts, and after a pushing plate of the entire-row package pushing mechanism rises, a package pushing cylinder of the entire-row package pushing mechanism pushes out the entire row of packages G (that is, the package group).

In some embodiments, referring to Fig. 2h and Fig. 2i, the force applying mechanism 2002 may also be located above the marshalling platform 2001, a second force applying package shifting member thereof is at the force applying working position while extending out downward and is at the non-force applying working position while retracting back upward. The working process, working principle and working effect are similar to the embodiment in which the force applying mechanism 2002 is located below the marshalling platform 2001, and thus details are not described herein again.

Some other embodiments of the marshalling device 2000 are described below in combination with Fig. 2j to Fig. 2l.

In some embodiments, the force applying mechanism 2002 includes a third force applying telescoping cylinder 2025 and a force applying mechanism suction cup 2026. One end of the third force applying telescoping cylinder 2025 is installed at the force applying mechanism driving portion 2003; and the force applying mechanism suction cup 2026 is fixed at the other end of the third force applying telescoping cylinder 2025.

In some embodiments, the force applying mechanism driving portion 2003 includes a force applying mechanism lead screw 2031, a force applying mechanism nut 2032 and a force applying mechanism power source 2033. The force applying mechanism nut 2032 cooperates with the force applying mechanism lead screw 2031, and the force applying mechanism 2002 is relatively fixed with the force applying mechanism nut 2032; and the force applying mechanism power source 2033 is in driving connection with the force applying mechanism lead screw 2031 for driving the force applying mechanism lead screw 2031 to rotate.

In some embodiments, the force applying mechanism driving portion 2003 further includes a force applying mechanism connecting plate 2034, and the force applying mechanism 2002 is fixed on the force applying mechanism nut 2032 through the force applying mechanism connecting plate 2034.

Some specific embodiments are described below in combination with Fig. 2j to Fig. 2l.

In some embodiments, the marshalling platform 2001 is provided with a plurality of marshalling platform universal balls 2011, and may also be replaced with a pattern sliding plates or other smooth sliding plates. When the package G is pushed from the previous procedure to the marshalling platform 2001, the marshalling-pre-storage intermediate mechanism is in the state of conveying the package group. After the package G is pushed to the marshalling platform 2001, the force applying mechanism suction cup 2026 extends out downward. The force applying mechanism suction cup 2026 may also extend out before the package G is pushed in.

If there is a gap between the package G and the previous package G, the force applying mechanism suction cup 2026 is driven to extend out downward and suck the package G, and the force applying mechanism suction cup 2026 may freely move after sucking the package G to transfer the package G to a position to be placed. The force applying mechanism suction cup 2026 is fixed on the extension rod of the third force applying telescoping cylinder 2025, and the third force applying telescoping cylinder 2025 drives the force applying mechanism suction cup 2026 to extend out downward or retract back.

The force applying mechanism connecting plate 2034 is connected with the cylinder seat of the third force applying telescoping cylinder 2025 and the force applying mechanism nut 2032, and the force applying mechanism nut 2032 is driven by the rotation of the force applying mechanism lead screw 2031 to move linearly. The slide rail and slide block mechanism 2005 causes the force applying mechanism connecting plate 2034 to move along the linear direction and may bear the lateral force of shifting the package G.

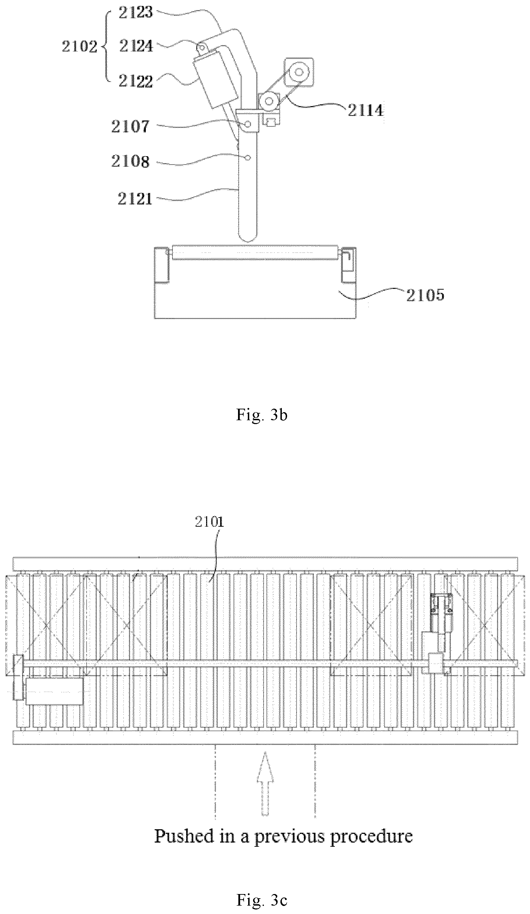

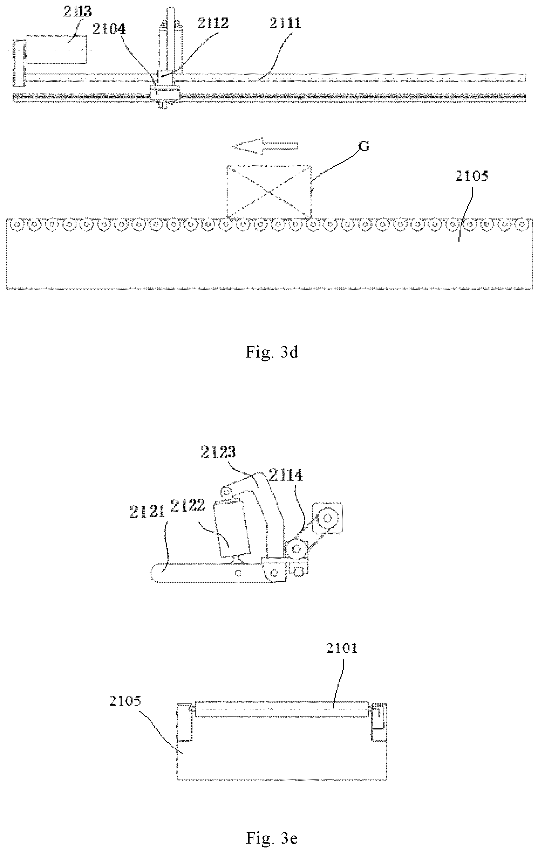

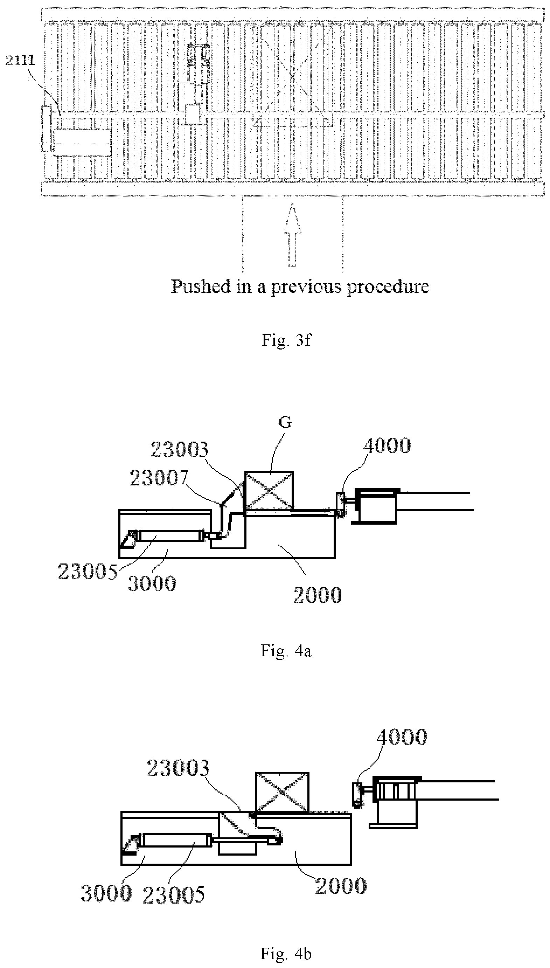

The marshalling apparatus 2000 according to another embodiment is provided in combination with Fig. 3a to Fig. 3f.

In the present embodiment, the marshalling device 2000 includes a marshalling conveyance mechanism 2105, a spacing mechanism 2102 and a spacing mechanism driving portion 2110. The marshalling conveyance mechanism 2105 is configured to convey the package G to a package marshalling preset position. The spacing mechanism 2102 is disposed in the vicinity of the marshalling conveyance mechanism 2105 and is configured to be switchable between a spacing working position and a non-spacing working position. When the spacing mechanism 2102 is at the spacing working position, and a spacer 2121 of the spacing mechanism 2102 is capable of moving to a position of spacing the package G from other packages G or components. The spacing mechanism driving portion 2110 is in driving connection with the spacing mechanism 2102 and is configured to move the spacing mechanism 2102 to a preset position of the spacing mechanism.

The package marshalling preset position refers to a position where the package G needs to be placed relative to other packages G or components.

In some embodiments, the spacing mechanism 2102 is configured to switch between a spacing working position and a non-spacing working position through rotating or swinging or telescoping motion.

In some embodiments, the spacing mechanism 2102 further includes a spacer driving portion 2122, and the spacer driving portion 2122 is in driving connection with the spacer 2121 to drive the spacer 2121 to rotate.

The spacer driving portion 2122 uses, for example, a hydraulic cylinder, a pneumatic cylinder, a gear mechanism or the like to realize the rotation of the spacer 2121.

In some embodiments, the spacer driving portion 2122 includes a spacer driver, one end of the spacer driver is rotatably installed on the spacing mechanism driving portion 2110, and the other end thereof is rotatably connected to the spacer 2121. The extension and retraction of the spacer driver may drive the spacer 2121 to rotate relative to the spacing mechanism driving portion 2110.

The spacer driver is, for example, a hydraulic cylinder, a pneumatic cylinder or the like.

In some embodiments, the spacer driving portion 2122 further includes a spacing mechanism installation bent plate 2123, the spacing mechanism installation bent plate 2123 is fixed on a fixed portion of the marshalling conveyance mechanism 2105, and one end of the spacing mechanism installation bent plate 2123 is rotatably connected to one end of the spacer driver, the other end of the spacing mechanism installation bent plate 2123 is rotatably connected to one end of the spacer 2121, and the other end of the spacer driver is rotatably connected to a middle area or the other end of the spacer 2121.

The spacing mechanism installation bent plate 2123 is approximately "7"-shaped or "T"-shaped.

In some embodiments, the spacing mechanism driving portion 2110 includes a linear driving portion. Specifically, such as a sliding mechanism and a rack and pinion mechanism.

In some embodiments, the spacing mechanism driving portion 2110 includes a spacing mechanism lead screw 2111, a spacing mechanism nut 2112 and a spacing mechanism power source 2113. The two ends of the spacing mechanism lead screw 2111 are respectively located at two extreme positions moving of the package G. The spacing mechanism nut 2112 is installed on the spacing mechanism lead screw 2111, and the spacer driving portion 2122 is fixed on the spacing mechanism nut 2112; and the spacing mechanism power source 2113 is in driving connection with the spacing mechanism lead screw 2111 and is configured to drive the spacing mechanism lead screw 2111 to rotate.

In order to facilitate the installation of the spacing mechanism installation bent plate 2123, the marshalling device 2000 further includes a spacing mechanism connecting member 2104, and the spacing mechanism connecting member 2104 is fixed with the spacing mechanism nut 2112 for mounting the spacing mechanism installation bent plate 2123 described above.

The spacing mechanism connecting member 2104 includes a plate-like structure.

In some embodiments, the marshalling conveyance mechanism 2105 includes electric rollers 2101. A plurality of electric rollers 2101 are provided, and the electric rollers 2101 are individually or collectively driven, as an example.

In some embodiments, the marshalling device 2000 further includes a spacing mechanism guide portion, and the spacing mechanism guide portion is connected to the spacing mechanism 2102 to provide guidance for the linear movement of the spacing mechanism 2102. The spacing mechanism guide portion enables the spacing mechanism 2102 to move stably to the preset position as a whole.

In some embodiments, the spacing mechanism guide portion includes a spacing mechanism slide block 2131 and a spacing mechanism guide rail 2132. The spacing mechanism slide block 2131 is fixed with the spacing mechanism 2102; and the spacing mechanism guide rail 2132 is disposed above the spacing mechanism driving portion 2110, and the spacing mechanism slide block 2131 cooperates with the spacing mechanism guide rail 2132.

The marshalling device 2000 in a specific embodiment is described below.

When the package G is conveyed to a roller conveyor line formed by the electric rollers 2101, the electric rollers 2101 may rotate in both positive and negative directions, and since each electric roller 2101 or each group of electric rollers 2101 is independently controlled, the package G handled at first may be stopped in the roller conveyor line without affecting the conveyance of the next package G. When a gap is needed between the two packages G, in order to more accurately locate the positions of the packages G, the spacer 2121 is used to separate the two packages G.

Further, the spacing of the packages G is to adapt to the placement of this row of boxes in the container or the carriage. Due to the free control of the gaps among the boxes, the boxes on the next layer and the previous layer may be placed in a stagger manner more conveniently, and thus the boxes are unlikely to collapse.

Further, in the present embodiment, the lateral movement of the spacer 2121 is controlled by the servo motor, and the spacer 2121 may be quickly moved to a position requiring separation. When the separation is not needed or the separation is completed, the spacer 2121 is removed to not affect the stacking of the next package G.

Further, the spacer driving portion controls the action of the spacer 2121 through a driving connecting rod driven by a pneumatic cylinder to rotate and remove the spacer 2121, and the driving connecting rod may also be driven by a guide cylinder, an elevator, a motor, a hydraulic cylinder or the like. The mechanism for positioning the spacer 2121 is driven by the spacing mechanism lead screw 2111-motor, and may also be driven by the chain-motor, the spacing mechanism synchronous belt 2114-motor, the servo hydraulic cylinder, or the servo pneumatic cylinder.

The spacer 2121 accurately locates the position of the package on the roller conveyor line, and realizes the accurate placement of the packages G with or without a gap.

As shown in Fig. 3a, the roller conveyor line is served as the marshalling conveyance mechanism 2105. The electric rollers 2101 are disposed on the roller conveyor line. The package G is conveyed towards the left and right sides as shown in Fig. 3a. When the package G is pushed from the previous procedure to the roller conveyor line, the baffle of the marshalling-pre-storage intermediate mechanism blocks the package G from entering the pre-storage support plate 3001. After the package G is pushed to the roller conveyor line, the electric roller 2101 below the corresponding package G is started to convey the package to one side. The next package G is conveyed in the same way.

If the package G is close to the previous package G, the spacer 2121 does not need to extend out to separate the package G. If there is a gap between the package G and the previous package G, the spacer 2121 needs to extend out, and the spacer 2121 may cause the package G to move laterally and locate the position separated from the package G.

Further, as shown in Fig. 3b, a first pin shaft 2124 of spacing mechanism is connected with a cylinder body end of the cylinder and a pin hole of the spacing mechanism installation bent plate 2123, and the cylinder rotates around the first pin shaft 2124 of spacing mechanism. A second pin shaft 2107 of spacing mechanism is connected with the spacer 2121 to cause the same to rotate around the second pin shaft 2107 of spacing mechanism. A third pin shaft 2108 of spacing mechanism is connected with the pin hole of the spacer 2121 and a cylinder rod end pin hole of the cylinder.

When the cylinder rod of the cylinder extends out, the third pin shaft 2108 of spacing mechanism drives the spacer 2121 to rotate downward. The cylinder also rotates around the first pin shaft 2124 of spacing mechanism, and the spacer 2121 extends out to block the package G, for example, the box, for preventing from movement. After the spacer 2121 extending out, the spacing mechanism driving portion 2110 drives the spacer 2121 to move laterally. The installation bent plate 2123 is fixed with the spacing mechanism connecting member 2104, the spacing mechanism nut 2112 is fixed on the spacing mechanism connecting member 2104, the spacing mechanism nut 2112 is connected to the spacing mechanism lead screw 2111, and when the spacing mechanism lead screw 2111 rotates, the spacing mechanism nut 2112 moves linearly. The spacing mechanism lead screw 2111 is connected to the spacing mechanism synchronous pulley pulleys 2115, and the two spacing mechanism synchronous pulley pulleys 2115 are connected through the spacing mechanism synchronous pulley 2114. The other spacing mechanism synchronous belt pulley 2115 is connected to the servo motor. After the servo motor is started, the spacing mechanism lead screw 2111 rotates, and the spacing mechanism nut 2112, and the spacing mechanism connecting member 2104 and the spacer 2121 thereon move linearly. The spacing mechanism connecting member 2104 is connected to the spacing mechanism slide block 2131, and the spacing mechanism slide block 2131 is connected to the spacing mechanism guide rail 2132, may move linearly on the spacing mechanism guide rail 2132 and may bear the lateral force.

The above actions are repeated, until the packages G fill the roller conveyor line or are placed at required positions and number. At this time, the entire-row package pushing mechanism at behind acts to push the entire row of packages G to the next station.

In some embodiments, the loading and unloading equipment further includes a marshalling-pre-storage intermediate mechanism 23000 disposed between the marshalling device 2000 and the pre-storage device 3000, and the marshalling-pre-storage intermediate mechanism 23000 has a package group conveying state and a package group limiting state. In the package group conveying state, the marshalling-pre-storage intermediate mechanism 23000 at least partially covers the gap between the marshalling device 2000 and the pre-storage device 3000. In the package group limiting state, the marshalling-pre-storage intermediate mechanism 23000 is disposed at a tail end of the marshalling device 2000 in the package conveying direction to prevent the packages G on the marshalling device 2000 from leaving the marshalling device 2000.

Since the packages G needs to be pushed from the marshalling device 2000 to the pre-storage device 3000, if the gap between the marshalling device 2000 and the pre-storage device 3000 is large, the packages G are more easily clamped between the marshalling device 2000 and the pre-storage device 3000. In order to effectively avoid the problem that the packages G are clamped, the loading and unloading equipment in the present embodiment further includes the marshalling-pre-storage intermediate mechanism 23000 disposed between the marshalling device 2000 and the pre-storage device 3000, and the marshalling-pre-storage intermediate mechanism 23000 has the package group conveying state and the package group limiting state.

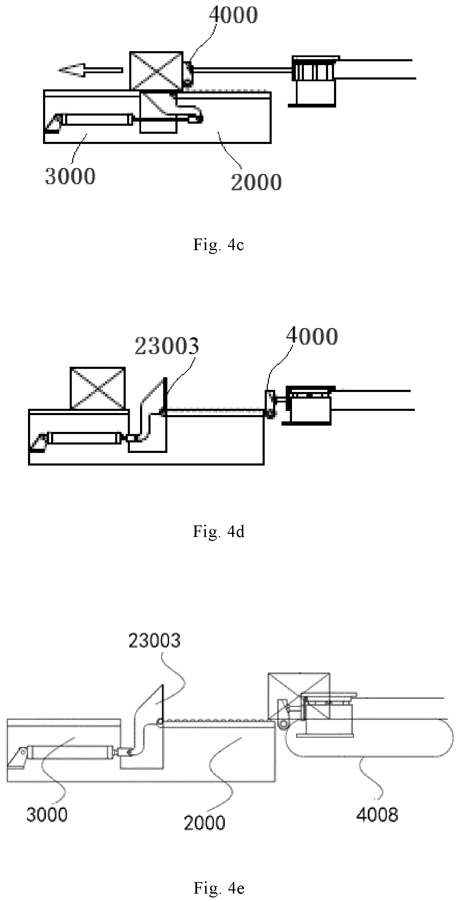

In some embodiments, the marshalling-pre-storage intermediate mechanism 23000 is rotatably connected to the tail end of the marshalling device 2000. As shown in Fig. 4a, the marshalling-pre-storage intermediate mechanism 23000 includes a baffle 23003. The baffle 23003 is rotatably connected to the tail end of the marshalling device 2000. Specifically, the first end of the baffle 23003 in the present embodiment is hinged with the tail end of the marshalling device 2000, and the second end of the baffle 23003 forms a free end.

As shown in Fig. 4a, before the packages G are marshalled, the baffle 23003 is rotated to a vertical state, and at this time, the packages G on the marshalling device 2000 are blocked to prevent the same from leaving the marshalling device 2000 before being marshalled. As shown in Fig. 4b and Fig. 4c, after the marshalling of the packages G, the baffle 23003 is rotated downward to cover the gap between the marshalling device 2000 and the pre-storage device 3000, so that the packages G pass through smoothly. After the package group transfer device 4000 pushes the packages G onto the pre-storage device 3000, the baffle 23003 is rotated to the vertical state again to limit the next batch of packages G entering the marshalling device 2000.

In other embodiments not shown in the drawings, the marshalling-pre-storage intermediate mechanism 23000 may also include structures such as a stop dog or a roller.

In some embodiments, as shown in Fig. 4a to Fig. 4d, the loading and unloading equipment further includes a marshalling-pre-storage intermediate driving oil cylinder 23005 for driving the baffle 23003 to rotate, and a link mechanism disposed between the marshalling-pre-storage intermediate driving oil cylinder 23005 and the baffle 23003. The marshalling-pre-storage intermediate driving oil cylinder 23005 drives the baffle 23003 to rotate through the link mechanism.

The link mechanism in the present embodiment includes a marshalling-pre-storage intermediate connecting plate 23007. The marshalling-pre-storage intermediate connecting plate 23007 includes a strip-shaped section connected to the marshalling-pre-storage intermediate driving oil cylinder 23005 and a triangular section connected to the baffle 23003. Due to this arrangement, the marshalling-pre-storage intermediate connecting plate 23007 may not only transfer the driving force of the marshalling-pre-storage intermediate driving oil cylinder 23005, but also evade the marshalling device 2000 and the pre-storage device 3000 during the rotation process of the baffle 23003.

The marshalling-pre-storage intermediate connecting plate 23007 and the baffle 23003 in the present embodiment are integrally disposed. In other embodiments not shown in the drawings, the marshalling-pre-storage intermediate connecting plate 23007 and the baffle 23003 may be disposed independently.

In some embodiments, the package group transfer device 4000 has a package bearing state and a package group pushing state. In the package bearing state, the package group transfer device 4000 is located at the upstream of a package receiving end of the marshalling device 2000, and at least a part of the structure is flush with the upper surface of the marshalling device 2000, so that the packages G are conveyed by the package group transfer device 4000 to the marshalling device 2000; and in the package group pushing state, the package group transfer device 4000 is located above the marshalling device 2000 to push the marshalled package group on the marshalling device 2000 to the pre-storage device 3000.

The package group transfer device 4000 is configured to push the packages G from the marshalling device 2000 to the pre-storage device 3000. As shown in Fig. 4e, when the packages G are conveyed to the marshalling device 2000 from the previous procedure (such as the package transfer device described later) (the conveying direction is shown by the arrow in the figure), the packages G may be clamped by the gap between the previous procedure and the marshalling device 2000, and in order to prevent the problem, the package group transfer device 4000 in the present embodiment may play a role of supporting the packages G before pushing the packages G to prevent the packages G from being clamped.

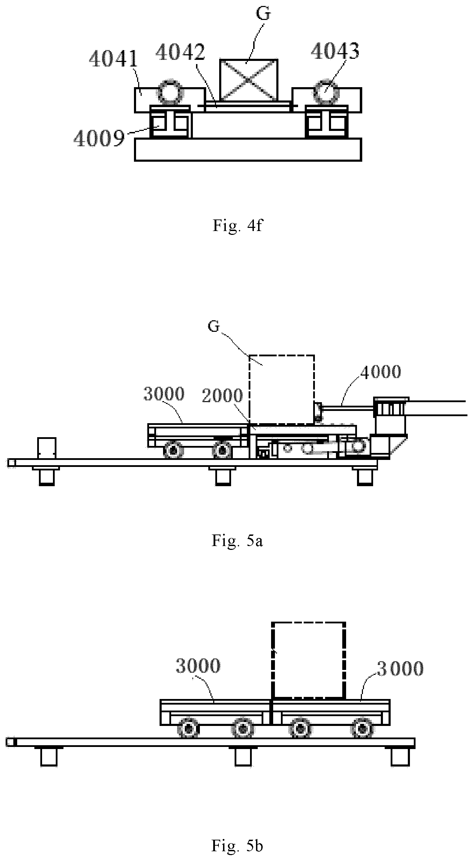

In some embodiments, as shown in Fig. 4f, the package group transfer device 4000 includes a push plate 4041 and a package transfer roller 4042 disposed on one side of the push plate 4041, and in the package bearing state, the package transfer roller 4042 is flush with the upper surface of the marshalling platform of the marshalling device 2000, so that the packages G are conveyed to the marshalling device 2000 through the package transfer roller 4042; and in the package group pushing state, the package transfer roller 4042 is located above the marshalling platform of the marshalling device 2000 and is driven by the push plate 4041 singly or together with the push plate 4041 to push the packages G.

In some embodiments, the package group transfer device 4000 may include two push plates 4041, and the package transfer roller 4042 is disposed between the two push plates 4041. The package group transfer device 4000 further includes a package group push rod 4043 for driving the push plate 4041 to move. The push plate 4041 moves forward under the pushing of the package group push rod 4043 to drive the package transfer roller 4042 to move forward as well, and at this time, the package transfer roller 4042 plays a role of pushing the package group.

In some embodiments, the package group transfer device 4000 is disposed in a liftable manner relative to the marshalling device 2000. Specifically, the package group transfer device 4000 further includes a package group transfer device lifting mechanism 4009, and the package group transfer device lifting mechanism 4009 drives the push plate 4041 and the package transfer roller 4042 of the package group transfer device 4000 to move up and down relative to the marshalling device 2000.

As shown in Fig. 4e, before pushing the package G, the push plate 4041 and the package transfer roller 4042 descend to positions where the package transfer roller 4042 is flush with the upper surface of the marshalling platform of the marshalling device 2000 under the driving of the package group transfer device lifting mechanism 4009. The package G is smoothly conveyed from the previous procedure to the marshalling device 2000 through the package transfer roller 4042. After the packages G are marshalled on the marshalling device 2000, the baffle 23003 is rotated downward, and the push plate 4041 and the package transfer roller 4042 rise to positions higher than the upper surface of the marshalling platform of the marshalling device 2000 under the driving of the package group transfer device lifting mechanism 4009, and the push plate extends out forward under the driving of the push rod and pushes the packages G to the pre-storage device 3000.

The package group transfer device 4000 in the present embodiment pushes one package group at a time, and when there are fewer packages G, the package group transfer device may also push one package G or several packages G at a time. The packages G in the present embodiment may be boxes.

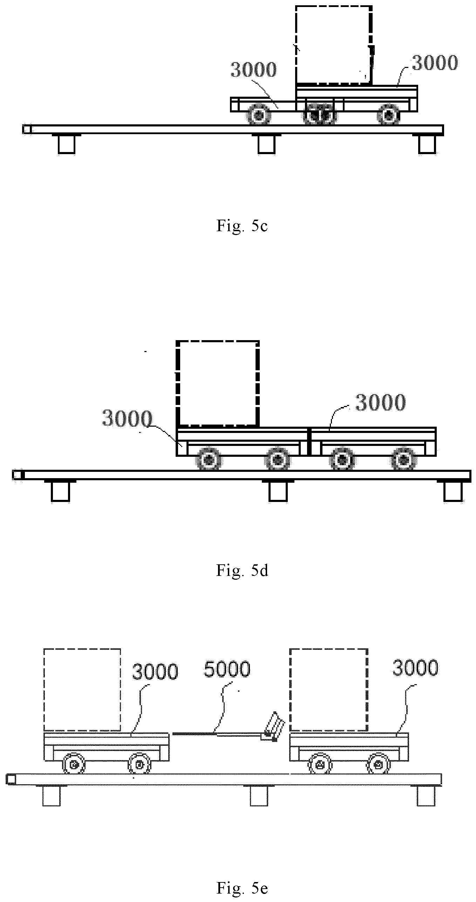

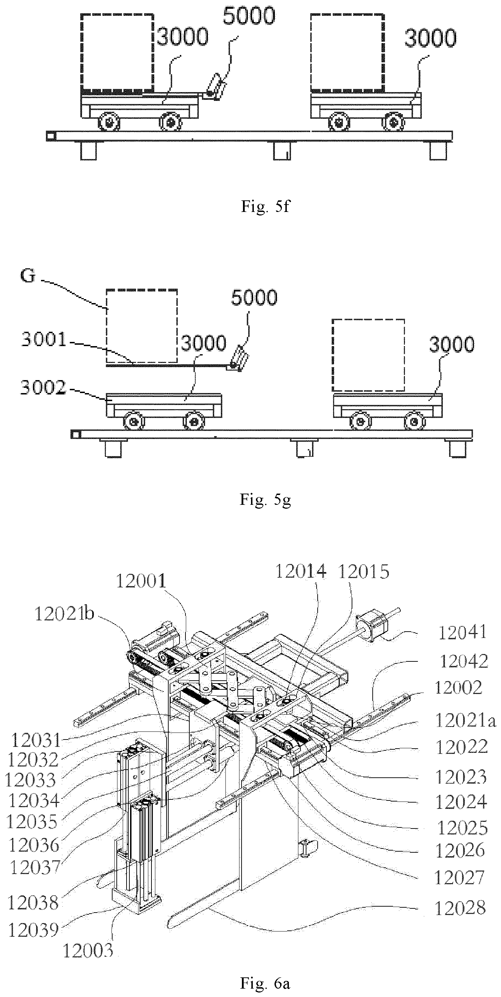

Fig. 5a is a schematic diagram of a working process of a movable pre-storage support structure of a pre-storage device of loading and unloading equipment in one embodiment of the present disclosure.

In some embodiments, the pre-storage device 3000 and the marshalling device 2000 may switch between a pre-storage station and a marshalling station, and their functions are interchanged after the switch. The pre-storage device 3000 temporarily stores the package group at the pre-storage station, the marshalling device 2000 groups the package group at the marshalling station, the positions of the pre-storage device and the marshalling device may be interchanged, after the positions of the two are interchanged, the pre-storage device 3000 is at the marshalling station to perform a marshalling of the packages G, and the marshalling device is at the pre-storage station to perform a pre-storage of the packages G.

In some embodiments, the height and/or the width of at least one of the pre-storage device 3000 and the marshalling device 2000 is adjustable. By adjusting the height and/or the width, the pre-storage device 3000 and the marshalling device 2000 may exchange the stations and functions in a manner that the two pre-storage devices 3000 pass through each other as shown in Fig. 5b to Fig. 5d.

In some embodiments, as shown in Fig. 5e to Fig. 5g, the pre-storage device 3000 and the marshalling device 2000 have multiple sockets, the stacking device 5000 includes mechanical fingers, and the multiple sockets are configured to be insertable with the mechanical fingers of the stacking device. When the pre-storage device 3000 carries the packages G through the separable pre-storage support plate 3001, the sockets may be formed in the pre-storage support plate 3001, the sockets may be in the form of slots, the mechanical fingers stretches into the slots to directly touch the packages G to lift the packages G, the socket may also be in the form of holes, the mechanical fingers are inserted into the hole type sockets to lift the entire pre-storage support plate 3001 carrying the packages G for stacking. When the pre-storage device 3000 does not include the pre-storage support plate 3001 and temporarily stores the packages G directly through a pre-storage platform, the sockets may also be directly disposed on the pre-storage platform of the pre-storage device, the sockets may be in the form of slots, the mechanical finger stretches into the slot to directly touch the packages G to lift the packages G, the sockets may also be in the form of holes, and the mechanical fingers are inserted into the hole type sockets to lift the entire pre-storage device carrying the packages G for stacking.

In some embodiments, as shown in Fig. 5e to Fig. 5g, the pre-storage support structure 3002 is movable, the pre-storage device 3000 has a pre-storage station and an assembling station, and at the pre-storage station, the pre-storage support structure 3002 carries the pre-storage support plate 3001 to receive the package group formed by the marshalling of the marshalling device 2000 through the package group transfer device 4000. At the assembling station, the pre-storage support plate 3001 carried on the pre-storage support structure 3002 cooperates with or relieves the cooperation with the stacking device. The pre-storage support structure 3002 may carry the pre-storage support plate 3001 supported by the same to move to the pre-storage station or depart from the pre-storage station to the assembling station where the pre-storage device 3000 cooperates with the stacking device 5000. The pre-storage support structure 3002 may drive the package group to a package pick-up position that cooperates with the stocking device 5000 so as to cooperate with the stocking device 5000 to complete the package pick-up procedure, and after the package pick-up procedure is completed, the pre-storage support structure 3002 may return to the pre-storage station to perform the procedure of receiving the package group again, thereby avoiding the movement of other equipment in the loading and unloading equipment to improve the loading and unloading efficiency.

In some embodiments, the marshalling device 2000 includes a marshalling package shifting mechanism, a movable marshalling support structure, and a marshalling support plate detachably disposed on the marshalling support structure; and the marshalling device 2000 has a marshalling station. At the marshalling station, the marshalling support structure carries the marshalling support plate supported by the same to receive the packages and marshals the packages in the predetermined marshalling mode under the action of the marshalling package shifting mechanism to form a package group. The functions and positions of the marshalling support structure and the marshalling support plate may be interchanged with those of the pre-storage support structure 3002 and the pre-storage support plate 3001. The height and/or the width of the pre-storage support structure 3002 is adjustable; and/or, the height and/or width of the marshalling support structure is adjustable.

Due to this setting, the marshalling device 2000 is more flexible, the marshalling support structure and marshalling support plate may work interchangeably with the pre-storage support structure 3002 and the pre-storage support plate 3001 to improve loading and unloading efficiency, and at the same time, the cooperation modes of the marshalling device 2000 and the pre-storage device 3000 is more diverse. For example, if the marshalling device 2000 receives the packages G and completes the marshalling of the packages G, the pre-storage support structure 3002 and the pre-storage support plate 3001 carrying the previous batch of package groups are still in the process of moving to cooperate with the stacking device 5000, the movable marshalling support structure carries the marshalling support plate and the marshalled package group on the support plate to move to the package pick-up position of the stacking device 5000, so as to cooperate with the stacking device 5000 to prepare for the next package pick-up and stacking of the stacking device 5000, at this time, the pre-storage support structure 3002 and the pre-storage support plate 3001 may move to the marshalling station after completing the package pick-up to receive the packages G of the marshalling device and marshal the packages G.

In some embodiments, the pre-storage device includes two or more movable pre-storage support structures 3002 and pre-storage support plates 3001 carried on the corresponding pre-storage support structures 3002, and the heights and/or widths of at least a part of the two or more pre-storage support structures 3002 is adjustable.

In some embodiments, as shown in Fig. 5b to Fig. 5d, the pre-storage device 3000 includes a plurality of movable pre-storage support structures 3002 and pre-storage support plates 3001 carried on the corresponding pre-storage support structures 3002, and the heights and widths of the plurality of movable pre-storage support structures 3002 are adjustable. Due to this setting, as shown in the figure, when the plurality of movable pre-storage support structures 3002 meet in the working process, the bottom spaces of the pre-storage support structures 3002 may be raised and widened by adjusting the heights and the widths of the pre-storage support structures 3002, or the dimensions of the pre-storage support structures 3002 are lowered and narrowed to enable the meeting pre-storage support structures 3002 to pass through the bottom spaces of the opposite parties. Therefore, due to this setting, the plurality of movable pre-storage support structures 3002 and the pre-storage support plates 3001 thereon cooperate with the marshalling device 2000 in sequence, furthermore, the frequency of receiving package group and frequency of cooperation with the stacking device 5000 are improved by the sequential cooperation with the stacking device 5000, thereby improving the loading and unloading efficiency of the loading and unloading equipment. At the same time, the requirements of this setting for the site are low, for the site of the pre-storage support structure 3002, only a passage is required for the movement of the pre-storage support structure 3002, and the width of the passage does not need to be additionally increased to realize the meeting of two movable pre-storage support structures 3002.

In some embodiments, the pre-storage support structure 3002 and/or the marshalling support structure is a load bearing trolley as shown in Fig. 5a to Fig. 5d. The load bearing trolley may be self-driven or externally driven on a track or a platform.

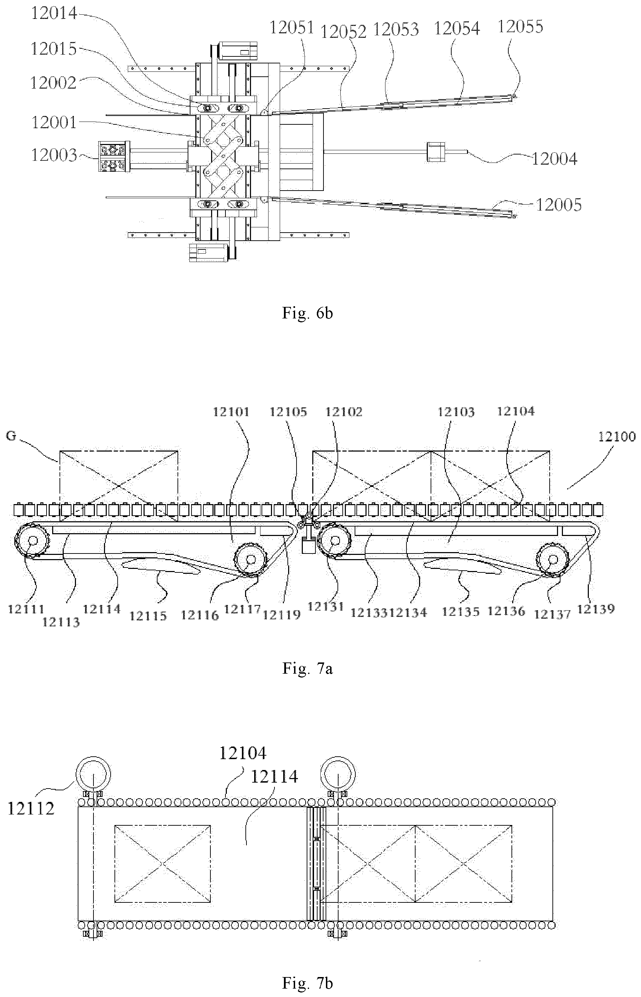

In some embodiments, as shown in Fig. 1, Fig. 6a, and Fig. 6b, the loading and unloading equipment further includes a package conveying device 12000 for conveying the packages to the marshalling device 2000. The package conveying device 12000 is disposed on the rack 1000. The illustrated package conveying device 12000 includes a package conveying mechanism 12100, a package passage limiting mechanism 12002, and a package output mechanism 12003.

The package conveying mechanism 12100 includes a package conveying portion for conveying the packages. The package conveying portion may be, for example, a conveyor belt, a conveyor roller, or the like.

The package passage limiting mechanism 12002 is used for adjustably limiting the width and/or the position of a package passage when the packages are conveyed on the package conveying portion. The package passage is a passage through which the conveyed packages pass, and the width and/or the position of the package passage is defined by the package passage limiting mechanism 12002.

The package output mechanism 12003 includes an output force applying portion 12039 for applying an output force to the package in the package passage and outputting the package to the marshalling device 2000. When the package leave the package passage and is transferred to the marshalling device, the package often need to be output from the package passage under the action of an external force. In the present embodiment, the output force applying portion 12039 of the package output mechanism 12003 applies an acting force to the package to output the package to the outside. The applied acting force may be a pulling force, for example, a vacuum suction force may be applied in front of the package output direction to pull out the package, and the applied acting force may also be a pushing force. In the present embodiment, the output force applying portion 12039 pushes the package in the package passage outward by applying the pushing force.

In the present embodiment, the package passage limiting mechanism 12002 is connected to the package output mechanism 12003, when adjusting the width and/or the position of the package passage, the package passage limiting mechanism 12002 drives the package output mechanism 12003 to move along the width direction of the package passage, so that the output force applying portion 12039 of the package output mechanism 12003 is always located in the package passage in the width direction of the package passage.

When the size of the passing package changes, the width of the package passage needs to be increased or decreased, or, when the output position of the package needs to be adjusted, the position of the package passage needs to be adjusted. In the present embodiment, the package passage limiting mechanism 12002 may drive the package output mechanism 12003 to move while adjusting the width and/or the position of the package passage, the output force applying portion 12039 may always move following the adjustment of the width and/or the position of the package passage, so that the output force applying portion 12039 is always maintained in the package passage. Because of this setting, when the package passage limiting mechanism 12002 adjusts the width or the position of the package passage, the position of the output force applying portion 12039 does not need to be considered, the package output mechanism 12003 nor does need to independently be controlled to follow the adjustment and the movement of the package passage. In this way, the control is simple, the cost is reduced, and it is more convenient and flexible to adjust the width and/or the position of the package passage.

In some embodiments, as shown in Fig. 6a to Fig. 6b, in the width direction of the package passage, the ratio of the distance from the center of the output force applying portion 12039 to the both sides of the package passage remains unchanged. In the illustrated embodiment in which the width of the package passage is limited by a first limiting member 12021a of package passage and a second limiting member 12021b of package passage, the ratio of the distance from the center of the output force applying portion 12039 to the both sides of the package passage remaining unchanged refers to that the ratio of the distance from the center of the output force applying portion 12039 along the width direction of the package passage to the first limiting member 12021a of package passage and the second limiting member 12021b of package passage remains unchanged. When the width of the package passage is adjusted due to the conveyance of packages of different sizes, or the position of the package passage is moved due to the adjustment of the output position, the output force applying portion 12039 may be always maintained at a suitable force applying position to output the packages due to this setting.

In some embodiments, as shown in Fig. 6a to Fig. 6b, in the width direction of the package passage, the output force applying portion 12039 is always located at the middle of the package passage. When the width and/or the position of the package passage is adjusted, the output force applying portion 12039 is always located at the middle of the package passage, then the output force applied by the output force applying portion 12039 to the packages in the package passage is always at the middle, which is conducive to outputting the packages stably, reliably and efficiently.

In some embodiments, as shown in Fig. 6a to Fig. 6b, the package passage limiting mechanism 12002 includes a first limiting member 12021a of package passage and a second limiting member 12021b of package passage, and the package passage limiting mechanism 12002 adjusts the width or the position of the package passage limited by it through the relative movement of the first limiting member 12021a of package passage and the second limiting member 12021b of package passage. The width or the position of the package passage may be changed by the movement of one of the first limiting member 12021a of package passage and the second limiting member 12021b of package passage or by the simultaneous movement of the two members, and by adjusting the first limiting member 12021a of package passage or the second limiting member 12021b of package passage, the package passage may be adjusted to adapt to the sizes of the conveyed packages or the necessary output positions of the packages.

In some embodiments, as shown in Fig. 6a to Fig. 6b, the package conveying device 12000 further includes a limiting member following mechanism 12001 connected to the first limiting member 12021a of package passage and the second limiting member 12021b of package passage, respectively, the limiting member following mechanism 12001 includes a connecting portion connected to the package output mechanism 12003, and the package passage limiting mechanism 12002 drives the package output mechanism 12003 to move along the width direction of the package passage through the connecting portion. The connection between the package passage limiting mechanism 12002 and the package output mechanism 12003 is realized through the limiting member following mechanism 12001, and the technical solution in which the output force applying portion 12039 is always located in the package passage in the width direction of the package passage or the ratio of the distance from the center of the output force applying portion 12039 to the both sides of the package passage remains unchanged in some embodiments may be implemented simply and effectively.

In some embodiments, the connecting portion includes a connecting hinge point, and the package output mechanism 12003 is fixedly connected to the connecting hinge point. The connection of the package output mechanism 12003 may be simpler and more effective due to this setting.

In some embodiments, the limiting member following mechanism 12001 may include a scissor-type telescoping mechanism, and the telescoping direction of the scissor-type telescoping mechanism is disposed along the width direction of the package passage. The two first end portions of the first end in the telescoping direction of the scissor-type telescoping mechanism are rotatably connected to the first limiting member 12021a of package passage, respectively, and at least one of the two first end portions may move along the length direction of the package passage. The two second end portions of the second end in the telescoping direction of the scissor-type telescoping mechanism are rotatably connected to the second limiting member 12021b of package passage, respectively, and at least one of the two second end portions may move along the length direction of the package passage. An internal hinge point of the scissor-type telescoping mechanism forms the connecting hinge point. The scissor-type telescoping mechanism may include an X-type scissor mechanism and may also include two or more X-type scissor mechanisms that are hinged with each other in sequence, the internal hinge point of the scissor-type telescoping mechanism includes a mechanism internal hinge point of the X-type scissor mechanism, as well as hinge points where the adjacent X-type scissor mechanisms are hinged with each other.

In some embodiments, the limiting member following mechanism 12001 further includes telescoping mechanism rolling bearings 12014 disposed corresponding to the first end portion and the second end portion that may move along the length direction of the package passage, respectively, each of the telescoping mechanism rolling bearings 12014 is disposed at the outside of a convex shaft disposed on the corresponding first end portion or the second end portion in a sleeving manner, and the first limiting member 12021a of package passage and the second limiting member 12021b of package passage are provided with telescoping mechanism chutes 12015 that extend along the length direction of the package passage and cooperate with the telescoping mechanism rolling bearings 12014. By disposing the telescoping mechanism rolling bearings 12014, the friction force between the moving end portions of the scissor-type telescoping mechanism and the corresponding telescoping mechanism chutes 12015 may be reduced.

For example, in some embodiments not shown in the figures, the scissor-type telescoping mechanism may include an X-type scissor mechanism. The X-type scissor mechanism includes a first rod and a second rod, which are crossed in an X-shape and are hinged with each other at the mechanism internal hinge point. The first ends of the first rod and the second rod are the two first end portions of the scissor-type telescoping mechanism, and are rotatably connected to the first limiting member 12021a of package passage, the second ends of the first rod and the second rod are the two second end portions of the scissor-type telescoping mechanism, and are rotatably connected to the second limiting member 12021b of package passage. At least one of the first end of the first rod and the first end of the second rod may move along the length direction of the package passage with respect to the first limiting member 12021a of package passage, and at least one of the second end of the first rod and the second end of the second rod may move along the length direction of the package passage with respect to the second limiting member 12021b of package passage. The distance between the connecting point of the rotatable connection of the first end of the first rod connected to the first limiting member 12021a of package passage and the mechanism internal hinge point is the same as the distance between the connecting point of the rotatable connection of the first end of the second rod connected to the first limiting member 12021a of package passage and the mechanism internal hinge point, and the distance between the connecting point of the rotatable connection of the second end of the first rod connected to the second limiting member 12021b of package passage and the mechanism internal hinge point is the same as the distance between the connecting point of the rotatable connection of the second end of the second rod and the mechanism internal hinge point. The connecting hinge point is the mechanism internal hinge point of the X-type scissor mechanism.

The length direction of the package passage is perpendicular to the width direction of the package passage, that is, the movement direction of the package when it is output from the package passage.

The four end portions of the X-type scissor mechanism may all move along the length direction of the package passage relative to the respectively located limiting members, or, only one of the four end portions of the X-type scissor mechanism may move along the length direction of the package passage on the located limiting members respectively, at this time, the connecting line of the movable end portions relative to the first limiting member 12021a of package passage and the second limiting member 12021b of package passage is preferably along the width direction of the package passage, so that The X-type scissor mechanism does not affect the position of the first limiting member of package passage or the second limiting member of package passage in the length direction of the package passage.

The rod lengths of the first rod and the second rod of the X-type scissor mechanism on the mechanism internal hinge point close to one side of the first limiting member 12021a of package passage are set to be equal, the rod lengths close to one side of the second limiting member 12021b of package passage are also set to be equal, the package output mechanism 12003 is connected to the mechanism internal hinge point, and then the ratio of the distance from the center of the output force applying portion 12039 to the both sides of the package passage remains unchanged.

As another example, in some embodiments, the scissor-type telescoping mechanism includes two or more X-type scissor mechanisms that are hinged with each other in sequence. As shown in Fig. 6a and Fig. 6b, the scissor-type telescoping mechanism includes three X-type scissor mechanisms. Each X-type scissor mechanism includes two rods, which are crossed in an X-shape and are hinged with each other at the mechanism internal hinge point; and the adjacent X-type scissor mechanisms are hinged with each other through the ends of the two rods. The ends of the two rods of the X-type scissor mechanism at the first end of the scissor-type telescoping mechanism are the two first end portions of the scissor-type telescoping mechanism, and are rotatably connected to the first limiting member 12021a of package passage, respectively. The ends of the two rods of the X-type scissor mechanism at the second end of the scissor-type telescoping mechanism are the two second end portions of the scissor-type telescoping mechanism, and are rotatably connected to the second limiting member 12021b of package passage, respectively. At least one of the two first end portions connected to the first limiting member 12021a of package passage may move along the length direction of the package passage relative to the first limiting member 12021a of package passage, and at least one of the two second end portions connected to the second limiting member 12021b of package passage may move along the length direction of the package passage relative to the second limiting member 12021b of package passage. The aforementioned connecting hinge point may be the mechanism internal hinge point of any X-type scissor mechanism or the hinge point where the adjacent X-type scissor mechanisms are hinged with each other.

As shown in Fig. 6a and Fig. 6b, two or more X-type scissor mechanisms are hinged with each other through two end portions of the adjacent X-type scissor mechanisms to be connected to each other in a row along the width direction of the package passage, then, the two first end portions on the outer side of one of the X-type scissor mechanisms located at both ends of the row are rotatably connected to the first limiting member 12021a of package passage, the two second end portions on the outer side of the other X-type scissor mechanism are rotatably connected to the second limiting member 12021b of package passage, and furthermore, at least one of every two end portions on the respective located limiting member of the four end portions connected to the two limiting members may move along the length direction of the package passage relative to the located limiting members. The package output mechanism 12003 is connected to the mechanism internal hinge point of any X-type scissor mechanism or the hinge point where the adjacent X-type scissor mechanisms are hinged with each other, and then, the ratio of the distance from the center of the output force applying portion 12039 to the both sides of the package passage in the width direction of the package passage remains unchanged. The distances between the connecting points of the two first end portions of the scissor-type telescoping mechanism connected to the first limiting member 12021a of package passage and the located mechanism internal hinge point are equal to the distances between the connecting points of the two second end portions of the scissor-type telescoping mechanism connected to the second limiting member 12021b of package passage and the located mechanism internal hinge point, as well as the distances between the mutually hinged connecting points of the X-type scissor mechanisms and the located mechanism internal hinge points. When an even number of X-type scissor mechanisms are hinged with each other, the package output mechanism 12003 is connected to the hinge point where the two middlemost X-type scissor mechanisms are hinged with each other, or, when an odd number of X-type scissor mechanisms are hinged with each other, the package output mechanism 12003 is connected to the mechanism internal hinge point of the middlemost X-type scissor mechanism, and then the output force applying portion 12039 is always located at the middle of the width of the package passage along the width direction of the package passage.

As shown in Fig. 6a and Fig. 6b, the four end portions of the scissor-type telescoping mechanism may all move along the length direction of the package passage relative to the corresponding limiting members. The scissor-type telescoping mechanism further includes four telescoping mechanism rolling bearings 12014 disposed corresponding to the end portions, the four end portions are respectively provided with convex shafts that cooperate with the corresponding telescoping mechanism rolling bearings 12014, and the first limiting member 12021a of package passage and the second limiting member 12021b of package passage are provided with telescoping mechanism chutes 12015 that extend along the length direction of the package passage and cooperate with the telescoping mechanism rolling bearings 12014. The four end portions at the two ends of the scissor-type telescoping mechanism respectively cooperate with the corresponding telescoping mechanism chutes 12015 on the first limiting member 12021a of package passage and the second limiting member 12021b of package passage through the telescoping mechanism rolling bearings 12014. By means of this setting, while the connection relative rotatable and movable along the length direction of the package passage between the end portions of the scissor-type telescoping mechanism and corresponding limiting members are realized, the rotatable connection is realized by the indirect cooperation through the telescoping mechanism rolling bearings 12014, so that the rotatable connection is also more flexible and reliable.

In some embodiments, each of the first limiting member 12021a of package passage and the second limiting member 12021b of package passage includes a package passage strip plate 12028 extending along the output direction of the package. By disposing the package passage strip plate 12028, the outward output of the package and the positioning during the outward output may be implemented conveniently, for example, when the package is output to a vacancy in a pile of packages, the package passage strip plate 12028 is inserted into the vacancy, and then the package may be conveniently output to the vacancy.

As shown in Fig. 6a and Fig. 6b, each of the first limiting member 12021a of package passage and the second limiting member 12021b of package passage includes a limiting plate extending along the length direction of the package passage, and a package passage strip plate 12028 extending toward the output direction of the package is provided at the bottom of the limiting plate.

In some embodiments, the package conveying device 12000 further includes a limiting member guide device for guiding when the first limiting member 12021a of package passage and/or the second limiting member 12021b of package passage move along the width direction of the package passage.

In some embodiments, the limiting member guide device includes a package passage limiting member guide rail 12022 extending along the width direction of the package passage, and the first limiting member 12021a of package passage and the second limiting member 12021b of package passage move on the package passage limiting member guide rail 12022.

As shown in Fig. 6a and Fig. 6b, the package conveying device 12000 includes a package passage limiting member base plate 12027, the package passage limiting member base plate 12027 is provided with a package passage limiting member guide rail 12022 extending along the width direction of the package passage, and the first limiting member 12021a of package passage and the second limiting member 12021b of package passage move on the package passage limiting member guide rail 12022.

In some embodiments, the package conveying device 12000 further includes a first synchronous belt 12024 of limiting member that is fixedly connected with the first limiting member 12021a of package passage, and a first motor of limiting member for driving the first synchronous belt 12024, and/or, includes a second synchronous belt of limiting member that is fixedly connected with the second limiting member 12021b of package passage, and a second motor 12026 of limiting member for driving the second synchronous belt of limiting member. A synchronous belt pulley 12025 is connected with the first synchronous belt 12024.

As shown in the figure, the first limiting member 12021a of package passage and the second limiting member 12021b of package passage are installed on the package passage limiting member guide rail 12022 through a package passage limiting member slide block 12023. The synchronous belt and the guide rail are disposed to control the movement of the limiting members, so that the movement of the first limiting member 12021a of package passage and the second limiting member 12021b of package passage is more stable and accurate, and the width and the position of the package passage can be accurately controlled conveniently. In some embodiments, the first motor of limiting member and the second motor of limiting member are servo motors.

In some embodiments, the package conveying device 12000 further includes a driving device of package passage limiting mechanism, which is in driving connection with the package passage limiting mechanism 12002 for driving the package passage limiting mechanism 12002 to reciprocate along the length direction of the package passage.

As shown in Fig. 6a and Fig. 6b, in the present embodiment, the package conveying device 12000 includes a base plate guide rail 12042 disposed along the length direction of the package passage, the package passage limiting member base plate 12027 is disposed on the base plate guide rail 12042, the package passage limiting mechanism 12002 is connected with the package passage limiting member base plate 12027. The driving device of package passage limiting mechanism includes a base plate driving motor 12041, the package passage limiting member base plate 12027 is driven by the base plate driving motor 12041 to reciprocate along the base plate guide rail 12042, thereby driving the package passage limiting mechanism 12002 to reciprocate along the length direction of the package passage. In the present embodiment, the base plate driving motor 12041 drives a screw connected to the package passage limiting member base plate 12027 to reciprocate, so as to drive the package passage limiting member base plate 12027 to reciprocate along the base plate guide rail 12042.

In some embodiments not shown in the figures, the first limiting member 12021a of package passage and the second limiting member 12021b of package passage may also be connected to lead screws or chains, and then are driven by the lead screws or the chains driven by the servo motors.

In some embodiments, as shown in Fig. 6a and Fig. 6b, the package output mechanism 12003 includes a lifting mechanism for ascending and descending the output force applying portion 12039 and a package pushing mechanism 12034 for moving the lifting mechanism along the length direction of the package passage.

The lifting mechanism includes a first stage telescoping mechanism 12037 of lifting mechanism and a second stage telescoping mechanism 12038 of lifting mechanism, which are disposed side by side along the width direction of the package passage, each of the first stage telescoping mechanism 12037 of lifting mechanism and the second stage telescoping mechanism 12038 of lifting mechanism includes a body and a telescoping portion capable of telescoping up and down relative to the body, the lower end of the telescoping portion of the first stage telescoping mechanism 12037 of lifting mechanism is fixedly connected with the body of the second stage telescoping mechanism 12038 of lifting mechanism, and the top end of the body of the second stage telescoping mechanism 12038 of lifting mechanism is higher than with the joint with the telescoping portion of the first stage telescoping mechanism 12037 of lifting mechanism. By setting the lifting mechanism as the horizontal parallel first stage telescoping mechanism 12037 of lifting mechanism and the second stage telescoping mechanism 12038 of lifting mechanism, the space occupied by the lifting mechanism in the height direction may be saved, and the structure of the lifting mechanism is more compact.

In some embodiments, the first stage telescoping mechanism 12037 of lifting mechanism is a first stage driving cylinder, the second stage telescoping mechanism 12038 of lifting mechanism is a second stage driving cylinder, and the first stage driving cylinder and the second stage driving cylinder may be pneumatic cylinders or hydraulic cylinders. Correspondingly, the body of the first stage driving cylinder is the cylinder body of the first stage driving cylinder, the telescoping portion of the first stage driving cylinder is the piston rod of the first stage driving cylinder, the body of the second stage driving cylinder is the cylinder body of the second stage driving cylinder, and the telescoping portion of the second stage driving cylinder is the piston rod of the second stage driving cylinder.

In some embodiments, as shown in Fig. 6a and Fig. 6b, the package output mechanism 12003 includes a package output mechanism connecting plate 12031, the package output mechanism 12003 is connected to the connecting portion of the limiting member following mechanism 12001 through the package output mechanism connecting plate 12031, at the same time, the package output mechanism 12003 further includes a package output mechanism slide block 12032 fixed below the package output mechanism connecting plate 12031, the package output mechanism slide block 12032 is disposed on the package passage limiting member guide rail 12022, and due to this setting, the first limiting member 12021a of package passage and the second limiting member 12021b of package passage may drive the package output mechanism 12003 to move in the width direction of the package passage while adjusting the package passage.

The package pushing mechanism 12034 includes a main body portion fixedly connected to the package output mechanism connecting plate 12031, and a telescoping portion capable of telescoping along the length direction of the package passage relative to the main body portion. The telescoping portion of the package pushing mechanism 12034 is connected to the lifting mechanism connecting plate 12033 through a pushing mechanism telescoping guide rod 12035, and the lifting mechanism is fixed on the lifting mechanism connecting plate 12033. The telescoping portion of the package pushing mechanism 12034 telescopically controls the lifting mechanism connecting plate 12033 and the lifting mechanism thereon to reciprocate, so that the output force applying portion 12039 connected to the bottom of the lifting mechanism may be driven to reciprocate along the length direction of the package passage. The package output mechanism 12003 further includes a guide mandrel 12036 in sliding fit with the pushing mechanism telescoping guide rod 12035 for guiding.

In some embodiments, as shown in Fig. 6b, the package conveying device 12000 further includes a package guide mechanism 12005 for guiding the packages into the package passage. The package guide mechanism 12005 includes a telescopic first package guide member hinged with the first limiting member 12021a of package passage at one end, and a telescopic second package guide member hinged with the second limiting member 12021b of package passage at one end, the other ends of the first package guide member and the second package guide member are disposed at intervals along the width direction of the package passage and are respectively hinged with the rack of the package conveying device 12000. The expansion and retraction of the first package guide member or the second package guide member may be implemented by setting the first package guide member and the second package guide member as two parts that is connected by a chute structure, and the two parts of the first package guide member or the second package guide member may perform relative movement through sliding to implement the expansion and retraction of the first package guide member or the second package guide member, and the telescoping may also be implemented by disposing small rollers in the chute to achieve rolling.

For example, in the embodiment shown in Fig. 6b, the second package guide member includes a first package guide rod 12052 and a second package guide rod 12054, and a guide member guide rail 12053 is disposed between the first package guide rod 12052 and the second package guide rod 12054 to implement the expansion and retraction of the second package guide member. The second package guide member is hinged with the second limiting member 12021b of package passage through a first end hinge lug 12051 of second package guide member, the second package guide member is hinged with the rack of the package conveying device 12000 through a tail end hinge lug 12055 of second package guide member, and then the second limiting member 12021b of package passage may drive the second package guide member to move while moving. Similarly, in the present embodiment, the structure and the installation manner of the first package guide member and the second package guide member are the same, and the first package guide member follows the first limiting member 12021a of package passage.

In the present embodiment, the follow-up of the guide mechanism with the adjustment of the width and the position of the package passage may be implemented, so that the guide mechanism may guide the package conveyed into the package passage more flexibly.

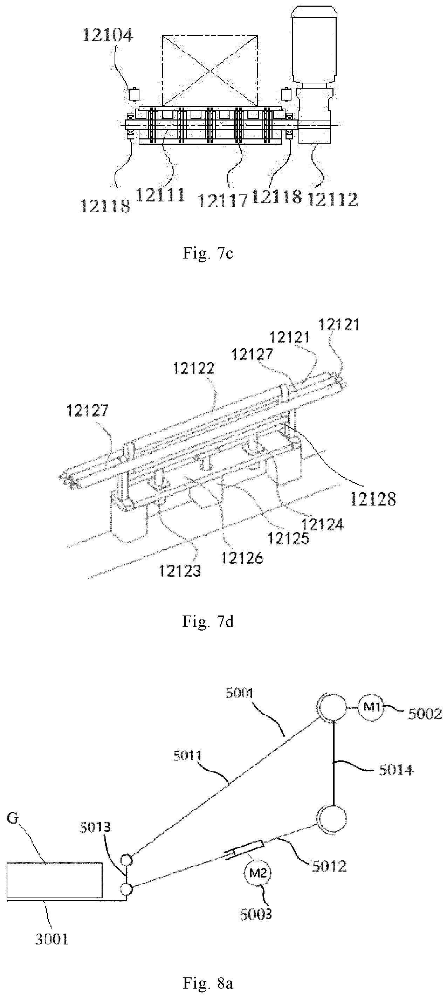

In some embodiments, as shown in Fig. 7a and Fig. 7b, the package conveying mechanism 12100 includes a low-speed conveyor line 12103, and a high-speed conveyor line 12101 and a blocking transition mechanism 12102, which are disposed at the downstream of the low-speed conveyor line 12103 at intervals. The blocking transition mechanism 12102 includes a movable blocking transition portion. The blocking transition mechanism 12102 has a transition working state and a blocking working state. In the transition working state, the blocking transition portion of the blocking transition mechanism 12102 is located in the interval between the low-speed conveyor line 12103 and the high-speed conveyor line 12101, so that the packages G conveyed from the low-speed conveyor line 12103 are transited onto the high-speed conveyor line 12101 through the blocking transition portion. In the blocking working state, the blocking transition portion is located above the interval between the low-speed conveyor line 12103 and the high-speed conveyor line 12101 to block the packages G conveyed from the low-speed conveyor line 12103 from being conveyed to the downstream of the aforementioned interval.

The package conveying mechanism 12100, the high-speed conveyor line 12101 and the low-speed conveyor line 12103 provided in the present embodiment may separate the conveyed packages G. The blocking transition mechanism 12102 of the package conveying mechanism 12100 may also block the packages G conveyed by the low-speed conveyor line 12103 to prevent the packages G from entering the high-speed conveyor line 12101. For example, when the next procedure operation on the packages G on the high-speed conveyor line 12101 has not been completed, the blocking transition portion of the blocking transition mechanism 12102 may rotate or move to the upper side of the interval between the low-speed conveyor line 12103 and the high-speed conveyor line 12101, so as to block the subsequent packages G on the low-speed conveyor line 12103 to prolong the separation time between the front and back packages G, or, when the distances between the packages G on the low-speed conveyor line 12103 and the packages G on the high-speed conveyor line 12101 needs to be increased, the packages G on the low-speed conveyor line 12103 may also be blocked by the blocking transition portion. When it is not necessary to block the packages G on the low-speed conveyor line 12103, the blocking transition portion may also be rotated or moved to the interval between the low-speed conveyor line 12103 and the high-speed conveyor line 12101, so that the packages G may be transited onto the high-speed conveyor line 12101 through the blocking transition portion, and then the packages G are conveyed onto the high-speed conveyor line 12101 more smoothly.

In some embodiments, as shown in Fig. 7a, Fig. 7b and Fig. 7d, the blocking transition portion includes a blocking transition rolling body with a movable axis, in the transition working state, the blocking transition rolling body is located in the interval between the low-speed conveyor line 12103 and the high-speed conveyor line 12101, so that the packages G conveyed from the low-speed conveyor line 12103 are transited onto the high-speed conveyor line 12101 through the rolling of the blocking transition rolling body, in the blocking working state, the blocking transition rolling body is located above the interval between the low-speed conveyor line 12103 and the high-speed conveyor line 12101, in order to prevent the packages G conveyed by the low-speed conveyor line 12103 from being conveyed to the downstream of the aforementioned interval. The blocking transition portion is set as the blocking transition rolling body with the movable axis, in this way, during the transition of the packages G in the transition working state of the blocking transition portion, the transition of the packages G is smoother, and the passability of the packages G is improved.

In some embodiments, as shown in Fig. 7a, Fig. 7b and Fig. 7d, the blocking transition rolling body with the movable axis includes a liftable first transition roller 12122, the blocking transition mechanism 12102 further includes two second transition rollers 12127 with fixed axes and located at the both ends of the first transition roller respectively, and in the transition working state, the two second transition rollers 12127 are coaxial with the first transition roller 12122. Due to this setting, the size of the blocking transition portion may be reduced, so that it is more compact, and the action of the blocking transition portion is more flexible and convenient as a result.

In some embodiments, as shown in Fig. 7d, the blocking transition mechanism 12102 further includes a guide device, and when the blocking transition mechanism 12102 switches between the transition working state and the blocking working state, the guide device is used to guide the movement of the blocking transition portion. When the blocking transition portion switches between the transition working state and the blocking working state, the guide device is provided to guide the blocking transition portion, so that the movement of the blocking transition portion is more accurate and stable.

In some embodiments, as shown in Fig. 7d, the guide device includes at least one guide mechanism, and the guide mechanism includes a blocking transition guide sleeve 12123 and a blocking transition guide rod 12124 in sliding fit with the blocking transition guide sleeve 12123; and one of the blocking transition guide sleeve 12123 and the blocking transition guide rod 12124 in sliding fit with the blocking transition guide sleeve 12123 is connected to the blocking transition portion, and the other one is relatively fixed with a package conveying mechanism rack 12126 of the package conveying mechanism 12100. That is, as shown in Fig. 7d, when the blocking transition guide sleeve 12123 is relatively fixed with the package conveying mechanism 12100, the blocking transition guide rod 12124 is connected with the blocking transition portion, the blocking transition guide rod 12124 moves with the movement of the blocking transition portion while switching between the transition working state and the blocking working state, and the blocking transition guide rod 12124 guides the movement of the blocking transition portion under the limit of the blocking transition guide sleeve 12123. As shown in Fig. 7d, the blocking transition portion includes the aforementioned first transition roller 12122 and a shaft for supporting the rolling of the first transition roller 12122, and the blocking transition guide rod 12124 is connected to the shaft by a cross rod 12128 that is parallel to the shaft and is connected together with the shaft. Or, in the embodiment not shown in the figure, the blocking transition guide sleeve 12123 may also be connected to the blocking transition portion, the blocking transition guide rod 12124 is relatively fixed with the package conveying mechanism rack 12126 of the package conveying mechanism 12100, the movement of the blocking transition portion may also be guided, and the guide mechanism is simple and effective due to this setting.

In some embodiments, as shown in Fig. 7d, the guide device includes two guide mechanisms disposed symmetrically on the both sides of the blocking transition portion. The two symmetrical guide mechanisms may make the blocking transition portion more balanced by the radial force received by the blocking transition guide rod 12124 or the blocking transition guide sleeve 12123 connected to the blocking transition portion, which helps to make the blocking transition portion more stable in the direction, at the same time, it is also conducive to preventing the driving device for driving the blocking transition portion to switch between the transition working state and the blocking working state from being applied with other external forces except providing a driving force for the movement direction of the blocking transition portion, and the driving efficiency of the blocking transition portion by the driving device is improved.

In some embodiments, as shown in Fig. 7a, the blocking transition mechanism 12102 includes a driving device, and the driving device is used for driving the blocking transition portion, so that the blocking transition mechanism 12102 switches between the transition working state and the blocking working state. The package conveying mechanism 12100 further includes a package conveying mechanism sensing device 12105 and a package conveying mechanism controller, the driving device and the package conveying mechanism sensing device 12105 are in signal connection with the package conveying mechanism controller, and the package conveying mechanism sensing device 12105 is used for detecting whether there are packages G on the blocking transition portion. The package conveying mechanism sensing device 12105 may include, for example, a detection component such as a photoelectric sensor. The package conveying mechanism controller controls the action of the driving device based on the detection result of the package conveying mechanism sensing device 12105. Due to this setting, when the blocking transition portion needs to switch from the transition working state to the blocking working state, whether there is package G on the blocking transition portion is detected at first through the package conveying mechanism sensing device 12105, if the package G exists, then the package conveying mechanism controller controls the driving device to not drive at first, after the package G passes through the blocking transition portion, the driving device drives the blocking transition portion to move to a position corresponding to the blocking working state, thereby being conducive to preventing the blocking transition portion from ejecting out the package G just located thereon or pushing off the package G from the package conveying mechanism 12100 while switching from the transition working state to the blocking working state, in this way, the transition process of the packages G from the low-speed conveyor line 12103 to the high-speed conveyor line 12101 is safer and more reliable.

In some embodiments, as shown in Fig. 7a and Fig. 7d, the blocking transition mechanism 12102 includes blocking transition driving cylinders 12125 located below at intervals and serving as driving devices, the piston rod of the blocking transition driving cylinder 12125 is connected to the aforementioned cross rod 12128, so as to be connected to the shaft of the blocking transition portion, and the blocking transition driving cylinder 12125 is used for driving the blocking transition portion, so that the blocking transition mechanism 12102 switches between the transition working state and the blocking working state. The blocking transition driving cylinder 12125 may be a pneumatic cylinder or a hydraulic cylinder, and the blocking transition driving cylinder 12125 may be configured to be relatively fixed with respect to the package conveying mechanism rack 12126 of the package conveying mechanism 12100. By setting the driving device as the driving cylinder, the structure of the driving device is simple and effective. By setting the stroke of the driving cylinder, the blocking transition mechanism 12102 may switch between the transition working state and the blocking working state quickly and accurately.

In some embodiments, the low-speed conveyor line 12103 includes a conveyor belt provided with a plurality of rolling bodies on the surface, and the rolling bodies are used for loading the packages G while conveying the packages G. Due to this setting, when the blocking transition portion block the packages G, the low-speed conveyor line 12103 may not stop, and the packages G blocked by the blocking transition portion form rolling friction with the conveyor belt, thereby reducing the friction force of the conveyor belt on the blocked packages G and reducing the extrusion between the blocked packages G at the same time.

In some embodiments, the conveyor belt is provided with a plurality of rolling grooves, the plurality of rolling bodies include a plurality of rolling balls, and the rolling balls are embedded in the rolling grooves. By setting the rolling bodies as the rolling balls, the rolling bodies may be more flexible, and the friction force between the conveyor belt and the blocked package G is further reduced.

In some embodiments, package conveying fences 12104 are disposed on the both sides of the low-speed conveyor line 12103 and/or the high-speed conveyor line 12101, and a plurality of rolling bodies rotating around the normal direction of the low-speed conveyor line 12103 and/or the high-speed conveyor line 12101 are disposed on the package conveying fences 12104. By disposing the package conveying fences 12104, it is conducive to stabilizing the conveying direction of the conveyed packages and preventing the packages from dropping from the conveyor belt, and meanwhile, the rolling bodies are disposed on the package conveying fences 12104, so that the friction force when the packages G touch the fences during the conveying process can be reduced. The rolling bodies rotate around the normal direction of the low-speed conveyor line 12103 and/or the high-speed conveyor line 12101, so that the friction between the conveyed packages G and the package conveying fences 12104 may be rolling friction. The normal direction is a direction perpendicular to the conveying surface of the low-speed conveyor line 12103 and/or the high-speed conveyor line 12101.

In some embodiments, as shown in Fig. 7a and Fig. 7b, the package conveying mechanism 12100 includes a conveying roller 12121 of package conveying mechanism disposed in the aforementioned interval, in the transition working state, the blocking transition portion and the conveying roller 12121 of package conveying mechanism are disposed side by side to transit the packages G conveyed from the low-speed conveyor line 12103 onto the high-speed conveyor line 12101 together. By disposing the conveying roller 12121 of package conveying mechanism, the smoothness and passability of the packages G during the transition may be improved.

The package conveying mechanism of the present disclosure is schematically illustrated below by the package conveying mechanism 12100 in an embodiment.

In the present embodiment, as shown in Fig. 7a to Fig. 7d, the package conveying mechanism 12100 includes a high-speed conveyor line 12101, a blocking transition mechanism 12102, a low-speed conveyor line 12103, package conveying fences 12104, a package conveying mechanism sensing device 12105 and a package conveying mechanism controller. In the present embodiment, the conveyed packages G are boxes, and the driving device that drives the blocking transition portion is a pneumatic cylinder. The conveying portions of the low-speed conveyor line 12103 and the high-speed conveyor line 12101 are both conveyor belts.

When the boxes enter the low-speed conveyor line 12103, the boxes are supported on the conveyor belt of the low-speed conveyor line 12103. In the present embodiment, the conveyor belt of the low-speed conveyor line 12103 is a ball mesh belt 12134, and a mesh belt support plate 12133 of low-speed conveyor line supports the ball mesh belt 12134 to bear the weights of the boxes. The mesh belt support plate 12133 of low-speed conveyor line may include flange structures on the both sides, which may guide the ball mesh belt 12134. The mesh belt support plate 12133 of low-speed conveyor line supports the middle of the ball mesh belt 12134. At the same time, a mesh belt chain wheel is disposed at the downstream end of the ball mesh belt 12134, and is connected to a driving shaft 12131 of low-speed conveyor line through keys. In addition, an pressing plate 12139 is disposed at the upstream end of the ball mesh belt 12134. A mesh belt chain wheel 12137 is disposed at the bottom of the return stroke portion of the upstream end of the ball mesh belt 12134, and the mesh belt chain wheel 12137 is connected to a driven shaft 12136 of low-speed conveyor line. Because the driven shaft 12136 of low-speed conveyor line does not need to transmit torque and does not need to be connected by keys, so the driven shaft 12136 of low-speed conveyor line may be set as an plain shaft. A return stroke adjustment pressing plate 12135 is also disposed at the bottom of the return stroke portion of the ball mesh belt 12134 for adjusting the tension of the ball mesh belt 12134.

In the present embodiment, before the boxes on the low-speed conveyor line 12103 are conveyed to the blocking transition portion, the package conveying mechanism controller judges whether there are boxes on the high-speed conveyor line 12101 to send an instruction to control the cylinder to act so as to switch the working state of the blocking transition mechanism 12102. If there are boxes on the high-speed conveyor line 12101, the piston rod of the cylinder is raised, and the blocking transition portion blocks the boxes on the low-speed conveyor line 12103 from entering the high-speed conveyor line 12101. At this time, the driving motor of the ball mesh belt 12134 does not need to stop running, so that the subsequent boxes continue to move forward. Because the ball mesh belt 12134 is provided with the balls, after the blocking transition mechanism 12102 blocks the boxes, the balls will rotate backward, the blocked boxes only need to overcome the rolling friction force of the balls, so the extrusion force among the boxes is also smaller. If there is no box on the high-speed conveyor line 12101, the piston rod of the cylinder is lowered, and the boxes are smoothly transited to the high-speed conveyor line 12101 through the conveying roller 12121 of package conveying mechanism, and the first transition roller 12122 and the second transition rollers 12127 of the blocking transition portion. Since the conveying speed of the high-speed conveyor line 12101 is higher than that of the low-speed conveyor line 12103, the box entering the high-speed conveyor line 12101 is separated from the next box on the low-speed conveyor line 12103. After the separation, the photoelectric sensor of the package conveying mechanism sensing device 12105 detects whether the next box is on the first transition roller 12122 of the blocking transition portion, and if not, the first transition roller 12122 immediately rises to block the next box from entering the high-speed conveyor line 12101 so as to separate the boxes.

After the box enters the high-speed conveyor line 12101, the box is supported on a conveyor belt 12114 of high-speed conveyor line 12101, the conveyor belt 12114 of high-speed conveyor line may be an ordinary flat plate mesh belt and may also be a flat plate mesh belt with rubber implanted, in order to increase the friction force, so that the conveyor belt of high-speed conveyor line is less slippery when used to accelerate the box separation. A conveyor belt support plate 12113 of high-speed conveyor line supports the conveyor belt 12114 of high-speed conveyor line to bear the weight of the box. The both sides of the conveyor belt support plate 12113 of high-speed conveyor line are of flange structures, which may guide the conveyor belt 12114 of high-speed conveyor line. The conveyor belt support plate 12113 of high-speed conveyor line supports the middle of the conveyor belt 12114 of high-speed conveyor line. At the same time, a mesh belt chain wheel is disposed at the downstream end of the conveyor belt 12114 of high-speed conveyor line, and is connected to a driving shaft 12111 of high-speed conveyor line through keys. Bearings 12118 are disposed on the both sides of the driving shaft 12111 of high-speed conveyor line to support its rotation, and the end of the driving shaft 12111 of high-speed conveyor line is connected with a driving motor 12112 of high-speed conveyor line. In addition, a pressing plate 12119 of high-speed conveyor line is disposed at the upstream end of the conveyor belt 12114 of high-speed conveyor line. A mesh belt chain wheel 12117 is disposed at the bottom of the return stroke portion of the upstream end of the conveyor belt 12114, and the mesh belt chain wheel 12117 is connected with a driven shaft 12116 of high-speed conveyor line. Because the driven shaft 12116 of high-speed conveyor line does not need to transmit torque and does not need to be connected by keys, so the driven shaft 12116 of high-speed conveyor line may be set as a plain shaft, and the mesh belt chain wheel 12117 is disposed on the plain shaft in a sleeving manner. A return stroke adjustment pressing plate 12115 is also disposed at the bottom of the return stroke portion for adjusting the tension of the mesh belt of the high-speed conveyor line 12101.

The first transition roller 12122 of the blocking transition portion of the blocking transition mechanism 12102 is connected to the cylinder, and the shaft for supporting the first transition roller 12122 is also connected to the blocking transition guide rod 12124 through the both sides of the cross rod 12128. The blocking transition guide rod 12124 is disposed in the blocking transition guide sleeve 12123 in the sleeving manner. When the piston rod of the cylinder is raised and lowered, the first transition roller 12122 of the blocking transition portion is raised and lowered together with the blocking transition guide rods 12124 on the both sides, and the lateral force applied to the cylinder is reduced by guiding the blocking transition guide rods 12124 by the blocking transition guide sleeve 12123. The cylinder is fixed on the package conveying mechanism rack 12126 of the package conveying mechanism.

When the box is conveyed to the downstream, it may deviate to touch the package conveying fence 12104, a row of rolling bodies is disposed on the package conveying fence 12104, the rolling body will roll in contact with the box, so the box forms rolling friction with the rollers on the fence, and then the friction force is smaller.

In some embodiments, as shown in Fig. 8a, the stacking device 5000 includes a mechanical arm that forms a four-link mechanism 5001 with the rack 5014 of the stacking device 5000. In the stacking working state, the pre-storage support plate 3001 is connected to a rod member in the four-link mechanism 5001 away from the rack of the stacking device 5000, so that the pre-storage support plate 3001 is driven to move to the vicinity of the stacking position by the swing of the four-link mechanism. Furthermore, the length of at least one rod member used for forming the four-link mechanism in the mechanical arm is adjustable, so that the inclination angle of the pre-storage support plate 3001 is adjusted according to current working state. The mechanical arm is swingably connected to the rack 5014 of the stacking device 5000, the mechanical arm includes three rod members, which forms the four-link mechanism 5001 with the rack 5014 of the stacking device 5000, and the pre-storage support plate 3001 is disposed on the rod member of the four-link mechanism 5001 away from the rack 5014 of the stacking device 5000. The pre-storage support plate 3001 may reach the rear (the side of the stacking position close to the loading and unloading equipment) or the upper side in the vicinity of the stacking position. A loading and stacking position is a position where the package group is about to be loaded and stacked, and an unloading stacking position is a stacking position where the package group on the pre-storage support plate 3001 needs to be unloaded. Furthermore, the length of at least one rod member used for forming the four-link mechanism 5001 in the mechanical arm is adjustable, so that the inclination angle of the pre-storage support plate 3001 is adjusted according to current working state.

In addition, the inclination angle of the pre-storage support plate 3001 may be accurately controlled according to the expansion and retraction quantity of the rod member, and continuous adjustment may be achieved.

The loading and unloading equipment in the present embodiment of the present disclosure may better meet the usage requirements under different working conditions, improve the working reliability of the loading and unloading equipment in a transfer process of the packages G, and improve the transfer efficiency of the packages G. Furthermore, the manner of changing the inclination angle of the support plate by adjusting the length of the rod member, relative to the manner of directly changing the inclination angle of the support plate by directly driving the joints, may realize larger load capacity, reduce the power demand for the driving portion, simplify structure, and reduce cost.

In some embodiments, the stacking device 5000 further includes a first driving portion 5002 of mechanical arm and a second driving portion 5003 of mechanical arm, and the first driving portion 5002 of mechanical arm is used for driving the four-link mechanism 5001 to swing, so that the pre-storage support plate 3001 may be controlled. The second driving portion 5003 of mechanical arm is used for driving the connecting rod with an adjustable length to extend and retract, so that the inclination angle of the pre-storage support plate 3001 may be controlled. For example, the expansion and retraction of the connecting rod with the adjustable length are implemented by the second driving portion 5003 of mechanical arm, the pre-storage support plate 3001 may be adjusted to a horizontal state, when the packages G are conveyed, the pre-storage support plate 3001 may be adjusted to an upward inclined state, and when the packages G are unloaded, the pre-storage support plate 3001 may be adjusted to a downward inclined state. The first driving portion 5002 of mechanical arm and the second driving portion 5003 of mechanical arm are independently controlled of each other. For example, the first driving portion 5002 of mechanical arm may adopt a motor or the like, and the second driving portion 5003 of mechanical arm may adopt a linear driving portion such as an electric lead screw, a pneumatic cylinder, or a hydraulic cylinder. When the electric lead screw is adopted, the connecting rod with the adjustable length may be precisely and stably driven to extend and retract, so as to adjust the inclination angle of the pre-storage support plate 3001 more smoothly.

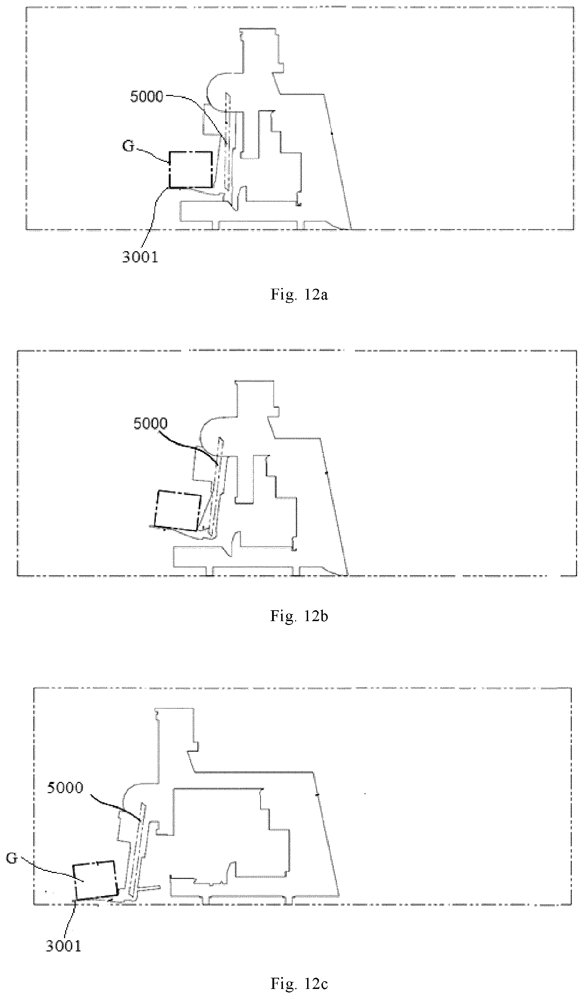

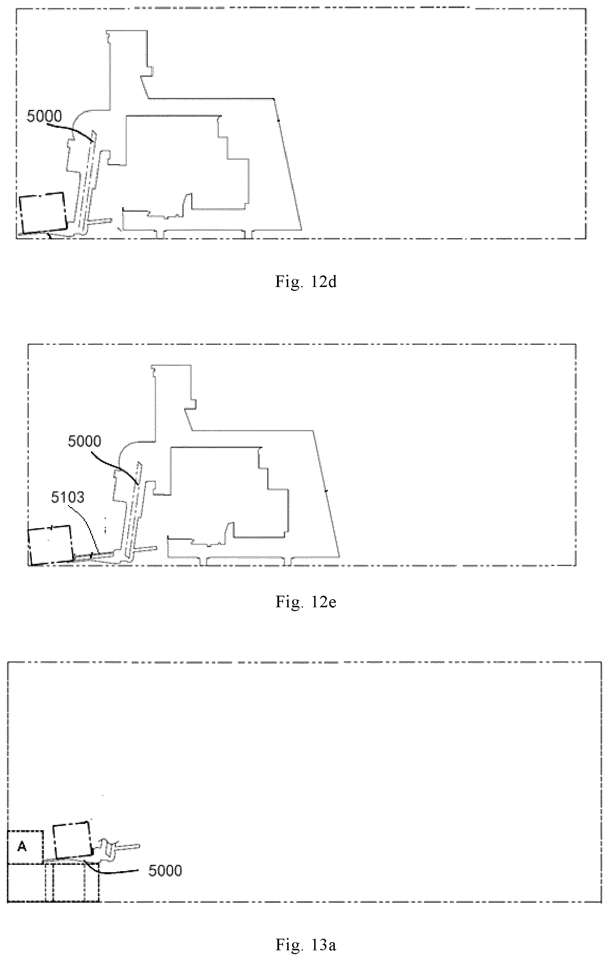

As shown in Fig. 12a to Fig. 12f, in some embodiments, the stacking work of the loading and unloading equipment includes, but is not limited to, the following manners: the pre-storage support plate 3001 is driven by the swing of the four-link mechanism 5001 to arrive at the stacking position; and the inclination angle of the pre-storage support plate 3001 is adjusted according to current working state through the expansion and retraction of the rod member with the adjustable length of the four-link mechanism 5001.

In some embodiments, the step of adjusting the inclination angle of the pre-storage support plate 3001 according to current working state includes, but is not limited to, the following working conditions: in a loading working state, the pre-storage support plate 3001 is adjusted to maintain the horizontal state; when the mechanical arm is in a horizontal moving or vertical moving carrying working state, the free end of the pre-storage support plate 3001 is tilted upward; and in an unloading working state, the free end of the pre-storage support plate 3001 is tilted downward.

In the present embodiment, the swing of the mechanical arm and the adjustment of the inclination angle of the pre-storage support plate 3001 may be automatically realized, and the two actions are independently controlled to improve the control reliability of the mechanical arm. The order of the swing of the mechanical arm and the adjustment of the inclination angle of the pre-storage support plate 3001 may be selected according to actual needs, and the inclination angle of the pre-storage support plate 3001 may be adjusted during the swinging of the mechanical arm, so that the transfer efficiency of the packages may be improved. In some embodiments, the length of the rod member in the four-link mechanism 5001 adjacent to the rack 5014 of the stacking device 5000 is adjustable, therefore, the adjustment range of the inclination angle of the pre-storage support plate 3001 may be increased as much as possible, and a larger driving force may be provided for the adjustment of the inclination angle of the pre-storage support plate 3001. For example, the four-link mechanism 5001 is a double-rocker mechanism, and the rod member adjacent to the rack 5014 of the stacking device 5000 is longer, in this way, it is convenient to dispose the second driving portion 5003 of mechanical arm, and it is also easy to achieve a larger adjustment range. Alternatively, the rod member in the four-link mechanism 5001 far from the rack 5014 of the stacking device 5000 may also be set as a structure with an adjustable length; or alternatively, any two or three rod members among the three rod members in the mechanical arm are set as the structures with adjustable lengths, and the inclination angle of the pre-storage support plate 3001 is adjusted by means of cooperative expansion and retraction of multiple rods.

In some embodiments, the four-link mechanism 5001 includes a first rod member 5011 of four-link mechanism and a second rod member 5012 of four-link mechanism, the first rod member 5011 of four-link mechanism and the second rod member 5012 of four-link mechanism are respectively disposed adjacent to the rack 5014 of the stacking device 5000. The first rod member 5011 of four-link mechanism is configured to rotate under the driving of an external force, so that the pre-storage support plate 3001 arrives at the vicinity of the stacking position, and the length of the second rod member 5012 of four-link mechanism is adjustable. The swing of the mechanical arm and the adjustment of the inclination angle of the pre-storage support plate 3001 are achieved by driving different rod members. Both actions may be independent in structure and control, and the working reliability of the mechanical arm is further improved.

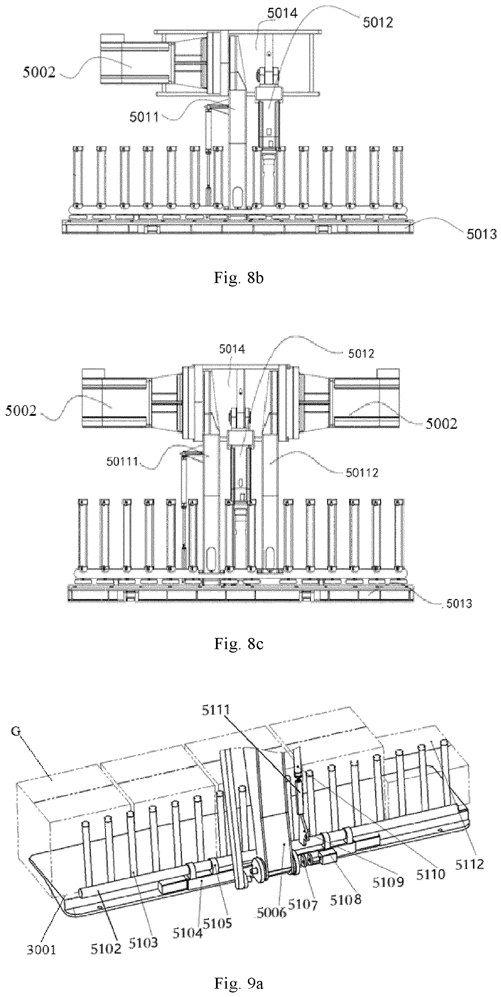

As shown in Fig. 8a and Fig. 8b, the first rod member 5011 of four-link mechanism is a single rod member spaced apart from the second rod member of four-link mechanism.

As shown in Fig. 8c, in some embodiments, the four-link mechanism 5001 includes a first rod member of four-link mechanism hinged with the rack 5014 and a second rod member 5012 of four-link mechanism hinged with the rack 5014. The length of the second rod member 5012 of four-link mechanism is adjustable. The first rod member of four-link mechanism includes a first rod 50111 of first rod member and a second rod 50112 of first rod member, which are disposed on the both sides of the second rod member of four-link mechanism at intervals and are hinged with the rack. The first rod member of four-link mechanism is set as a double-rod mode of the first rod 50111 of first rod member and the second rod 50112 of first rod member, and is disposed at the both ends of the second rod member 5012 with the adjustable length, so that the stress of the first rod member 5011 of four-link mechanism is more balanced, and the balance and the reliability of the stacking device are improved.

In some embodiments, the four-link mechanism 5001 further includes a third rod member 5013 of four-link mechanism, the third rod member 5013 of four-link mechanism is disposed opposite to the rack 5014 of the stacking device 5000, and the pre-storage support plate 3001 is disposed at the lower end of the third rod member 5013 of four-link mechanism and forms an L-shaped structure with the third rod member 5013 of four-link mechanism. In order to obtain a proper working angle for the pre-storage support plate 3001, the rack 5014 of the stacking device 5000 may be vertically disposed.

As shown in Fig. 8a, the first rod member 5011 of four-link mechanism is connected to the upper end of the third rod member 5013 of four-link mechanism, and the second rod member 5012 of four-link mechanism is connected to the lower end of the third rod member 5013 of four-link mechanism. The first rod member 5011 of four-link mechanism may be driven by the first driving portion 5002 of mechanical arm to swing, so as to change the position of the pre-storage support plate 3001 in the height direction, the second rod member 5012 of four-link mechanism is located below the first rod member 5011 of four-link mechanism and is at a position closer to the pre-storage support plate 3001, the second rod member 5012 of four-link mechanism may be driven by the second driving portion 5003 of mechanical arm to extend and retract, the inclination angle of the pre-storage support plate 3001 may be adjusted more directly and accurately, and at the arrival of the preset inclination angle, the expansion and retraction quantity of the second rod member 5012 of four-link mechanism may also be reduced.

Preferably, the four-link mechanism 5001 is of a parallel four-link structure. During the process of raising or lowering the mechanical arm, the angle of the pre-storage support plate 3001 may be kept unchanged, in this way, even after the angle of the pre-storage support plate 3001 is adjusted to a preset angle, the mechanical arm may also be raised or lowered, so that the working process of the loading and unloading equipment is more flexible.

As shown in Fig. 8a, the loading and unloading equipment further includes a second driving portion 5003 of mechanical arm for driving the rod member with the adjustable length to extend and retract, and the second driving portion 5003 of mechanical arm is disposed in series in the rod member with the adjustable length. In the present embodiment, the structure of the four-link mechanism 5001 may be simplified, the occupied space is reduced, moreover, the force applying direction of the second driving portion 5003 of mechanical arm is consistent with the rod length direction of the second rod member 5012 of four-link mechanism, therefore, the expansion and retraction of the second rod member 5012 of four-link mechanism are more stable, as a result, the angle adjustment of the pre-storage support plate 3001 is smoother, and it is less prone to stagnation.

In some embodiments, as shown in Fig. 9a to Fig. 9c, the stacking device 5000 includes a mechanical arm 5006 and a push-out device. The push-out device includes a package group push-out mechanism connected to the mechanical arm 5006. The pre-storage support plate 3001 is provided with a connecting end for connecting with the mechanical arm 5006, in the stacking working state, the package group push-out mechanism is rotatably disposed on one side of the connecting end of the pre-storage support plate 3001, is configured to rotate to a first position of package group push-out mechanism in a non-working state, so as to reduce the space occupied by itself on the side of the connecting end of the pre-storage support plate 3001, and is configured to rotate to a second position of package group push-out mechanism in the working state, so as to push out the packages G on the pre-storage support plate 3001 through its own action. The pre-storage support plate 3001 may be disposed at a bottom position of the mechanical arm 5006 of the loading and unloading equipment, and the pre-storage support plate 3001 is provided with a free end for outputting the packages G and a connecting end for connecting with the mechanical arm 5006.

The package group push-out mechanism may rotate on the outer side the connecting end of the pre-storage support plate 3001 without affecting the space for placing the packages G on the pre-storage support plate 3001. In the process of rotating from the second position of package group push-out mechanism to the first position of package group push-out mechanism, the included angle between the package group push-out mechanism and the pre-storage support plate 3001 is gradually reduced, so that the width of the projection of the package group push-out mechanism on the pre-storage support plate 3001 is gradually reduced from the connecting end to the outward extension direction, in this way, the space occupied on the side of the connecting end of the pre-storage support plate 3001 is reduced.

In the present embodiment, by switching the position of the package group push-out mechanism in different working states, the space occupied by the package group push-out mechanism on the side of the connecting end of the pre-storage support plate 3001 may be reduced, and on the basis of meeting the push-out function of the packages G, the space utilization rate around the connecting end of the pre-storage support plate 3001 is further improved, and then the loading and unloading equipment may adapt to working in a small space (such as a small carriage or container).

In some embodiments, as shown in Fig. 9a, the package group push-out mechanism may realize overall rotation. The position switching process of the package group push-out mechanism may be simplified and the control may be simplified by this arrangement manner; furthermore, the overall structural rigidity may be improved, stable rotation may be achieved, and the reliability of position switching may be improved; in addition, when multiple package push-out members 5103 are disposed in the package group push-out mechanism, the package push-out members 5103 may be rotated synchronously and are arranged neatly when at the second position of package group push-out mechanism, and the force application direction is consistent, which is beneficial to the simultaneous push-out of multiple packages G on the pre-storage support plate 3001.

In some embodiments, as shown in Fig. 9a, the package group push-out mechanism includes a push-out member connecting shaft 5102 and a plurality of package push-out members 5103. The push-out member connecting shaft 5102 is rotatably disposed at the connecting end of the pre-storage support plate 3001 along the length direction of the pre-storage support plate 3001, and is configured to drive the package group push-out mechanism to rotate by its own rotation. The plurality of package push-out members 5103 are disposed on the push-out member connecting shaft 5102 at intervals along the length direction of the push-out member connecting shaft 5102. The package group push-out mechanism has a simple and lightweight structure, which is beneficial to reducing the resistance caused by its own gravity during the rotation.

In order to install the push-out member connecting shaft 5102, pre-storage support plate brackets 5104 are disposed on the both sides of the mechanical arm 5006 at the connecting end of the pre-storage support plate 3001, the pre-storage support plate brackets 5104 may be of strip-shaped structures with rectangular cross sections, pre-storage support plate hinge seats 5105 are disposed at the tops of the pre-storage support plate brackets 5104 at intervals, the push-out member connecting shaft 5102 is supported by the pre-storage support plate hinge seats 5105, so as to achieve the rotatable connection of the push-out member connecting shaft 5102. The rotation axis of the package group push-out mechanism coincides with the axis of the push-out member connecting shaft 5102.

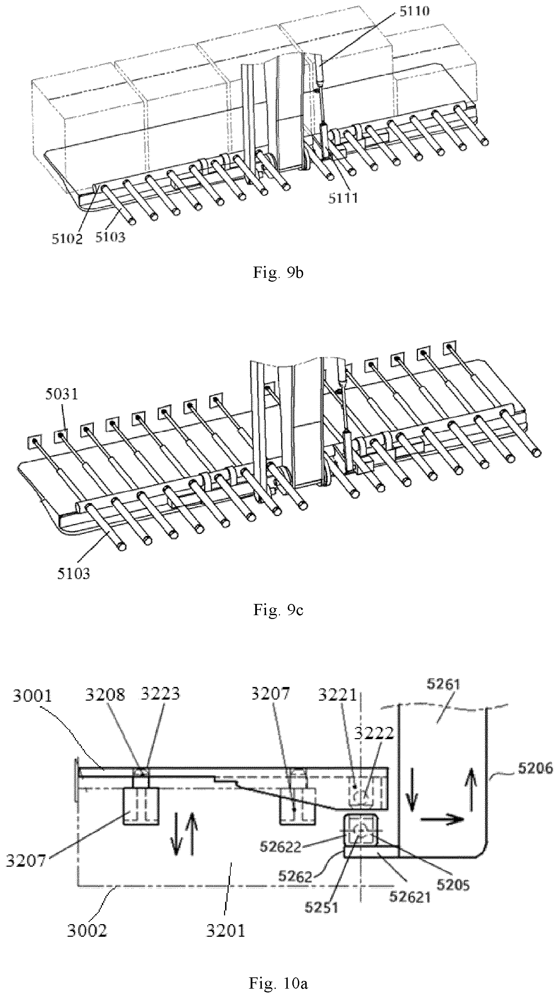

In some embodiments, as shown in Fig. 9a, at the first position of package group push-out mechanism, the package group push-out mechanism is perpendicular to the pre-storage support plate 3001, such as a vertical plane, in this way, the space occupied by the package group push-out mechanism at the side of the connecting end of the pre-storage support plate 3001 is minimized, so that the loading and unloading equipment better adapts to working in a small space, and the collision of the package group push-out mechanism may also be avoided during the operation. As shown in Fig. 9b, at the second position of package group push-out mechanism, the package group push-out mechanism is parallel to the pre-storage support plate 3001, such as a horizontal plane, in order to stably apply a pushing force to the packages G, and the power provided by the driving portion of the package group push-out mechanism may be fully utilized to maximize the pushing force.

Alternatively, the first position of package group push-out mechanism may be that the free end of the package group push-out mechanism inclines for a preset angle relative to the vertical plane, and the second position of package group push-out mechanism may be that the free end of the package group push-out mechanism is raised for a preset angle on the plane where the pre-storage support plate 3001 is located.

Further, the push-out device of the present disclosure further includes a limiting mechanism disposed on the pre-storage support plate 3001 and configured to lock the package group push-out mechanism with the pre-storage support plate 3001 when the package group push-out mechanism is at the second position of package group push-out mechanism. At this time, the package group push-out mechanism may be reliably maintained at the second position of package group push-out mechanism, which is conducive to stably applying the pushing force to the packages G and to preventing the shake during the force applying process.

In some embodiments, the package group push-out mechanism includes a plurality of package push-out members 5103 disposed at intervals along the length direction of the pre-storage support plate 3001, and the package push-out members 5103 are independently controlled of each other. The packages G of different specifications may be adapted to one or more package push-out members 5103, and the push-out opportunity of each package push-out member 5103 may be controlled at will according to the stacking sequence.

Fig. 9c shows a state in which the package push-out members 5103 extend out to push the packages G, the package push-out member 5103 may include a push rod and a driving member, the driving member is disposed at the rear end of the push rod to control the push rod to extend forward or retract backward. In order to enable the package push-out member 5103 to stably and uniformly apply the force to the packages G, a push plate 5131 of push-out member may be disposed at the front end of the package push-out member 5103. The driving member may be an electric lead screw, a pneumatic cylinder or a hydraulic cylinder or the like. According to the actual needs, different pushing power may be customized. For example, the light and small packages G use single-stage or multi-stage pneumatic cylinder power, and the heavy or large packages G use hydraulic power or lead screw and link mechanism power.

Such a package group push-out mechanism may push out the package G at any position in the length direction of the pre-storage support plate 3001, and may push out the entire row of packages G on the pre-storage support plate 3001. When the packages G need to be unloaded, the package push-out members 5103 corresponding to the packages G to be pushed out may be driven to extend out as needed. In the present embodiment, the entire row of packages G on the pre-storage support plate 3001 may be simultaneously pushed out or pushed out in multiple groups, so that the way of unloading the packages G is more flexible and diverse, so as to meet the different staking requirements of the packages G.

In some embodiments, the package push-out members 5103 may implement different push-out strokes. During unloading, according to the specifications of the packages G or the stacking target positions of the packages G, the package push-out members 5103 extend out in different strokes. The present embodiment may be applied to the push-out action of the packages G of different shapes and specifications, so that the way of unloading the packages G is more flexible and diverse, so as to meet the different staking requirements of the packages G.

In some embodiments, the push-out device of the present disclosure further includes a position switching mechanism configured to drive the package group push-out mechanism to move to switch between the first position of package group push-out mechanism and the second position of package group push-out mechanism. Such a push-out device may automatically drive the package group push-out mechanism to act upon receiving a control signal in the entire process of loading and unloading the packages G to realize position switching, so that the loading and unloading process is more intelligent.

As shown in Fig. 9a, the position switching mechanism is located above the connecting end of the pre-storage support plate 3001, and may make full use of the space above the connecting end of the pre-storage support plate 3001 without affecting the loading and unloading of the packages G.

Still referring to Fig. 9a, the package group push-out mechanism includes a push-out member connecting shaft 5102, the push-out member connecting shaft 5102 is rotatably disposed at the connecting end of the pre-storage support plate 3001 along the length direction of the pre-storage support plate 3001, and is configured to drive the package group push-out mechanism to rotate through its own rotation. The position switching mechanism includes a position switching connecting member 5109 and a connecting shaft driving portion 5110. The connecting shaft driving portion 5110 is a linear driving portion; the first end of the position switching connecting member 5109 is disposed at the push-out member connecting shaft 5102; the first end of the connecting shaft driving portion 5110 is rotatably connected to a mounting base away from the pre-storage support plate 3001, for example, may be connected to the mechanical arm 5006, the second end thereof is rotatably connected to the second end of the position switching connecting member 5109, the connecting shaft driving portion 5110 is configured to drive the push-out member connecting shaft 5102 to rotate through the position switching connecting member 5109 during the telescoping movement of the second end, and the force applying direction of the second end of the connecting shaft driving portion 5110 on the position switching connecting member 5109 deviates from the axis of the push-out member connecting shaft 5102.

Such a position switching mechanism may be conveniently disposed in a middle area of the push-out member connecting shaft 5102, so that the stress of the package group push-out mechanism is balanced during the rotation process, and the position switching mechanism may be disposed at a position close to the side face of the mechanical arm 5006. Moreover, by fixing the position switching connecting member 5109 on the push-out member connecting shaft 5102, it is conducive to causing the connecting shaft driving portion 5110 to apply a rotary driving force to the push-out member connecting shaft 5102, which is equivalent to adding a force arm, so that the power demands of the connecting shaft driving portion 5110 may be reduced. As shown in Fig. 9a, the push-out device of the present disclosure further includes a limiting mechanism, the limiting mechanism includes a limiting mechanism driving portion 5108 disposed at the connecting end of the pre-storage support plate 3001, and the limiting mechanism driving portion 5108 is a linear driving portion. A hole is formed in each position switching connecting member 5109, and the limiting mechanism driving portion 5108 is configured to cause an output end to pass through the hole in the position switching connecting member 5109 when the package group push-out mechanism is at the second position of package group push-out mechanism, so as to lock the push-out member connecting shaft 5102 with the pre-storage support plate 3001.

Further, the limiting mechanism further includes a limiting mechanism ear plate 5107 disposed at the connecting end of the pre-storage support plate 3001, a hole is formed in the limiting mechanism ear plate 5107, and the limiting mechanism driving portion 5108 is configured to cause the output end to pass through the holes in the limiting mechanism ear plate 5107 and the position switching connecting member 5109 when the package group push-out mechanism is at the second position of package group push-out mechanism, so as to lock the push-out member connecting shaft 5102 with the pre-storage support plate 3001. The hole in the limiting mechanism ear plate 5107 may guide the output end of the limiting mechanism driving portion 5108, so as to prevent the output end of the limiting mechanism driving portion 5108 from being applied with a greater shearing force when passing through or departing from the hole in the position switching connecting member 5109.

For example, the above-mentioned connecting shaft driving portion 5110 and the limiting mechanism driving portion 5108 may adopt electric lead screws, pneumatic cylinders or hydraulic cylinders or the like. Preferably, the connecting shaft driving portion 5110 adopts an electric lead screw to smoothly and accurately control the rotation position of the pushing mechanism, and the limiting mechanism driving portion 5108 adopts a cylinder to quickly and accurately lock the position of the package group push-out mechanism so as to shorten the locking and unlocking time.

Specifically, the limiting mechanism ear plate 5107 is disposed at the connecting end of the pre-storage support plate 3001, two limiting mechanism ear plates 5107 may be disposed at intervals along the length direction of the pre-storage support plate 3001, and when the connecting shaft driving portion 5110 pushes the position switching connecting member 5109 to swing so as to switch the package group push-out mechanism to the second position of package group push-out mechanism, the position switching connecting member 5109 is embedded between the two limiting mechanism ear plates 5107. The limiting mechanism driving portion 5108 is disposed along the length direction of the pre-storage support plate 3001 and is located on the outer side of the limiting mechanism ear plate 5107, a pin shaft may be disposed at the output end of the limiting mechanism driving portion 5108, the output end may drive the pin shaft to pass through the holes on the limiting mechanism ear plate 5107 and the position switching connecting member 5109 while extending out, so as to lock the push-out member connecting shaft 5102 with the pre-storage support plate 3001.

As shown in Fig. 9a and Fig. 9b, the position switching connecting member 5109 may adopt a plate-like strip-shaped structure, in order to conveniently lock the position switching connecting member 5109 with the limiting mechanism ear plate 5107, a triangular extension portion, for example, may be disposed on the outer side of the position switching connecting member 5109, a hole is formed in the extension portion, so that when the second end of the connecting shaft driving portion 5110 extends out to drive the position switching connecting member 5109 to rotate to the horizontal state, the extension portion may be embedded between the two limiting mechanism ear plates 5107.

As shown in Fig. 9a, when the package group push-out mechanism is at the first position of package group push-out mechanism, the output end of the connecting shaft driving portion 5110 retracts back to an extreme position. At the first position of package group push-out mechanism, the connecting shaft driving portion 5110 maintains the position. In order to set the extreme position, a head extension member 5111 may be connected to the output end of the connecting shaft driving portion 5110, and the connecting shaft driving portion 5110 is connected with the position switching connecting member 5109 through the head extension member 5111. When the output end of the connecting shaft driving portion 5110 retracts back, until the head extension member 5111 abuts on the fixing portion thereof, the package group push-out mechanism is driven to move to the first position of package group push-out mechanism.

Such a structure may limit the first position of package group push-out mechanism of the package group push-out mechanism, in order to prevent the package group push-out mechanism from further rotating inward to occupy the space for carrying the packages G above the pre-storage support plate 3001.

Therefore, the package group push-out mechanism in the present embodiment may solve the problem of insufficient horizontal or vertical space of the pre-storage support plate 3001, effectively utilize the space around the pre-storage support plate 3001 of the loading and unloading equipment, realize the state conversion of the package group push-out mechanism by rotation, and may simultaneously meet the dual requirements of function and space in different working states. In addition, the push-out device may be applicable to pushing out box-shaped or barrel-shaped packages G of any specification, and may also push out single or multiple packages G.

In some embodiments, the stacking device 5000 includes a first connecting mechanism of pre-storage support plate, which has a locked state of connecting the stacking device with the pre-storage support plate 3001 and an unlocked state of disconnecting the stacking device with the pre-storage support plate 3001; and/or, the pre-storage device 3000 includes a second connecting mechanism of pre-storage support plate, which has a locked state of connecting the pre-storage support plate 3001 with the pre-storage support structure 3002 and an unlocked state of disconnecting the pre-storage support plate 3001 with the pre-storage support structure 3002.

In some embodiments, the first connecting mechanism of pre-storage support plate and the second connecting mechanism of pre-storage support plate are independently disposed, and are configured in such a way that when one connecting mechanism needs to be switched to its locked state, the other connecting mechanism is in its unlocked state at first; or, in some other embodiments, the first connecting mechanism of pre-storage support plate and the second connecting mechanism of pre-storage support plate are disposed in a linkage manner, and are configured in such a way that when one connecting mechanism is switched to its locked state, the other connecting mechanism is in its unlocked state.

In some embodiments, as shown in Fig. 10a, the stacking device 5000 includes a mechanical arm 5006, the pre-storage support structure 3002 of the pre-storage device 3000 includes a pre-storage support plate bearing platform 3201, and the pre-storage support plate bearing platform 3201 is configured to place the pre-storage support plate 3001 when the pre-storage device 3000 needs to load the packages G; the loading and unloading equipment further includes a first connecting mechanism of pre-storage support plate, the first connecting mechanism of pre-storage support plate has an unlocked state of separating the mechanical arm 5006 from the pre-storage support plate 3001 and a locked state of connecting the mechanical arm 5006 with the pre-storage support plate 3001, and the first connecting mechanism of pre-storage support plate is configured to enter the unlocked state after waiting for the mechanical arm 5006 to drive the pre-storage support plate 3001 to move and place the pre-storage support plate 3001 on the pre-storage support plate bearing platform 3201, when the packages G need to be loaded; and to enter the locked state after the mechanical arm 5006 arrive at a position capable of being connected to the pre-storage support plate 3001, when the packages G need to be transferred.

The pre-storage support plate 3001 is detachably connected to the bottom end of the mechanical arm 5006, and the pre-storage support plate 3001 may be placed at the target position by swinging the mechanical arm 5006. The pre-storage support plate bearing platform 3201 is configured to place the pre-storage support plate 3001 when the packages G need to be loaded, in order to provide a suitable operation height for loading the packages G.

The first connecting mechanism of pre-storage support plate has the unlocked state of separating the mechanical arm 5006 from the pre-storage support plate 3001 and the locked state of connecting the mechanical arm 5006 with the pre-storage support plate 3001, and is configured to enter the unlocked state after waiting for the mechanical arm 5006 to drive the pre-storage support plate 3001 to move and place the pre-storage support plate 3001 on the pre-storage support plate bearing platform 3201, when the packages G need to be loaded, so as to separate the mechanical arm 5006 from the pre-storage support plate 3001; and the first connecting mechanism of pre-storage support plate enters the locked state after the mechanical arm 5006 arrive at the position capable of being connected to the pre-storage support plate 3001, when the packages G need to be transferred, so as to connect the mechanical arm 5006 with the pre-storage support plate 3001, and the mechanical arm 5006 with may drive the pre-storage support plate 3001 to move to transfer the packages G.

The stacking device 5000 in the present embodiment may realize the separation and connection of the mechanical arm 5006 and the pre-storage support plate 3001, when the packages G need to be loaded, after the pre-storage support plate 3001 is placed on the pre-storage support plate bearing platform 3201, the mechanical arm 5006 and the pre-storage support plate 3001 are in a separated state to prevent the force received by the pre-storage support plate 3001 in the process of loading the packages G from being transmitted to the mechanical arm 5006 to damage the same, and it is easy to accurately locate the pre-storage support plate 3001 and the pre-storage support plate bearing platform 3201; and when the packages G need to be transferred, the mechanical arm 5006 and the pre-storage support plate 3001 are in a connected state to drive the pre-storage support plate 3001 to transfer the packages G to the target station. This type of loading and unloading equipment may prevent the mechanical arm 5006 from being damaged in the process of loading the packages G on the basis of meeting the functional requirements of loading and unloading the packages G in a logistics process by switching the connection state of the pre-storage support plate 3001 and the mechanical arm 5006 in different working conditions, furthermore, by switching the state of the first connecting mechanism of pre-storage support plate, it is easy to quickly switch the pre-storage support plate 3001 and the mechanical arm 5006 in different connection states, so that the degree of automation of the assembly and disassembly of the support plate may be improved, and the assembly and disassembly efficiency may be improved.

In some embodiments, as shown in Fig. 10a, the loading and unloading equipment of the present disclosure further includes a second connecting mechanism of pre-storage support plate, which has an unlocked state of separating the pre-storage support plate 3001 from the pre-storage support plate bearing platform 3201 and a locked state of connecting the pre-storage support plate 3001 with the pre-storage support plate bearing platform 3201, and is configured to enter the locked state after the pre-storage support plate 3001 is placed on the pre-storage support plate bearing platform 3201, when the packages G need to be loaded, so as to locate the pre-storage support plate 3001 to prevent the pre-storage support plate 3001 from deviating or skewing during the loading of the packages G; and the second connecting mechanism of pre-storage support plate is configured to enter the unlocked state when the packages G need to be transferred, so that the pre-storage support plate 3001 is separated from the pre-storage support plate bearing platform 3201, and the mechanical arm 5006 may smoothly take away the pre-storage support plate 3001 carrying the packages G.

In the present embodiment, by cooperatively using the first connecting mechanism of pre-storage support plate and the second connecting mechanism of pre-storage support plate, the shortcomings of the support plate itself, such as low manufacturing accuracy and difficult assembly and disassembly due to the heavy weight may be overcome, and automatic positioning and automatic and fast assembly and disassembly of the support plate of the loading and unloading equipment may be realized, which is conducive to the realization of automatic logistics.

There are two advantages to add the second connecting mechanism of pre-storage support plate. On one hand, when the packages G need to be loaded, the placement stability of the pre-storage support plate 3001 when loading the packages G may be improved, so that the packages G may be neatly placed on the pre-storage support plate 3001, and the mechanical arm 5006 may be prevented from being damaged. On the other hand, when the packages G need to be transferred, due to the positioning effect of the second connecting mechanism of pre-storage support plate on the pre-storage support plate 3001, the mechanical arm 5006 may smoothly arrive at the position capable of being connected to the pre-storage support plate 3001 and take away the pre-storage support plate 3001 carrying the packages.

In some embodiments, the loading and unloading equipment of the present disclosure further includes a control component, such as a controller, which is configured to control the movement of the mechanical arm 5006, and to control at least one of the first connecting mechanism of pre-storage support plate and the second connecting mechanism of pre-storage support plate to switch the state.

By disposing the control component, the degree of automation of the loading and unloading process may be further improved, the online rapid positioning of the support plate and the automatic locking connection with the mechanical arm 5006 may be realized, and by pre-storing the movement path of the mechanical arm 5006 and the switching opportunity of the connecting mechanisms in the control component, the entire loading and unloading process may be comprehensively controlled by the control component to automatically switch the state of the first connecting mechanism of pre-storage support plate and the second connecting mechanism of pre-storage support plate in under different working states, thereby further improving the degree of automation of the assembly and disassembly of the support plate, therefore, the working efficiency of the loading and unloading process is improved. In the subsequent embodiments, the automatic control by the control component is taken as an example for description.

Alternatively, different buttons may also be disposed on the loading and unloading equipment, for example, to respectively control the movement of the mechanical arm 5006 and the state switching of the connecting mechanisms, and when a certain function needs to be performed in different working states, the corresponding buttons may be operated.

In some embodiments, the first connecting mechanism of pre-storage support plate and the second connecting mechanism of pre-storage support plate are structurally independent of each other, and are configured in such a manner that when one connecting mechanism needs to be switched to the locked state, the other connecting mechanism is in the locked state at first.

The opportunity of switching the states of the two connecting mechanisms may be controlled automatically by the control component, or may be realized by an operator by triggering the button. The two connecting mechanisms are in opposite states, which may not only ensure the smooth loading and unloading operation, but also prevent the mutual influence of the connection of the mechanical arm 5006 with the pre-storage support plate 3001 and the positioning of the pre-storage support plate 3001 on the pre-storage support plate bearing platform 3201, reduce the requirements for the positioning accuracy during the assembly and disassembly of the pre-storage support plate 3001, and prevent the damage to the mechanical arm 5006.

In the present embodiment, the two connecting mechanisms are disposed independently, which may improve the reliability of the structure, for example, when the second connecting mechanism of pre-storage support plate fails and cannot switch to the locked state, on the basis of ensuring the positioning of the pre-storage support plate 3001 on the pre-storage support plate bearing platform 3201 by other measures, the packages G may still be loaded; and when the first connecting mechanism of pre-storage support plate fails and cannot switch to the unlocked state, the packages G may still be transferred, thereby ensuring smooth operation of the loading and unloading equipment. In addition, the two connecting mechanisms are in the opposite states by the control component, therefore the control is flexible, and it is convenient to set a delay to adjust the time interval between various action links.

In some other embodiments, a linkage mechanism is disposed between the first connecting mechanism of pre-storage support plate and the second connecting mechanism of pre-storage support plate, and is configured to perform mechanical linkage when one connecting mechanism switches the state to trigger the other connecting mechanism to switch to an opposite state, and the two connecting mechanisms operate synchronously.

For example, when the first connecting mechanism of pre-storage support plate needs to be switched to the locked state to connect the pre-storage support plate 3001 with the mechanical arm 5006, when the control component drives the first connecting mechanism of pre-storage support plate to move, the linkage mechanism drives the second connecting mechanism of pre-storage support plate to act to switch the second connecting mechanism of pre-storage support plate to the unlocked state, so that the pre-storage support plate 3001 is separated from the pre-storage support plate bearing platform 3201 to ensure that the packages G may be normally transferred subsequently.

When the second connecting mechanism of pre-storage support plate needs to be switched to the locked state to connect the pre-storage support plate 3001 with the mechanical arm 5006, when the control component drives the second connecting mechanism of pre-storage support plate to act, the linkage mechanism drives the first connecting mechanism of pre-storage support plate to act to switch the first connecting mechanism of pre-storage support plate to the unlocked state, so that the pre-storage support plate 3001 is separated from the mechanical arm 5006, so as to prevent the stress of the pre-storage support plate 3001 from being transmitted to the mechanical arm 5006 in the process of positioning the pre-storage support plate 3001 or loading the packages G.

The present embodiment may simplify the control link, even if a control error occurs or the operator negligently misses the unlocking link, when one connecting mechanism needs to be switched to the locked state, the other connecting mechanism may be reliably unlocked to prevent the damage to the mechanical arm 5006.

In some embodiments, the control component is configured to drive the mechanical arm 5006 to move away from the pre-storage support plate 3001 after the pre-storage support plate 3001 is placed on the pre-storage support plate bearing platform 3201. After the pre-storage support plate 3001 is placed on the pre-storage support plate bearing platform 3201, the pre-storage support plate 3001 needs to be positioned, in the process of positioning the pre-storage support plate 3001, or in the process of loading the packages G on the pre-storage support plate 3001, if the mechanical arm 5006 is still in contact with the pre-storage support plate 3001, the stress of the pre-storage support plate 3001 is transmitted to the mechanical arm 5006, and the mechanical arm 5006 leaves the pre-storage support plate 3001 in the loading working state, which may avoid the damage to the mechanical arm 5006 due to inaccurate positioning or the stress in the loading and unloading process.

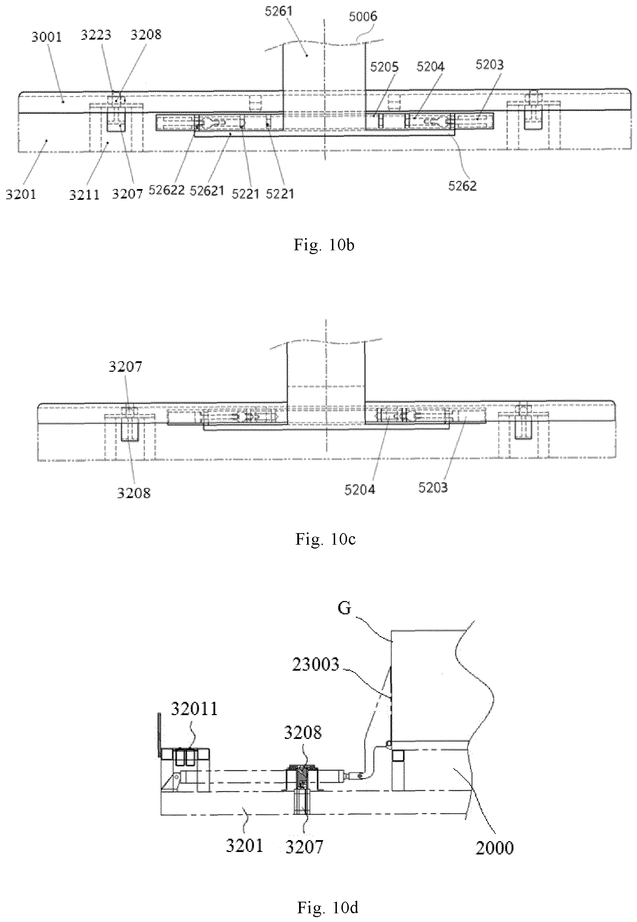

As shown in Fig. 10b and Fig. 10c, the first connecting mechanisms of pre-storage support plate are disposed on the left and right sides of the mechanical arm 5006. Because the pre-storage support plate 3001 has a larger weight after loading the packages G, this connection mode of the mechanical arm 5006 and the pre-storage support plate 3001 may increase the connection stiffness, so that the stress of the mechanical arm 5006 is more balanced, the working reliability of the mechanical arm 5006 is improved, and the phenomenon that the pre-storage support plate 3001 tilts left and right is prevented.

The first connecting mechanism of pre-storage support plate and the second connecting mechanism of pre-storage support plate mentioned in the above embodiments will be described in detail below.

In some embodiments, the first connecting mechanism of pre-storage support plate includes: a plate arm connection component driving portion 5203, a first plate arm connection positioning portion, and a second plate arm connection positioning portion, wherein the first plate arm connection positioning portion is disposed on the pre-storage support plate 3001, and the second plate arm connection positioning portion is disposed at the output end of the plate arm connection component driving portion 5203. The plate arm connection component driving portion 5203 is configured to cause the first plate arm connection positioning portion and the second plate arm connection positioning portion to engage or disengage through the movement of its own output end, in order to realize the connection and disconnection of the mechanical arm 5006 and the pre-storage support plate 3001.

As shown in Fig. 10a, the first plate arm connection positioning portion is a first plate arm connection hole 3222 formed in the pre-storage support plate 3001, the second plate arm connection positioning portion is a first plate arm connection pin shaft 5204, and the plate arm connection component driving portion 5203 is configured to embed the first plate arm connection pin shaft 5204 into the first plate arm connection hole 3222 or disengage the first plate arm connection pin shaft 5204 from the first plate arm connection hole 3222 through the movement of its own output end, in order to realize the connection and disconnection of the mechanical arm 5006 and the pre-storage support plate 3001. For example, the plate arm connection component driving portion 5203 may be a linear driving mechanism, such as a pneumatic cylinder, a hydraulic rod, or an electric lead screw. Such a connection mode has a simple structure and may quickly switch between the locked state and the unlocked state.

Due to the relatively small thickness of the pre-storage support plate 3001, in order to conveniently form the first plate arm connection hole 3222, as shown in Fig. 10c, a plate arm connection ear plate 3221 may be disposed at the bottom of the pre-storage support plate 3001, the plate arm connection ear plate 3221 is disposed perpendicular to the bottom of the pre-storage support plate 3001, and the first plate arm connection hole 3222 is formed in the plate arm connection ear plate 3221. Due to this setting manner, the main structure of the pre-storage support plate 3001 is not affected, and the weight of the pre-storage support plate 3001 may also be maintained substantially unchanged. In the manner of connecting the mechanical arm 5006 with the bottom of the pre-storage support plate 3001, the connection part does not occupy the space at the top of the pre-storage support plate 3001, after the packages G are marshalled by the loading and unloading equipment on a downstream support plate, the packages may be smoothly pushed onto the pre-storage support plate 3001 for loading and unloading, the number of packages G handled at a time may be increased, and the requirements for the placement positions when the packages G are marshalled are reduced.

In combination with Fig. 10a and Fig. 10b, the mechanical arm 5006 includes a mechanical arm main body portion 5261 and a mechanical arm connecting portion 5262, the mechanical arm connecting portion 5262 is disposed at the bottom end of the mechanical arm main body portion 5261, a plate arm connecting pin shaft bracket 5205 is disposed on the mechanical arm connecting portion 5262, and a plate wall connection third hole 5251 is formed in the plate arm connecting pin shaft bracket 5205; the plate arm connection component driving portion 5203 is disposed on the mechanical arm connecting portion 5262, and is configured to, after the mechanical arm 5006 moves from the lower side of the pre-storage support plate 3001 to make the plate arm connecting pin shaft bracket 5205 align with the plate arm connection ear plate 3221, embed the first plate arm connection pin shaft 5204 into the first plate arm connection hole 3222 and the plate wall connection third hole 5251, so as to realize the connection of the mechanical arm 5006 and the pre-storage support plate 3001.

Specifically, each plate arm connecting pin shaft bracket 5205 may be correspondingly provided with two plate arm connection ear plates 3221, the two plate arm connection ear plates 3221 are spaced apart along the length direction of the pre-storage support plate 3001, and the plate arm connecting pin shaft bracket 5205 may move upward to the space between the two plate arm connection ear plates 3221, so that the first plate arm connection pin shaft 5204 is embedded into the first plate arm connection hole 3222 and the plate wall connection third hole 5251.

By disposing the mechanical arm connecting portion 5262, the mechanical arm 5006 may have a portion connected to the pre-storage support plate 3001, when the length of the pre-storage support plate 3001 is relatively large, the mechanical arm connecting portion 5262 may be provided to ensure a relatively large distance span for the position connected to the pre-storage support plate 3001, so that the stability and reliability of the connection are improved. In addition, by disposing the plate arm connecting pin shaft bracket 5205, the firmness of the connection between the pre-storage support plate 3001 and the mechanical arm 5006 may be improved.

On this basis, the mechanical arm 5006 is configured to relive the cooperation of the plate arm connecting pin shaft bracket 5205 with the plate arm connection ear plate 3221 by downward movement, after the pre-storage support plate 3001 is placed on the pre-storage support plate bearing platform 3201, in order to leave the pre-storage support plate 3001. In the embodiment in which the movement of the mechanical arm 5006 is automatically controlled by the control component, the control component is configured to drive the mechanical arm 5006 to move downward to relive the cooperation of the plate arm connecting pin shaft bracket 5205 with the plate arm connection ear plate 3221, after the pre-storage support plate 3001 is placed on the pre-storage support plate bearing platform 3201, in order to make the mechanical arm 5006 leave the pre-storage support plate 3001, therefore the collision of the mechanical arm 5006 in a lowering process may be avoided to protect the mechanical arm 5006.

As shown in Fig. 10a to Fig. 10c, the mechanical arm connecting portion 5262 includes an extension plate 52621 and two mounting plates 52622, the extension plate 52621 is disposed at the bottom end of the mechanical arm main body portion 5261 and extends to the left and right sides of the mechanical arm main body portion 5261, and in order to increase the strength of the mechanical arm 5006, the extension plate 52621 may extend to a quarter of the distance from the free end of the pre-storage support plate 3001 on one side. The two mounting plates 52622 are vertically disposed at the left and right side ends of the extension plate 52621, respectively, the plate arm connection ear plates 3221 are located on the inner sides of the mounting plates 52622, and the plate arm connecting pin shaft bracket 5205 is located between the mounting plates 52622 and the plate arm connection ear plates 3221. The plate arm connection component driving portion 5203 is disposed on the outer side wall of the mounting plate 52622, and is configured to embed into the first plate arm connection hole 3222 and the plate wall connection third hole 5251, when its own output end horizontally moves inward.

In some embodiments, as shown in Fig. 10a, a plate platform connection installation position 3211 is disposed in the pre-storage support plate bearing platform 3201, and the second connecting mechanism of pre-storage support plate includes: a plate platform connection component driving portion 3207, a first plate platform connection positioning portion and a second plate platform connection positioning portion. The plate platform connection component driving portion 3207 is disposed in the plate platform connection installation position 3211, the first plate platform connection positioning portion is disposed on the pre-storage support plate 3001, and the second plate platform connection positioning portion is disposed at the output end of the plate platform connection component driving portion 3207. The plate platform connection component driving portion 3207 is configured to engage or disengage the first plate platform connection positioning portion and the second plate platform connection positioning portion through the movement of its own output end, in order to realize the connection and disconnection of the pre-storage support plate 3001 and the pre-storage support plate bearing platform 3201.

As shown in Fig. 10a and Fig. 10b, the first plate platform connection positioning portion is a second plate platform connection hole 3223, the second plate platform connection positioning portion is a second plate platform connection pin shaft 3208, and the plate platform connection component driving portion 3207 is configured to embed the second plate platform connection pin shaft 3208 into the second plate platform connection hole 3223 or disengage the second plate platform connection pin shaft 3208 from the second plate platform connection hole 3223 through the movement of its own output end, in order to realize the connection and disconnection of the pre-storage support plate 3001 and the pre-storage support plate bearing platform 3201. For example, the plate platform connection component driving portion 3207 may be a linear driving mechanism, such as a pneumatic cylinder, a hydraulic rod, or an electric lead screw. This connection mode has a simple structure and may quickly switch between the connection state and the disconnection state.

Specifically, the plate platform connection installation position 3211 may be a vertical hole position formed from the bottom of the pre-storage support plate bearing platform 3201, so as to mount the plate platform connection component driving portion 3207 from bottom to top, the output end of the plate platform connection component driving portion 3207 is disposed upward, and the second plate platform connection hole 3223 is vertically formed in the a position corresponding to the output end of the plate platform connection component driving portion 3207 on the pre-storage support plate 3001. In order to improve the firmness of positioning the pre-storage support plate 3001, four groups of first connecting mechanisms of pre-storage support plate may be disposed between the pre-storage support plate 3001 and the pre-storage support plate bearing platform 3201.

In some embodiments, the first plate arm connection positioning portion includes a pre-storage support plate connecting pin, which is disposed at the end of the pre-storage support plate 3001;
the second plate arm connection positioning portion includes at least one movable connecting pin slot, and the connecting pin slot is configured to cooperate with a support plate connecting pin to clamp the pre-storage support plate connecting pin; and
the plate arm connection component driving portion includes a first connecting mechanism locking device, which is configured to lock the connecting pin slot on the pre-storage support plate connecting pin.

In some embodiments, the first connecting mechanism locking device includes a first connecting mechanism power cylinder, and a first connecting mechanism locking block connected between the first connecting mechanism power cylinder and the movable connecting pin slot.

The first connecting mechanism locking block is driven by the first connecting mechanism power cylinder to press the connecting pin slot on the pre-storage support plate connecting pin, so that the first connecting mechanism of pre-storage support plate is in the locked state, or, disengage the connecting pin slot from the pre-storage support plate connecting pin, so that the first connecting mechanism of pre-storage support plate is in the unlocked state.

The first connecting mechanism of pre-storage support plate and the second connecting mechanism of pre-storage support plate according to an embodiment and the action processes thereof are illustrated schematically below through the embodiments in Fig. 10d to Fig. 10h.

As shown in Fig. 10d, the pre-storage support plate bearing platform 3201 of the pre-storage device 3000 waits for the mechanical arm 5006 to unload the pre-storage support plate 3001. In the current state, the baffle 23003 of the marshalling-pre-storage intermediate mechanism 23000 is in the vertical state to block the packages G on the marshalling device 2000. There are groups or rows of universal ball bearings 32011 on the pre-storage support plate bearing platform 3201, which may effectively reduce the friction and impact when the pre-storage support plate 3001 is taken away from and placed on the pre-storage support plate bearing platform 3201, at the same time, the reaction force to the mechanical arm 5006 may also be reduced, and the driving component of the mechanical arm 5006 may be protected. The pre-storage support plate bearing platform 3201 further includes a plate platform connection component driving portion 3207 and a second plate platform connection pin shaft 3208. The plate platform connection component driving portion 3207 may be a pneumatic cylinder, a hydraulic cylinder, an elevator or other linear driving devices. The second plate platform connection pin shaft 3208 is connected to the plate platform connection component driving portion 3207 for positioning and connecting with the pre-storage support plate 3001, and two or more second plate platform connection pin shafts 3208 may be provided.

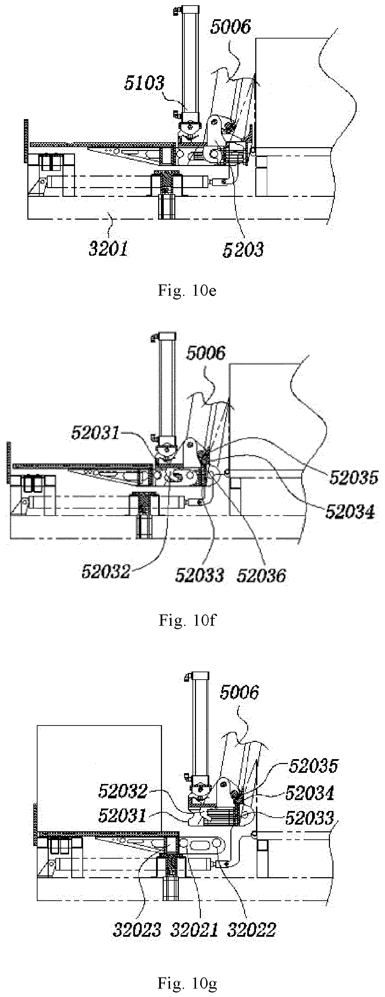

As shown in Fig. 10e, the stacking device 5000 includes a mechanical arm 5006. The pre-storage support plate 3001 may be connected to the mechanical arm 5006. Above the pre-storage support plate bearing platform 3201, it is preparing to separate the pre-storage support plate 3001 and place the same on the pre-storage support plate bearing platform 3201 through the first connecting mechanism of pre-storage support plate. The stacking device 5000 conveys the pre-storage support plate 3001 to a height of about 5 mm from the placement plane above the pre-storage support plate bearing platform 3201 through the movement of its mechanical arm 5006. At this time, the plate platform connection component driving portion 3207 is in a retraction state, and the second plate platform connection pin shaft 3208 is also in the retraction state, and is not positioned in cooperation with the pre-storage support plate 3001.

In some embodiments, the first plate arm connection positioning portion includes a pre-storage support plate connecting pin disposed at the end of the pre-storage support plate; the second plate arm connection positioning portion includes at least one movable connecting pin slot, and the connecting pin slot is configured to cooperate with the support plate connecting pin to clamp the pre-storage support plate connecting pin; and the plate arm connection component driving portion includes a first connecting mechanism locking device, configured to lock the connecting pin slot on the pre-storage support plate connecting pin.

In some embodiments, the first connecting mechanism locking device includes a first connecting mechanism power cylinder, and a first connecting mechanism locking block connected between the first connecting mechanism power cylinder and the movable connecting pin slot; and the first connecting mechanism locking block is driven by the first connecting mechanism power cylinder to press the connecting pin slot on the pre-storage support plate connecting pin, so that the first connecting mechanism of pre-storage support plate is in the locked state, or, disengage the connecting pin slot from the pre-storage support plate connecting pin, so that the first connecting mechanism of pre-storage support plate is in the unlocked state.

As shown in Fig. 10f, after the mechanical arm 5006 approaches the pre-storage support plate bearing platform 3201, the first connecting mechanism of pre-storage support plate is unlocked, the mechanical arm 5006 is separated from the pre-storage support plate 3001, and then the mechanical arm 5006 moves away from the pre-storage support plate and moves upward. In the present embodiment, the first connecting mechanism of pre-storage support plate includes a fixed hook 52031, the movable connecting pin slot includes a movable hook 52032, the first connecting mechanism power cylinder is a wedge block push cylinder 52033, a movable hook runner 52035 is provided, the first connecting mechanism locking block includes a wedge block 52034, the first connecting mechanism of pre-storage support plate further includes a flat plate roller pin row component 52036, and the pre-storage support plate connecting pin includes a second connecting pin 52022. When the wedge block push cylinder 52033 retracts back, the wedge block 52034 moves and acts on the movable hook runner 52035, so that the movable hook 52032 connected to the movable hook runner 52035 rotates, and then the second connecting pin 52022 on the pre-storage support plate is separated from the movable hook 52032. After the separation, the second connecting pin 52022 and the movable hook 52032 lose the locking force. The own balance of the pre-storage support plate is broken, the fixed hook 52031 and the first connecting pin 52021 also lose the locking force, and the pre-storage support plate falls on the pre-storage support plate bearing platform 5201. When the wedge block 52034 moves, the wedge block 52034 generates friction with a seat plate of the fixed wedge block push cylinder 52033, and the flat plate roller pin row component 52036 disposed therebetween may reduce the friction and improve the movement smoothness of the wedge block 52034.

As shown in Fig. 10g, the plate platform connection component driving portion 5207 drives the second plate platform connection pin shaft 5208 to cooperate with a pre-storage support plate positioning hole 52023 on the pre-storage support plate, so that the pre-storage support plate is accurately positioned on the pre-storage support plate bearing platform 5201.

The processes shown in Fig. 10d to Fig. 10g illustrate the separation of the pre-storage support plate from the stacking device 5000 and the connection with the pre-storage support plate bearing platform 5201 by unlocking the first connecting mechanism of pre-storage support plate and locking the second connecting mechanism of pre-storage support plate.

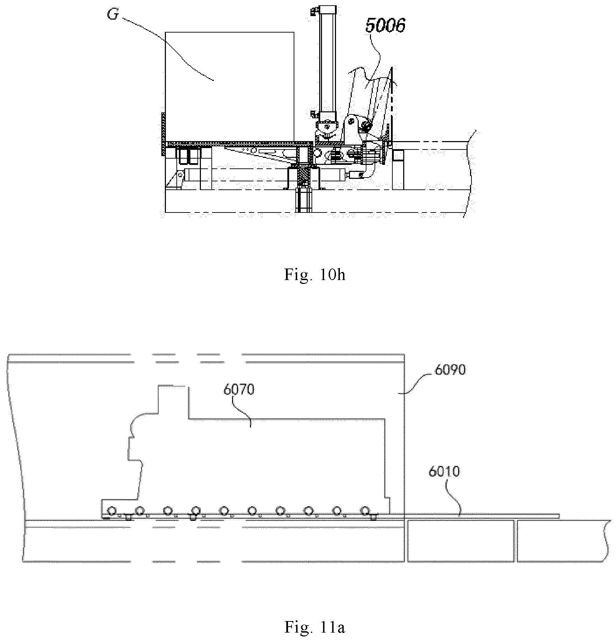

As shown in Fig. 10h, the stacking device 5000 moves to the upper side of the pre-storage support plate, and then the plate platform connection component driving portion 5207 of the second connecting mechanism of pre-storage support plate drives the second plate platform connection pin shaft 5208 to separate from the pre-storage support plate positioning hole 52023 on the pre-storage support plate. Then, the fixed hook 52031 and the movable hook 52032 of the first connecting mechanism of pre-storage support plate are moved between the first connecting pin 52021 and the second connecting pin 52022 of the pre-storage support plate, and then the fixed hook 52031 is horizontally moved to a position cooperating with the first connecting pin 52021 of the pre-storage support plate. During the horizontal movement, when the fixed hook 52031 is in contact with the first connecting pin 52021, the pre-storage support plate may slide slightly. However, since the pre-storage support plate bearing platform 5201 has the universal ball bearings 52011 in groups (columns) to support the pre-storage support plate, the friction during the sliding may be reduced. The acting force between the first connecting pin 52021 and the fixing hook 52031 is relatively small, so that the acting force of the driving device of the stacking device 5000 indirectly connected to the fixed hook 52031 is also relatively small, which is beneficial to protecting the driving device of the stacking device 5000.

As shown in Fig. 10h, the stacking device 5000 connects the pre-storage support plate with the mechanical arm 5006 through the first connecting mechanism of pre-storage support plate. Then the mechanical arm 5006 moves the pre-storage support plate to the stacking position to unload and stack the packages. The connection between the pre-storage support plate and the mechanical arm 5006 is achieved by the following manner: firstly, the wedge block push cylinder 52033 of the first connecting mechanism of pre-storage support plate extends out, the wedge block 52034 moves and acts on the movable hook runner 52035 to drive the movable hook 52032 connected to the movable hook runner 52035 to rotate, so that the second connecting pin 52022 of the pre-storage support plate cooperates with the movable hook 52032. After the cooperation, the second connecting pin 52022 and the movable hook 52032 are locked because the wedge block 52034 is locked with the movable hook runner 52035. At the same time, the first connecting pin 52021 and the fixing hook 52033 are also locked. The pre-storage support plate is firmly locked and connected to the mechanical arm 5006.

In some embodiments, the loading and unloading equipment further includes a traveling device for carrying and moving the loading and unloading equipment. The traveling device may include a crawler-type walking mechanism as shown in Fig. 1, or a wheel-type walking mechanism not shown in the figure, or a track-type travelling device not shown in the figure. The track-type travelling device may have a long track at the bottom, the main body of the loading and unloading equipment is disposed above the track, the loading and unloading equipment travels along the track, and the track-type travelling device may have a good positioning function on the loading and unloading equipment.

In some embodiments, the traveling device includes a crawler-type walking mechanism, and the loading and unloading equipment adjusts the walking posture of the loading and unloading equipment by adjusting the speed difference of the crawlers on the both sides of the crawler-type walking mechanism, or, the traveling device includes a wheel-type walking mechanism, and the loading and unloading equipment adjusts the walking posture of the loading and unloading equipment by adjusting the speed difference of wheel sets on the both sides of the wheel-type walking mechanism.

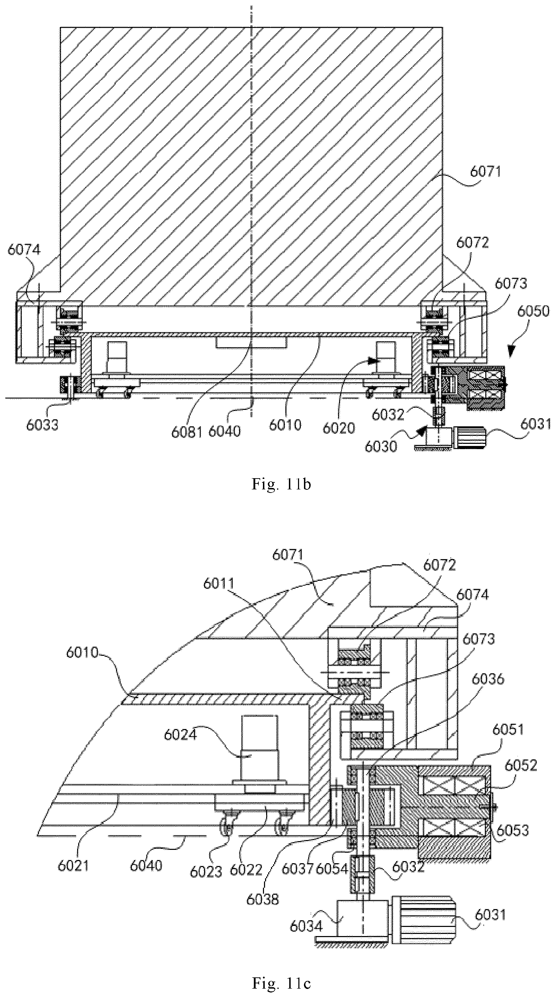

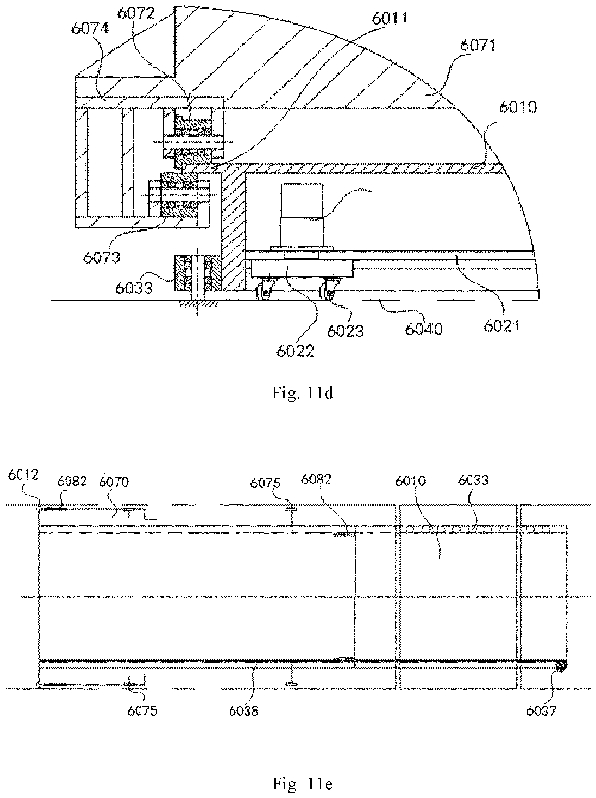

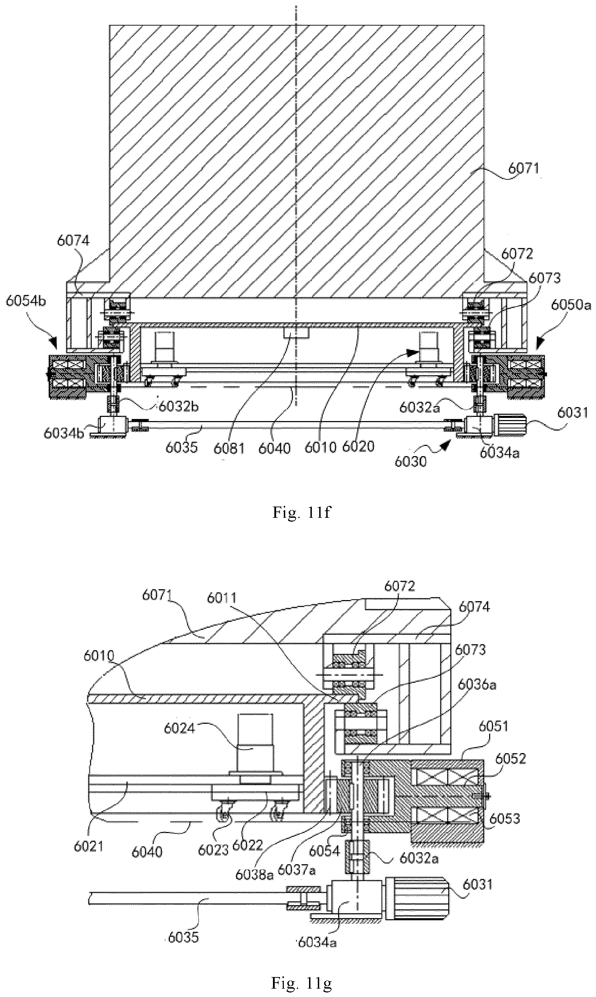

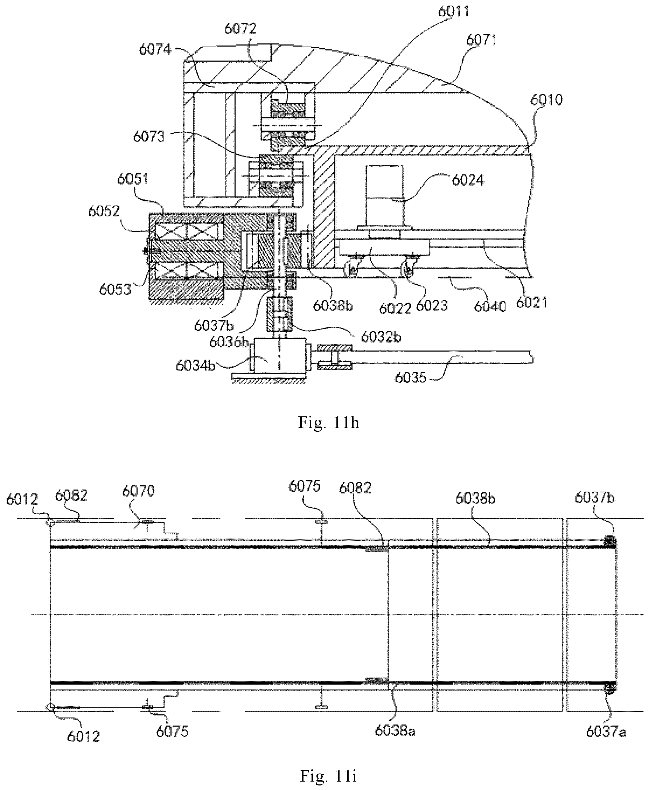

As shown in Fig. 11 a, it is a schematic diagram of an application scenario of some embodiments of the loading and unloading equipment according to the present disclosure. Referring to Fig. 11 a, in some embodiments, the loading and unloading equipment includes a track-type walking mechanism and a loading and unloading main body 6070 loaded above the track-type walking mechanism. The loading and unloading main body 6070 may include devices such as the stacking device 5000, the marshalling device 2000, the pre-storage device 3000 and the rack 1000 in the foregoing embodiments. The loading and unloading main body 6070 may be connected with a travelling track 6010 of the track-type walking mechanism, and may move along the length direction of the travelling track 6010.

In Fig. 11a, the travelling track 6010 in the track-type walking mechanism may move to the inside of a space to be loaded and unloaded (for example, a carriage 6090), and may also move from the inside of the space to the outside of the space, or move in the passage. In this way, the loading and unloading main body 6070 may move along the travelling track 6010 and may be guided by the travelling track 6010, so that even entering the relatively narrow loading and unloading space, the loading and unloading main body may smoothly move under the guidance of the travelling track 6010, thus reducing or avoiding the collision of the loading and unloading main body 6070 with the side wall of the space.

Referring to Fig. 11b to Fig. 11e, in some embodiments, the track-type walking mechanism includes a travelling track 6010, a track support mechanism 6020 and a track driving mechanism 6030. The track support mechanism 6020 may be disposed below the travelling track 6010 and supported between the travelling track 6010 and a track reference surface 6040. The travelling track 6010 is preferably a platform-type track, that is, the travelling track 6010 is a continuous top platform along the width direction, which may achieve a good supporting effect on the loading and unloading main body 6070.

In Fig. 11b, the loading and unloading main body 6070 includes a machine body 6071 of loading and unloading main body and loading and unloading main body walking wheels 6072 in pairs. A preset gap may be formed between the bottom of the machine body 6071 and the top platform of the travelling track 6010. In some other embodiments, the bottom of the machine body 6071 may also be supported by the top platform of the travelling track 6010 at a larger contact area. The loading and unloading main body walking wheels 6072 are disposed on the both sides below the machine body 6071, and may walk on the travelling track 6010.

Referring to the enlarged drawings shown in Fig. 11c and Fig. 11d, the top platform of the platform-type track may be provided with track flanges 6011 on left and right sides, the loading and unloading main body walking wheel 6072 may be configured as a rotating body with steps, that is, the steps with smaller radiuses are pressed on the track flanges 6011, and the steps with greater radiuses limit the sides of the track flanges 6011, so as to prevent the machine body 6071 from exceeding the travelling track while moving on the travelling track 6010.

In order to assist the walking of the loading and unloading main body walking wheels 6072 on the travelling track 6010, the loading and unloading main body 6070 may further include loading and unloading main body hanging wheels 6073. The loading and unloading main body hanging wheels 6073 and the loading and unloading main body walking wheels 6072 may be respectively located on the upper and lower sides of the track flanges 6011 of the top platform of the platform-type track, and the loading and unloading main body walking wheels 6072 may be prevented from deviating from the travelling track 6010 through the loading and unloading main body hanging wheels 6073. In order to fix the loading and unloading main body hanging wheels 6073, the rotating shafts of the loading and unloading main body walking wheels 6072 and the rotating shafts of the loading and unloading main body hanging wheels 6073 may be fixed by a wheel position fixing frame 6074 that is in rigid connection with the machine body 6071, so that the spatial position relationship between the loading and unloading main body walking wheels 6072 and the loading and unloading main body hanging wheels 6073 is effectively defined. In addition, the wheel position fixing frame 6074 may also support the machine body 6071, so that the bottom of the machine body 6071 and the top platform of the travelling track 6010 form a preset gap.

The track support mechanism 6020 may support the travelling track 6010, and may also be configured to make the distance between the travelling track 6010 and the track reference surface 6040 adjustable. In this way, on one hand, the travelling track 6010 may be supported, so that the travelling track 6010 is higher than the track reference surface 6040 to move the travelling track 6010, and on the other hand, the distance of the travelling track 6010 relative to the track reference surface 6040 may be adjusted to adapt to different track reference surface conditions.

Referring to Fig. 11c, in some embodiments, the track support mechanism 6020 may include a track support member 6021, a track support base 6022, a universal wheel 6023, and a track support adjustment mechanism 6024. The track support member 6021 may be fixedly connected to the travelling track 6010, for example, the track support member 6021 is fixedly disposed in a space below the platform-type track. The track support base 6022 may be disposed below the track support member 6021, and the universal wheel 6023 is disposed below the track support base 6022, in this way, the track support base 6022 may arbitrarily move on the track reference surface 6040 based on the universal wheel 6023, in order to achieve a variety of movement modes such as forward, backward, steering of the traveling track 6010. As required, a plurality of track support bases 6022 and universal wheels 6023 may be provided in order to form a good supporting effect. For example, in Fig. 11 b, two track support bases 6022 are disposed in pairs in the width direction of the travelling track 6010, and the arrangement positions of the two track support bases 6022 may be symmetrical with respect to the center line of the travelling track 6010. In the length direction of the travelling track 6010, multiple groups of such track support bases 6022 may be provided in pairs.

The track support adjustment mechanism 6024 is disposed between the track support member 6021 and the track support base 6022, and one or more track support adjustment mechanisms 6024 may be provided. For a plurality of track support adjustment mechanisms 6024, each track support adjustment mechanism 6024 may independently adjust the distance between the track support member 6021 and the track support base 6022. For example, in Fig. 11c and Fig. 11d, the travelling track 6010 deviates from the track reference surface 6040 under the support of the track support mechanism 6020, at this time, the travelling track 6010 may move relative to the track reference surface 6040 under the driving of the track driving mechanism 6030. When the track support adjustment mechanism 6024 reduces the distance between the track support member 6021 and the track support base 6022, the travelling track 6010 becomes directly supported by the track reference surface 6040, or, the distances between the track support bases 6022 at different positions and the track support member 6021 are adjusted according to the smoothness of the track reference surface, so as to make the loading and unloading main body 6070 keep the vehicle body horizontal, etc.

The track support adjustment mechanism 6024 may adopt a motor, a pneumatic cylinder, a hydraulic cylinder, or an integrated electric lead screw. Taking the integrated electric lead screw as an example, a motor main body of the integrated electric lead screw may be fixed on the track support member 6021, and a power output shaft is in threaded connection with the track support base 6022. When the power output shaft is driven to rotate forward or reversely, the distance of the track support base 6022 relative to the track support member 6021 may be adjusted through screw thread fit.

The adjustment process may be performed manually by the operator or by operating a control panel. In order to make the adjustment process more accurate and controllable, referring to Fig. 11 b, in some embodiments, the track-type walking mechanism may further include a track angle sensor 6081 fixed relative to the travelling track 6010. The track angle sensor 6081 may be fixed on the lower side of the top platform of the travelling track 6010 and may also be fixed on the track support member 6021. The track angle sensor 6081 may detect the inclination angle of the travelling track 6010 relative to the track reference surface 6040, so that the track support mechanism 6020 may adjust the travelling track 6010 according to the inclination angle. For example, when the traveling track 6010 enters a relatively closed loading and unloading space, it is difficult for the operator to see with naked eyes whether the positions of the track and the loading and unloading main body thereof in the loading and unloading space are skewed, while the track angle sensor 6081 may accurately detect the inclination angle of the travelling track 6010, so that the operator may specifically control the track support adjustment mechanism 6024, or, the track support adjustment mechanism 6024 is automatically controlled by the controller to adjust the track.

The track driving mechanism 6030 is connected with the travelling track 6010 and may drive the travelling track 6010 to move relative to the track reference surface 6040. The track reference surface 6040 herein may include the ground, an upper surface of the platform, or the inner ground of the loading and unloading space, etc.

Referring to Fig. 11b to Fig. 11e, in some embodiments, the track driving mechanism 6030 may include a track driving transmission gear 6037 and a track driving rack 6038. The track driving transmission gear 6037 may be coupled with a power source and may be driven by the power source to rotate. The track driving rack 6038 may be fixed on the travelling track 6010 and is engaged with the track driving transmission gear 6037. The track driving transmission gear 6037 drives the travelling track 6010 to move linearly along the length direction through the track driving rack 6038. The engagement structure of the rack and pinion may make the travelling track 6010 run more smoothly and accurately.

In Fig. 11b, Fig. 11c and Fig. 11e, the track driving transmission gear 6037 and the track driving rack 6038 are located on the first track side of the travelling track 6010. The track driving transmission gear 6037 may be driven by the power source on the first track side of the travelling track 6010, and the track driving rack 6038 may be fixed on the side face of the travelling track 6010. A matching surface of the track driving transmission gear 6037 and the track driving rack 6038 is preferably parallel to the reference plane, so that the travelling track 6010 may move smoothly along the horizontal direction.

In Fig. 11b, Fig. 11d and Fig. 11e, the track driving mechanism 6030 may further include a limiting wheel set 6033. The limiting wheel set 6033 is disposed at least on the second track side of the travelling track 6010 for limiting the movement direction of the travelling track 6010, so as to achieve the guiding effect of the travelling track 6010. Herein, the first track side and the second track side of the travelling track 6010 are two opposite sides of the travelling track 6010 in the width direction. In some other embodiments, the limiting wheel sets 6033 may also be disposed on the first track side and the second track side of the travelling track 6010 to limit the deviation of the track due to the change in the center of gravity.

Considering that the traveling track 6010 may vibrate when moving, in order to avoid or reduce the occlusion damage between the track driving transmission gear 6037 and the track driving rack 6038, referring to Fig. 11c, in some embodiments, the power source is connected with a track driving rotating shaft 6036 of the track driving transmission gear 6037 through a transmission mechanism and a flexible coupling 6032. For example, the power source adopts a track driving motor 6031, a power output end of the track driving motor 6031 is connected with a speed reducer 6034 (such as a worm reduction box), and the output end of the speed reducer 6034 is connected with the track driving rotating shaft 6036 of the track driving transmission gear 6037 through the flexible coupling 6032. In this way, even if the track driving rack 6038 vibrates with the vibration of the travelling track 6010, the track driving transmission gear 6037 may adjust the position of the track driving rotating shaft 6036, so that the track driving rotating shaft 6036 is always parallel with the engagement tooth surface of the track driving rack 6038, and then the occlusion damage therebetween is avoided. In some other embodiments, the power output shaft of the power source may also be connected to the track driving rotating shaft 6036 of the track driving transmission gear 6037 through the flexible coupling 6032.

Referring to Fig. 11b, in some embodiments, the track driving mechanism 6030 further includes a deviation following support base 6050. The deviation following support base 6050 is rotatably connected with the track driving rotating shaft 6036 of the track driving transmission gear 6037, may synchronously swing with the track driving rotating shaft 6036 of the track driving transmission gear 6037, and support the track driving rotating shaft 6036 of the track driving transmission gear 6037 to provide a flexible and reliable supporting function for the rotating shaft of the track driving transmission gear 6037.

Referring to Fig. 11c, in some embodiments, the deviation following support base 6050 includes a support base fixing seat 6051, a Y-shaped rotating arm 6052, a support base first bearing 6053, and a support base second bearing 6054. The support base fixing seat 6051 is fixed relative to the track reference surface 6040, the Y-shaped rotating arm 6052 includes a horizontal rotating shaft and a U-shaped support, which are connected with each other, the horizontal rotating shaft is rotatably disposed in the inner cavity of the support base fixing seat 6051 through the support base first bearing 6053, and the two ends of the U-shaped support are connected with two positions of the track driving rotating shaft 6036 of the track driving transmission gear 6037 through the support base second bearing 6054. The track driving transmission gear 6037 is located at a hollow position of the U-shaped support.

As shown in Fig. 11f, it is a structural schematic diagram of another embodiment of the loading and unloading equipment according to the present disclosure. Referring to Fig. 11f and Fig. 11g to Fig. 11i, in some embodiments, the track driving transmission gear 6037 includes a first track driving transmission gear 6037a and a second track driving transmission gear 6037b, which are located on the both sides of the traveling track 6010 in the width direction, respectively. The track driving rack 6038 includes a first track driving rack 6038a and a second track driving rack 6038b, which are fixed on the both sides of the traveling track 6010 in the width direction, respectively; and the first track driving transmission gear 6037a is engaged with the first track driving rack 6038a, and the second track driving transmission gear 6037b is engaged with the second track driving rack 6038b.

In order to provide flexible and reliable support for the rotating shafts of the transmission gears on the both sides, referring to Fig. 11g and Fig. 11h, the track driving mechanism 6030 may further include a first deviation following support base 6050a and a second deviation following support base 6050b. The first deviation following support base 6050a is rotatably connected with a first track driving rotating shaft 6036a of the first track driving transmission gear 6037a for synchronously swinging with the first track driving rotating shaft 6036a of the first track driving transmission gear 6037a and supporting the first track driving rotating shaft 6036a of the first track driving transmission gear 6037a. The second deviation following support base 6050b is rotatably connected with a second track driving rotating shaft 6036b of the second track driving transmission gear 6037b for synchronously swinging with the second track driving rotating shaft 6036b of the second track driving transmission gear 6037b and supporting the second track driving rotating shaft 6036b of the second track driving transmission gear 6037b. The first deviation following support base 6050a and the second deviation following support base 6050b are respectively located on the both sides of the travelling track 6010 in the width direction.

Compared with the embodiment in which the track-type walking mechanism is provided with an engagement structure of the transmission gear and the rack on a single side, the present embodiment may realize a track driving effect with higher power. In order to improve the synchronicity of the two-sided driving, the first track driving transmission gear 6037a and the second track driving transmission gear 6037b may share the same power source. For example, referring to Fig. 11f to Fig. 11h, the track driving mechanism 6030 further includes: a first reduction gearbox 6034a and a second reduction gearbox 6034b. The power output shaft of the power source is connected with an input end of the first reduction gearbox 6034a, and the first track driving rotating shaft 6036a of the first track driving transmission gear 6037a is connected with a first output shaft of the first reduction gearbox 6034a through a first coupling 6032a. The input shaft of the second reduction gearbox 6034b is connected with a second output shaft of the first reduction gearbox 6034a through a reduction gearbox transmission shaft 6035 and a coupling, and the output shaft of the second reduction gearbox 6034b is connected with the second track driving rotating shaft 6036b of the second track driving transmission gear 6037b through a second coupling 6032b. In this way, the power source, such as the track driving motor 6031, may synchronously transmit the power to the first track driving rotating shaft 6036a of the first track driving transmission gear 6037a and the second track driving rotating shaft 6036b of the second track driving transmission gear 6037b, thereby avoiding the deviation of the travelling track 6010 in a driven process.

Referring to Fig. 11e and Fig. 11i, in some embodiments, the loading and unloading main body 6070 may further include an anti-collision wheel 6012. The anti-collision wheel 6012 is disposed on the machine body 6071, for example, is installed on the rack of the machine body 6071 and is located on at least one side of the machine body 6071 in the width direction for protecting the lateral collision of the loading and unloading main body 6070. For example, anti-collision wheels 6012 are disposed on the both sides of the foremost end of the machine body 6071. For example, when the loading and unloading main body 6070 is driven to enter a carriage 6090, the anti-collision wheels 6012 on the both sides may prevent the loading and unloading main body 6070 from further approaching the side wall while touching the side wall of the carriage 6090, and may further guide the loading and unloading main body 6070 to move, thereby avoiding the direct collision between the loading and unloading main body 6070 and the travelling track 6010 with the side wall.

In order to further promote the smooth operation of the loading and unloading main body 6070 in the loading and unloading space, referring to Fig. 11e and Fig. 11i, in some embodiments, the loading and unloading main body 6070 may further include an anti-collision detection component 6082. The anti-collision detection component 6082 may be disposed on the machine body 6071, for example, is installed on the rack of the machine body 6071 and is located on at least one side of the machine body 6071 in the width direction. The anti-collision detection component 6082 may detect an object located on the side of the machine body 6071 to prevent the collision between the machine body 6071 and the object. The anti-collision detection component 6082 may be a contact or non-contact detector, such as an anti-collision three-point detector, a laser ranging sensor, a proximity switch, and the like.

In addition, the loading and unloading main body 6070 may further include a lateral positioning mechanism 6075. The lateral positioning mechanism 6075 may be disposed on the machine body 6071, for example, is installed on the rack of the machine body 6071 and is located on at least one side of the machine body 6071 in the width direction for positioning the position of the machine body 6071 in the loading and unloading space. After the loading and unloading main body 6070 moves in place, the machine body 6071 may be positioned in the loading and unloading space through the lateral positioning mechanism 6075, so as to perform the loading and unloading operation.

For example, the lateral positioning mechanism 6075 may include a gap equalizing component and an active gap adjustment component. The gap equalizing component may be located on a first side of loading and unloading main body in the width direction of the machine body 6071, so that the gaps between the machine body 6071 and the both sides of the loading and unloading space may be more uniform. The gap equalizing component may include a pneumatic cylinder component, and the supporting and fixing effect realized by the pneumatic cylinder component has certain flexibility. In some other embodiments, the gap equalizing component may include a hydraulic cylinder component or a spring component. The active gap adjustment component is located on a second side of loading and unloading main body in the width direction of the machine body 6071, that is, the opposite side of the first side of loading and unloading main body, then the reactive adjustment of the lateral positions of the machine body 6071 relative to the both sides of the loading and unloading space may be realized, and the active gap adjustment component may include a lead screw component with higher adjustment accuracy. In some other embodiments, the active gap adjustment component may further include a rack and pinion component.

With reference to the above embodiments of the loading and unloading equipment, the loading process of the loading and unloading equipment in the carriage is taken as an example for description.

When the traveling track is at the outside of the carriage, the track support mechanism may adjust the traveling track to a state capable of moving relative to the ground or the platform, and then the track driving mechanism drives one end of the traveling track to enter the carriage, until arriving at a predetermined position in the carriage. When the traveling track arrives at the predetermined position, the track support mechanism may be controlled according to the signal of the angle sensor to adjust the travelling track to a stable state.

The loading and unloading equipment may be fixed on the track by the walking wheels and the hanging wheels, and move with the movement of the track. When the traveling track is in place, a loading machine may move to the forefront of the traveling track and begin the loading. Whenever a certain number of columns of packages G are loaded, the loading and unloading main body may retreat along with the traveling track, and then continue the loading, until the entire carriage is filled. At this time, the loading machine may exit the carriage along with the traveling track.

As shown in Fig. 12a to Fig. 13l, in some embodiments, a method for unloading packages G to a storage position A of the packages G by loading and unloading equipment is also provided. Taking the parking direction of the loading and unloading equipment as a reference, the step of driving the pre-storage support plate 3001 to arrive at the storage position of the packages G to unload the packages G specifically includes: driving the pre-storage support plate 3001 to arrive at the rear of the storage position of the packages G; and pushing out the packages G from the pre-storage support plate 3001 while maintaining the position of the mechanical arm unchanged.

In some embodiments, the step of driving the pre-storage support plate 3001 to arrive at the storage position of the packages G to unload the packages G specifically includes: driving the pre-storage support plate 3001 to arrive at the direct upper side of the storage position of the packages G; and while pushing out the packages G from the pre-storage support plate 3001, causing the mechanical arm to move back away from the bottoms of the packages G through the swing of the four-link mechanism.

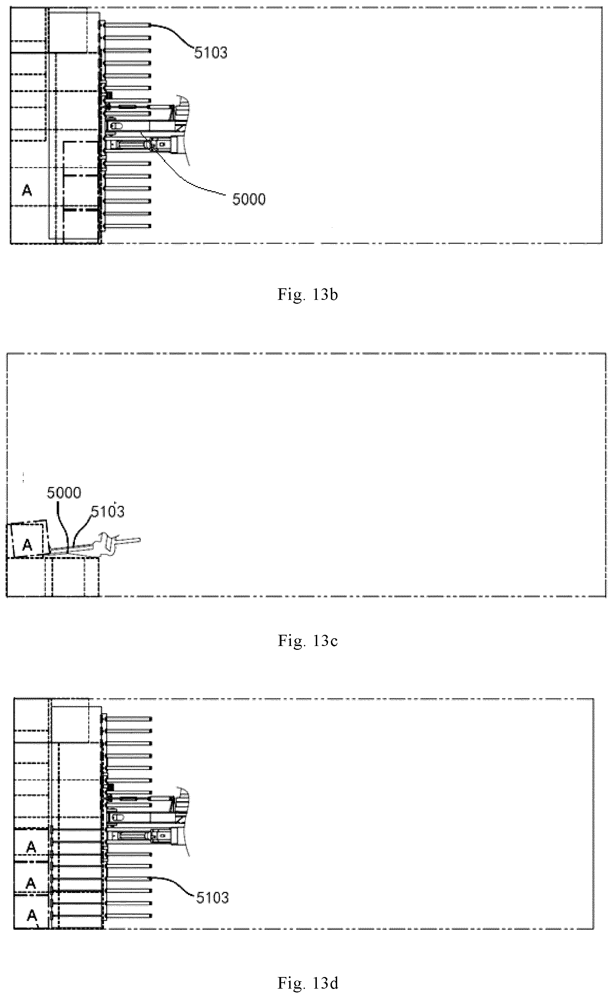

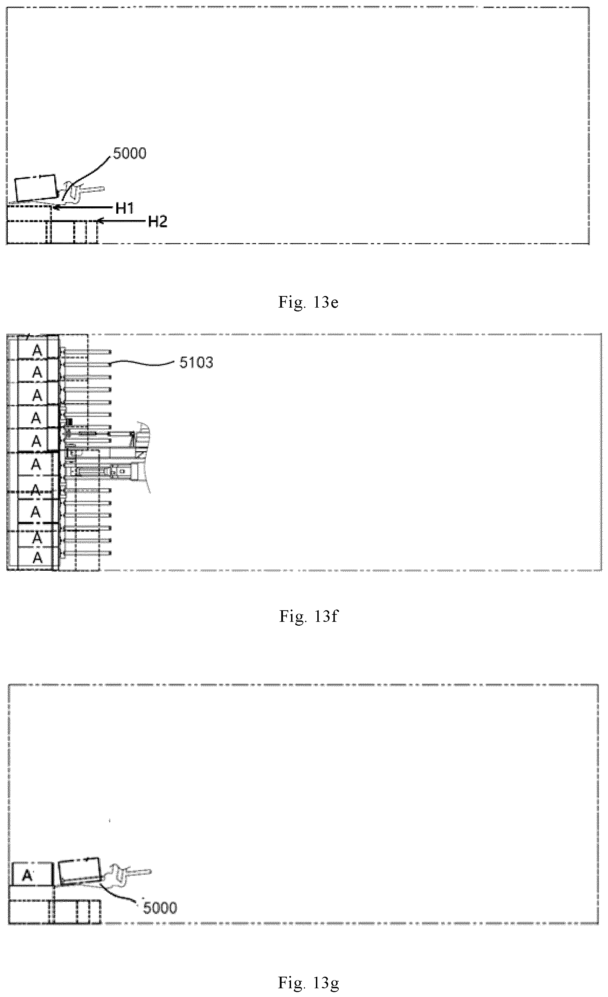

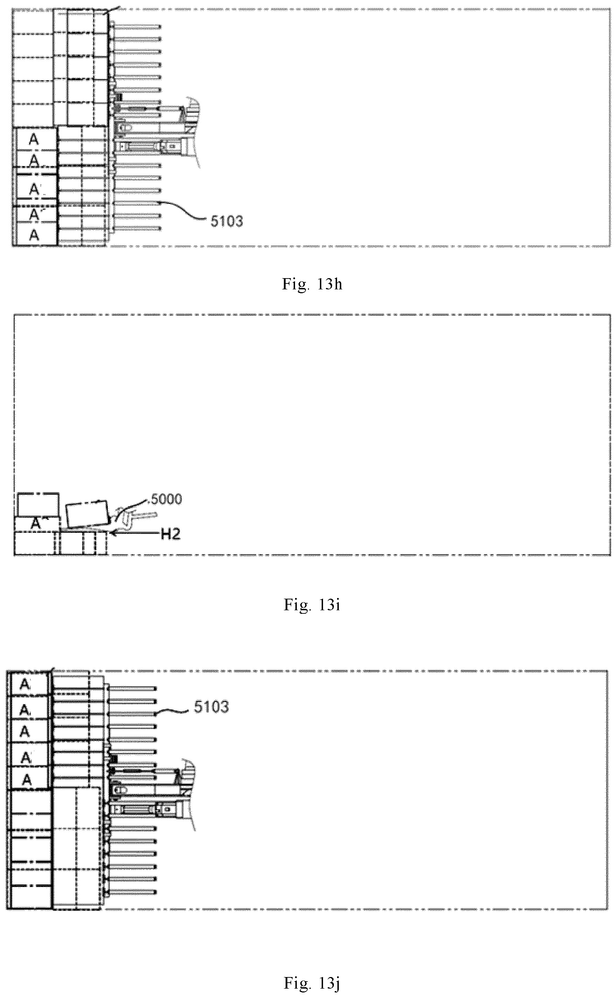

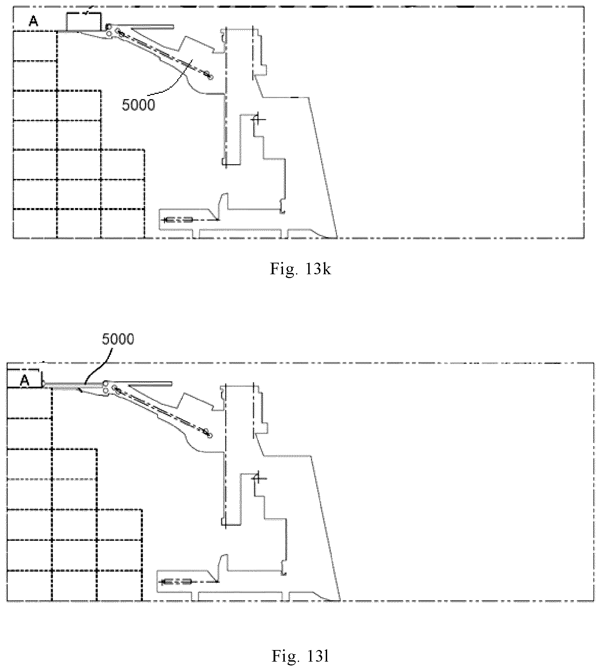

In some embodiments, the step of driving the pre-storage support plate 3001 to arrive at the storage position of the packages G to unload the packages G specifically includes: making the front edge of the pre-storage support plate 3001 align with the edge of the storage position of the packages G in the row that is not filled with the packages; and pushing the packages onto the storage position of the packages G in the row that is not filled with the packages while maintaining the position of the mechanical arm unchanged. As shown in Fig. 13a to Fig. 13d, the row is filled with the packages G by the method.

In some embodiments, when the heights of the packages G stacked on the bottom layer are different, such as the heights H1 and H2 shown in the figure, when an entire row of packages G needs to be further stacked on the packages G on the bottom layer, the step of driving the pre-storage support plate 3001 to arrive at the storage position of the packages G to unload the packages G specifically includes:
driving the pre-storage support plate 3001 to arrive at a storage position of high-level packages G, and only pushing out the packages G that need to be unloaded from the pre-storage support plate 3001 to the storage position of high-level packages G, until the pushed out packages G reach the packages G stacked on the bottom layer at a high level; and
driving the pre-storage support plate 3001 to arrive at a storage position of low-level packages G, and pushing out the remaining packages G on the pre-storage support plate 3001 that need to be unloaded to the storage position of low-level packages G, until the pushed out packages G reach the packages G stacked on the bottom layer at a low level.

In some embodiments, when the packages G have been stacked on the topmost layer and there is still a gap between the tops of the packages G and the top of the stacking space, the step of driving the pre-storage support plate 3001 to arrive at the storage position of the packages G to unload the packages G specifically includes:
making the front edge of the pre-storage support plate 3001 align with the upper edge positions of the packages on the topmost layer at present; and pushing out the packages with heights less than the height to tops of the packages on the topmost layer to fill the gap.

The embodiment of the present disclosure further provides a packages G loading and unloading system with the foregoing loading and unloading equipment. The packages G loading and unloading system has corresponding advantages of the loading and unloading equipment of the present disclosure.

## Claims

1. A loading and unloading equipment, comprising:
a rack (1000);
a marshalling device (2000), configured to receive packages (G) and marshal the packages (G) in a predetermined marshalling mode to form package groups;
a pre-storage device (3000), configured to temporarily store the package groups formed by marshalling to be taken away by a stacking device (5000); and
the stacking device (5000), configured to remove the package groups from the pre-storage device (3000) to stacking positions; wherein,
the pre-storage device (3000) comprises a pre-storage support structure (3002) and a pre-storage support plate (3001) detachably disposed on the pre-storage support structure (3002); and
the stacking device (5000) is configured to cooperate with the pre-storage support plate (3001) to move the package groups from the pre-storage support plate (3001) to the stacking position;
**characterized in that**
the stacking device (5000) has a stacking working state and a no-load state, and is configured:
in the stacking working state, the stacking device (5000) cooperates with the pre-storage support plate (3001), drives the pre-storage support plate (3001) carrying a package group to move to the vicinity of the stacking position of the package group, removes the package group from the pre-storage support plate (3001) to the stacking position, and drives the empty pre-storage support plate (3001) to return to the pre-storage support structure (3002); and
in the no-load state, the stacking device (5000) relieves the cooperation with the pre-storage support plate (3001) to evade the package group, when the package group is transferred to the pre-storage support plate (3001).

2. The loading and unloading equipment of claim 1, wherein the marshalling device (2000) comprises:
a marshalling platform (2001), configured to carry the packages (G);
a force applying mechanism (2002), being switchable between a force applying working position and a non-force applying working position; wherein, at the force applying working position, the force applying mechanism (2002) is configured to drive the packages (G) located on the marshalling platform (2001) to move to the predetermined marshalling position according to the requirements of the predetermined marshalling mode; and
a force applying mechanism driving portion (2003), in driving connection with the force applying mechanism (2002), and configured to drive the force applying mechanism (2002) to move to a preset position of the force applying mechanism.

3. The loading and unloading equipment of claim 1 or 2, further comprising a marshalling-pre-storage intermediate mechanism (23000) disposed between the marshalling device (2000) and the pre-storage device (3000); wherein the marshalling-pre-storage intermediate mechanism (23000) has a package group conveying state and a package group limiting state, and is configured:
in the package group conveying state, the marshalling-pre-storage intermediate mechanism (23000) at least partially covers the gap between the marshalling device (2000) and the pre-storage device (3000); and
in the package group limiting state, the marshalling-pre-storage intermediate mechanism (23000) is disposed at a tail end of the marshalling device (2000) in the package transporting direction to prevent the packages (G) on the marshalling device (2000) from leaving the marshalling device (2000).

4. The loading and unloading equipment of any one of claims 1 to 3, further comprising a package group transfer device (4000), configured to transfer the package groups from the marshalling device (2000) to the pre-storage device (3000), wherein the package group transfer device (4000) has a package bearing state and a package group pushing state, and is configured:
in the package bearing state, the package group transfer device (4000) is located at the upstream of a package receiving end of the marshalling device (2000), and at least a part of the package group transfer device (4000) is flush with the upper surface of the marshalling device (2000), so that the packages (G) are conveyed by the package group transfer device (4000) to the marshalling device (2000); and
in the package group pushing state, the package group transfer device (4000) is located above the marshalling device (2000) to push the package group on the marshalling device (2000) to the pre-storage device (3000).

5. The loading and unloading equipment of any one of claims 1 to 4, wherein the pre-storage device (3000) and the marshalling device (2000) are switchable between a pre-storage station and a marshalling station, and their functions are interchanged after the switch.

6. The loading and unloading equipment of claim 1, wherein the loading and unloading equipment further comprises a package conveying device, configured to convey the packages (G) to the marshalling device (2000), and the package conveying device comprises:
a package conveying mechanism (12100), comprising a package conveying portion for conveying the packages (G);
a package passage limiting mechanism (12002), configured to adjustably limit the width and/or the position of a package passage when the packages (G) are conveyed on the package conveying portion; and
a package output mechanism (12003), comprising an output force applying portion (12039), configured to apply an output force to the packages (G) in the package passage and output the packages (G) to the marshalling device (2000); and
wherein the package passage limiting mechanism (12002) is connected to the package output mechanism (12003), the package passage limiting mechanism (12002) is configured to, when adjusting the width and/or the position of the package passage, drive the package output mechanism (12003) to move along the width direction of the package passage, so that the output force applying portion (12039) of the package output mechanism (12003) is located in the package passage in the width direction of the package passage.

7. The loading and unloading equipment of claim 1, wherein the stacking device (5000) comprises a mechanical arm (5006) formed a four-link mechanism (5001) with the rack (1000); in the stacking working state, the pre-storage support plate (3001) is connected to a rod member in the four-link mechanism (5001) away from the rack (1000), so that the pre-storage support plate (3001) is driven to move to the vicinity of the stacking position by the swing of the four-link mechanism (5001), and the mechanical arm (5006) is configured in such a manner that the length of at least one rod member used for forming the four-link mechanism (5001) is adjustable, so that the inclination angle of the pre-storage support plate (3001) is adjusted according to current working state.

8. The loading and unloading equipment of claim 1, wherein the stacking device (5000) comprises a mechanical arm (5006) and a package group push-out mechanism connected with the mechanical arm (5006), the pre-storage support plate (3001) is provided with a connecting end for connecting with the mechanical arm (5006); in the stacking working state, the package group push-out mechanism is rotatably disposed on one side of the connecting end of the pre-storage support plate (3001), and the package group push-out mechanism is configured to rotate to a first position of package group push-out mechanism in a non-working state, so as to reduce the space occupied on the side of the connecting end of the pre-storage support plate (3001), and to rotate to a second position of package group push-out mechanism in the working state, so as to push out the package groups on the pre-storage support plate (3001).

9. The loading and unloading equipment of claim 8, wherein the package group push-out mechanism comprises a plurality of package push-out members (5103) that are disposed at intervals along the length direction of the pre-storage support plate (3001) in the stacking working state.

10. The loading and unloading equipment of claim 1, wherein,
the stacking device (5000) comprises a first connecting mechanism of pre-storage support plate, which has a locked state of connecting the stacking device (5000) with the pre-storage support plate (3001) and an unlocked state of disconnecting the stacking device (5000) with the pre-storage support plate (3001); and/or
the pre-storage device (3000) comprises a second connecting mechanism of pre-storage support plate, which has a locked state of connecting the pre-storage support plate (3001) with the pre-storage support structure (3002) and an unlocked state of disconnecting the pre-storage support plate (3001) with the pre-storage support structure (3002).

11. The loading and unloading equipment of claim 10, wherein,
the stacking device (5000) comprises the first connecting mechanism of pre-storage support plate, and the pre-storage device (3000) comprises the second connecting mechanism of pre-storage support plate;
the first connecting mechanism of pre-storage support plate and the second connecting mechanism of pre-storage support plate are independently disposed, and are configured in such a way that when one connecting mechanism is switched to the locked state, the other connecting mechanism is in its unlocked state at first; or,
the first connecting mechanism of pre-storage support plate and the second connecting mechanism of pre-storage support plate are disposed in a linkage manner, and are configured in such a way that when one connecting mechanism is switched to the locked state, the other connecting mechanism is located in its unlocked state.

12. The loading and unloading equipment of claim 10, wherein the first connecting mechanism of pre-storage support plate comprises:
a plate arm connection component driving portion (5203);
a first plate arm connection positioning portion, disposed on the pre-storage support plate (3001); and
a second plate arm connection positioning portion, disposed at the output end of the plate arm connection component driving portion (5203); and
the plate arm connection component driving portion (5203) is configured to cause the first plate arm connection positioning portion and the second plate arm connection positioning portion to engage or disengage through the movement of its own output end, in order to connector disconnect the mechanical arm (5006) and the pre-storage support plate (3001).

13. The loading and unloading equipment of claim 10, wherein the pre-storage device (3000) comprises a pre-storage support plate bearing platform (3201), a plate platform connection installation position (3211) is disposed in the pre-storage support plate bearing platform (3201), and the second connecting mechanism of pre-storage support plate comprises:
a plate platform connection component driving portion (3207), disposed in the plate platform connection installation position (3211);
a first plate platform connection positioning portion, disposed on the pre-storage support plate (3001); and
a second plate platform connection positioning portion, disposed at the output end of the plate platform connection component driving portion (3207); and
wherein the plate platform connection component driving portion (3207) is configured to engage or disengage the first plate platform connection positioning portion and the second plate platform connection positioning portion through the movement of its own output end, in order to connect or disconnect the pre-storage support plate (3001) and the pre-storage support plate bearing platform (3201).

14. The loading and unloading equipment of any one of claims 1 to 13, further comprising a traveling device configured to carry and move the loading and unloading equipment; wherein the traveling device comprises a track-type walking mechanism, the loading and unloading equipment comprises a loading and unloading main body (6070) loaded on the track-type walking mechanism and walk along the track-type walking mechanism, the track-type walking mechanism comprises:
a travelling track (6010);
a track support mechanism (6020), configured to adjust the distance between the travelling track (6010) and a track reference surface (6040); and
a track driving mechanism (6030), configured to drive the travelling track (6010) to move relative to the track reference surface (6040).

## Patentansprüche

1. Be- und Entladeausrüstung, die Folgendes umfasst:
ein Gestell (1000);
eine Ordnungsvorrichtung (2000), die dazu ausgelegt ist, Pakete (G) aufzunehmen und die Pakete (G) in einem vorbestimmten Ordnungsmodus zu ordnen, um Paketgruppen zu bilden;
eine Vorlagerungsvorrichtung (3000), die dazu ausgelegt ist, die durch Ordnen gebildeten Paketgruppen vorübergehend zu lagern, um von einer Stapelvorrichtung (5000) mitgenommen zu werden; und
eine Stapelvorrichtung (5000), die dazu ausgelegt ist, die Paketgruppen von der Vorlagerungsvorrichtung (3000) zu Stapelpositionen zu entfernen; wobei,
die Vorlagerungsvorrichtung (3000) eine Vorlagerungsstützstruktur (3002) und eine Vorlagerungsstützplatte (3001) umfasst, die lösbar auf der Vorlagerungsstützstruktur (3002) angeordnet ist; und
die Stapelvorrichtung (5000) dazu ausgelegt ist, mit der Vorlagerungsstützplatte (3001) zusammenzuwirken, um die Paketgruppen von der Vorlagerungsstützplatte (3001) zu den Stapelpositionen zu bewegen;
**dadurch gekennzeichnet, dass**
die Stapelvorrichtung (5000) einen Stapelarbeitszustand und einen lastfreien Zustand aufweist und zu Folgendem ausgelegt ist:
im Stapelarbeitszustand wirkt die Stapelvorrichtung (5000) mit der Vorlagerungsstützplatte (3001) zusammen, treibt die Vorlagerungsstützplatte (3001), die eine Paketgruppe trägt, zum Bewegen in die Nähe der Stapelposition der Paketgruppe an, entfernt die Paketgruppe von der Vorlagerungsstützplatte (3001) zur Stapelposition und treibt die leere Vorlagerungsstützplatte (3001) zum Zurückkehren zur Vorlagerungsstützstruktur (3002) an; und
im lastfreien Zustand löst die Stapelvorrichtung (5000) das Zusammenwirken mit der Vorlagerungsstützplatte (3001) auf, um die Paketgruppe zu umgehen, wenn die Paketgruppe an die Vorlagerungsstützplatte (3001) übergeben wird.

2. Be- und Entladeausrüstung nach Anspruch 1, wobei die Ordnungsvorrichtung (2000) Folgendes umfasst:
eine Ordnungsplattform (2001), die dazu ausgelegt ist, die Pakete (G) zu tragen;
einen Kraftausübungsmechanismus (2002), der zwischen einer Kraftausübungsarbeitsposition und einer Arbeitsposition ohne Kraftausübung umschaltbar ist; wobei der Kraftausübungsmechanismus (2002) in der Kraftausübungsarbeitsposition dazu ausgelegt ist, die Pakete (G), die sich auf der Ordnungsplattform (2001) befinden, derart anzutreiben, dass sie sich gemäß den Anforderungen des vorbestimmten Ordnungsmodus zur vorbestimmten Ordnungsposition bewegen; und
einen Kraftausübungsmechanismusantriebsabschnitt (2003), der mit dem Kraftausübungsmechanismus (2002) in einer Antriebsverbindung steht und dazu ausgelegt ist, den Kraftausübungsmechanismus (2002) zum Bewegen zu einer voreingestellten Position des Kraftausübungsmechanismus anzutreiben.

3. Be- und Entladeausrüstung nach Anspruch 1 oder 2, die ferner einen Ordnungsvorlagerungszwischenmechanismus (23000) umfasst, der zwischen der Ordnungsvorrichtung (2000) und der Vorlagerungsvorrichtung (3000) angeordnet ist; wobei der Ordnungsvorlagerungszwischenmechanismus (23000) einen Paketgruppenförderzustand und einen Paketgruppenbegrenzungszustand aufweist und zu Folgendem ausgelegt ist:
im Paketgruppenförderzustand deckt der Ordnungsvorlagerungszwischenmechanismus (23000) den Spalt zwischen der Ordnungsvorrichtung (2000) und der Vorlagerungsvorrichtung (3000) mindestens teilweise ab; und
im Paketgruppenbegrenzungszustand ist der Ordnungsvorlagerungszwischenmechanismus (23000) an einem hinteren Ende der Ordnungsvorrichtung (2000) in der Pakettransportrichtung angeordnet, um es zu verhindern, dass Pakete (G) auf der Ordnungsvorrichtung (2000) die Ordnungsvorrichtung (2000) verlassen.

4. Be- und Entladeausrüstung nach einem der Ansprüche 1 bis 3, die ferner eine Paketgruppenübergabevorrichtung (4000) umfasst, die dazu ausgelegt ist, die Paketgruppen von der Ordnungsvorrichtung (2000) an die Vorlagerungsvorrichtung (3000) zu übergeben, wobei die Paketgruppenübergabevorrichtung (4000) einen Pakettragezustand und einen Paketgruppenschubzustand aufweist und zu Folgendem ausgelegt ist:
im Pakettragezustand befindet sich die Paketgruppenübergabevorrichtung (4000) stromaufwärts von einem Paketaufnahmeende der Ordnungsvorrichtung (2000) und mindestens ein Teil der Paketgruppenübergabevorrichtung (4000) ist mit der oberen Fläche der Ordnungsvorrichtung (2000) bündig, derart, dass die Pakete (G) von der Paketgruppenübergabevorrichtung (4000) an die Ordnungsvorrichtung (2000) übergeben werden; und
im Paketgruppenschubzustand befindet sich die Paketgruppenübergabevorrichtung (4000) über der Ordnungsvorrichtung (2000), um die Paketgruppe auf der Ordnungsvorrichtung (2000) zur Vorlagerungsvorrichtung (3000) zu schieben.

5. Be- und Entladeausrüstung nach einem der Ansprüche 1 bis 4, wobei die Vorlagerungsvorrichtung (3000) und die Ordnungsvorrichtung (2000) zwischen einer Vorlagerungsstation und einer Ordnungsstation umschaltbar sind und deren Funktionen nach der Umschaltung vertauscht werden.

6. Be- und Entladeausrüstung nach Anspruch 1, wobei die Be- und Entladeausrüstung ferner eine Paketfördervorrichtung umfasst, die dazu ausgelegt ist, die Pakete (G) zur Ordnungsvorrichtung (2000) zu befördern, und die Paketfördervorrichtung Folgendes umfasst:
einen Paketfördermechanismus (12100), der einen Paketfördererabschnitt zum Befördern der Pakete (G) umfasst;
einen Paketdurchlaufbegrenzungsmechanismus (12002), der dazu ausgelegt ist, die Breite und/oder die Position eines Paketdurchlaufs einstellbar zu begrenzen, wenn die Pakete (G) auf dem Paketfördererabschnitt befördert werden; und
einen Paketausgabemechanismus (12003), der einen Ausgabekraftausübungsabschnitt (12039) umfasst, der dazu ausgelegt ist, auf die Pakete (G) im Paketdurchlauf eine Ausgabekraft auszuüben und die Pakete (G) an die Ordnungsvorrichtung (2000) auszugeben; und
wobei der Paketdurchlaufbegrenzungsmechanismus (12002) mit dem Paketausgabemechanismus (12003) verbunden ist, der Paketdurchlaufbegrenzungsmechanismus (12002) dazu ausgelegt ist, wenn die Breite und/oder die Position des Paketdurchlaufs eingestellt wird, den Paketausgabemechanismus (12003) derart anzutreiben, dass er sich entlang der Breitenrichtung des Paketdurchlaufs bewegt, derart, dass sich der Ausgabekraftausübungsabschnitt (12039) des Paketausgabemechanismus (12003) im Paketdurchlauf in der Breitenrichtung des Paketdurchlaufs befindet.

7. Be- und Entladeausrüstung nach Anspruch 1, wobei die Stapelvorrichtung (5000) einen mechanischen Arm (5006) umfasst, der mit dem Gestell (1000) einen Viergelenkmechanismus (5001) bildet; im Stapelarbeitszustand die Vorlagerungsstützplatte (3001) mit einem Stangenelement im Viergelenkmechanismus (5001) vom Gestell (1000) weg verbunden ist, derart, dass die Vorlagerungsstützplatte (3001) durch das Schwenken des Viergelenkmechanismus (5001) zum Bewegen in die Nähe der Stapelposition angetrieben wird, und der mechanische Arm (5006) derart ausgelegt ist, dass die Länge von mindestens einem Stangenelement, dass zum Bilden des Viergelenkmechanismus (5001) verwendet wird, einstellbar ist, derart, dass der Neigungswinkel der Vorlagerungsstützplatte (3001) gemäß einem aktuellen Arbeitszustand eingestellt wird.

8. Be- und Entladeausrüstung nach Anspruch 1, wobei die Stapelvorrichtung (5000) einen mechanischen Arm (5006) und einen Paketgruppenausdrückmechanismus, der mit dem mechanischen Arm (5006) verbunden ist, umfasst, die Vorlagerungsstützplatte (3001) zum Verbinden mit dem mechanischen Arm (5006) mit einem Verbindungsende versehen ist; im Stapelarbeitszustand der Paketgruppenausdrückmechanismus auf einer Seite des Verbindungsendes der Vorlagerungsstützplatte (3001) drehbar angeordnet ist, und der Paketgruppenausdrückmechanismus dazu ausgelegt ist, in einem Nichtarbeitszustand sich zu einer ersten Position des Paketgruppenausdrückmechanismus zu drehen, um den Raum, der auf der Seite des Verbindungsendes der Vorlagerungsstützplatte (3001) eingenommen wird, zu reduzieren, und sich im Arbeitszustand zu einer zweiten Position des Paketgruppenausdrückmechanismus zu drehen, um die Paketgruppen auf der Vorlagerungsstützplatte (3001) herauszuschieben.

9. Be- und Entladeausrüstung nach Anspruch 8, wobei der Paketgruppenausdrückmechanismus eine Vielzahl von Paketausdrückelementen (5103) umfasst, die im Stapelarbeitszustand in Intervallen entlang der Längsrichtung der Vorlagerungsstützplatte (3001) angeordnet sind.

10. Be- und Entladeausrüstung nach Anspruch 1, wobei,
die Stapelvorrichtung (5000) einen ersten Verbindungsmechanismus der Vorlagerungsstützplatte umfasst, der einen verriegelten Zustand zum Verbinden der Stapelvorrichtung (5000) mit der Vorlagerungsstützplatte (3001) und einen nicht verriegelten Zustand zum Trennen der Stapelvorrichtung (5000) von der Vorlagerungsstützplatte (3001) aufweist; und/oder
die Vorlagerungsvorrichtung (3000) einen zweiten Verbindungsmechanismus der Vorlagerungsstützplatte umfasst, der einen verriegelten Zustand zum Verbinden der Vorlagerungsstützplatte (3001) mit der Vorlagerungsstützstruktur (3002) und einen nicht verriegelten Zustand zum Trennen der Vorlagerungsstützplatte (3001) von der Vorlagerungsstützstruktur (3002) aufweist.

11. Be- und Entladeausrüstung nach Anspruch 10, wobei,
die Stapelvorrichtung (5000) den ersten Verbindungsmechanismus der Vorlagerungsstützplatte umfasst, und die Vorlagerungsvorrichtung (3000) den zweiten Verbindungsmechanismus der Vorlagerungsstützplatte umfasst;
der erste Verbindungsmechanismus der Vorlagerungsstützplatte und der zweite Verbindungsmechanismus der Vorlagerungsstützplatte unabhängig angeordnet und in einer Weise angeordnet sind, dass, wenn ein Verbindungsmechanismus in den verriegelten Zustand geschaltet wird, der andere Verbindungsmechanismus zuerst in seinen nicht verriegelten Zustand umgeschaltet wird; oder,
der erste Verbindungsmechanismus der Vorlagerungsstützplatte und der zweite Verbindungsmechanismus der Vorlagerungsstützplatte in einer Gestängeweise derart angeordnet sind, dass, wenn ein Verbindungsmechanismus in den verriegelten Zustand umgeschaltet wird, sich der andere Verbindungsmechanismus in seinem nicht verriegelten Zustand befindet.

12. Be- und Entladeausrüstung nach Anspruch 10, wobei der erste Verbindungsmechanismus der Vorlagerungsstützplatte Folgendes umfasst:
einen Plattenarmverbindungskomponentenantriebsabschnitt (5203);
einen ersten Plattenarmverbindungspositionierungsabschnitt, der auf der Vorlagerungsstützplatte (3001) angeordnet ist; und
einen zweiten Plattenarmverbindungspositionierungsabschnitt, der am Ausgabeende des Plattenarmverbindungskomponentenantriebsabschnitts (5203) angeordnet ist; und
der Plattenarmverbindungskomponentenantriebsabschnitt (5203) ist dazu ausgelegt, den ersten Plattenarmverbindungspositionierungsabschnitt und den zweiten Plattenarmverbindungspositionierungsabschnitt zu veranlassen, durch die Bewegung seines eigenen Ausgabeendes einzugreifen oder den Eingriff zu lösen, um den mechanischen Arm (5006) und die Vorlagerungsstützplatte (3001) zu verbinden oder zu trennen.

13. Be- und Entladeausrüstung nach Anspruch 10, wobei die Vorlagerungsvorrichtung (3000) eine Vorlagerungsstützplattentragplattform (3201) umfasst, eine Plattenplattformverbindungsinstallationsposition (3211) auf der Vorlagerungsstützplattentragplattform (3201) angeordnet ist und der zweite Verbindungsmechanismus der Vorlagerungsstützplatte Folgendes umfasst:
einen Plattenplattformverbindungskomponentenantriebsabschnitt (3207), der in der Plattenplattformverbindungsinstallationsposition (3211) angeordnet ist;
einen ersten Plattenplattformverbindungspositionierungsabschnitt, der auf der Vorlagerungsstützplatte (3001) angeordnet ist; und
einen zweiten Plattenplattformverbindungspositionierungsabschnitt, der am Ausgabeende des Plattenplattformverbindungskomponentenantriebsabschnitts (3207) angeordnet ist; und
wobei der Plattenplattformverbindungskomponentenantriebsabschnitt (3207) dazu ausgelegt ist, in den ersten Plattenplattformverbindungspositionierungsabschnitt und den zweiten Plattenplattformverbindungspositionierungsabschnitt durch die Bewegung seines eigenen Ausgabeendes einzugreifen oder den Eingriff zu lösen, um die Vorlagerungsstützplatte (3001) und die Vorlagerungsstützplattentragplattform (3201) zu verbinden oder zu trennen.

14. Be- und Entladeausrüstung nach einem der Ansprüche 1 bis 13, die ferner eine fahrbare Vorrichtung umfasst, die dazu ausgelegt ist, die Be- und Entladeausrüstung zu tragen und zu bewegen; wobei die fahrbare Vorrichtung einen Spurlaufmechanismus umfasst, die Be- und Entladeausrüstung einen Be- und Entladehauptkörper (6070) umfasst, der auf den Spurlaufmechanismus geladen ist und entlang des Spurlaufmechanismus läuft, wobei der Spurlaufmechanismus Folgendes umfasst:
eine Laufspur (6010);
einen Spurstützmechanismus (6020), der dazu ausgelegt ist, den Abstand zwischen der Laufspur (6010) und einer Spurreferenzfläche (6040) einzustellen; und
einen Spurantriebsmechanismus (6030), der dazu ausgelegt ist, die Laufspur (6010) zum Bewegen relativ zur Spurreferenzfläche (6040) anzutreiben.

## Revendications

1. Équipement de chargement et de déchargement, comprenant :
un bâti (1000) ;
un dispositif de triage (2000) configuré pour recevoir des paquets (G) et trier les paquets (G) dans un mode de triage prédéterminé pour former des groupes de paquets ;
un dispositif de pré-stockage (3000) configuré pour stocker temporairement les groupes de paquets formés par le triage en vue de leur enlèvement par un dispositif d'empilage (5000) ; et
le dispositif d'empilage (5000) configuré pour retirer les groupes de paquets du dispositif de pré-stockage (3000) vers des postes d'empilage ; dans lequel,
le dispositif de pré-stockage (3000) comprend une structure de support de pré-stockage (3002) et une plaque de support de pré-stockage (3001) disposée de manière amovible sur la structure de support de pré-stockage (3002) ; et
le dispositif d'empilage (5000) est configuré pour coopérer avec la plaque de support de pré-stockage (3001) pour déplacer les groupes de paquets de la plaque de support de pré-stockage (3001) vers le poste d'empilage ;
**caractérisé en ce que**
le dispositif d'empilage (5000) a un état de travail d'empilage et un état de non-chargement, et est configuré comme suit :
dans l'état de travail d'empilage, le dispositif d'empilage (5000) coopère avec la plaque de support de pré-stockage (3001), entraîne la plaque de support de pré-stockage (3001) portant un groupe de paquets pour se déplacer à proximité du poste d'empilage du groupe de paquets, retire le groupe de paquets de la plaque de support de pré-stockage (3001) vers le poste d'empilage, et entraîne la plaque de support de pré-stockage (3001) vide pour retourner à la structure de support de pré-stockage (3002) ; et
dans l'état de non-chargement, le dispositif d'empilage (5000) libère la coopération avec la plaque de support de pré-stockage (3001) pour éviter le groupe de paquets, lorsque le groupe de paquets est transféré sur la plaque de support de pré-stockage (3001).

2. Équipement de chargement et de déchargement selon la revendication 1, dans lequel le dispositif de triage (2000) comprend :
une plate-forme de triage (2001) configurée pour porter les paquets (G) ;
un mécanisme d'application de force (2002) pouvant commuter entre une position de travail avec application de force et une position de travail sans application de force ; dans lequel, à la position de travail avec application de force, le mécanisme d'application de force (2002) est configuré pour entraîner les paquets (G) situés sur la plate-forme de triage (2001) pour se déplacer vers le poste de triage prédéterminé selon les exigences du mode de triage prédéterminé ; et
une partie d'entraînement de mécanisme d'application de force (2003) en connexion d'entraînement avec le mécanisme d'application de force (2002), configurée pour entraîner le mécanisme d'application de force (2002) pour passer à une position prédéfinie du mécanisme d'application de force.

3. Équipement de chargement et de déchargement selon la revendication 1 ou 2, comprenant en outre un mécanisme intermédiaire de triage-pré-stockage (23000) disposé entre le dispositif de triage (2000) et le dispositif de pré-stockage (3000) ; dans lequel le mécanisme intermédiaire de triage-pré-stockage (23000) a un état d'acheminement de groupes de paquets et un état de limitation de groupes de paquets, et est configuré comme suit :
dans l'état d'acheminement de groupes de paquets, le mécanisme intermédiaire de triage-pré-stockage (23000) couvre au moins partiellement l'écart entre le dispositif de triage (2000) et le dispositif de pré-stockage (3000) ; et
dans l'état de limitation de groupes de paquets, le mécanisme intermédiaire de triage-pré-stockage (23000) est disposé à une extrémité arrière du dispositif de triage (2000) dans la direction du transport de paquets pour empêcher les paquets (G) sur le dispositif de triage (2000) de quitter le dispositif de triage (2000).

4. Équipement de chargement et de déchargement selon l'une des revendications 1 à 3, comprenant en outre un dispositif de transfert de groupes de paquets (4000) configuré pour transférer les groupes de paquets du dispositif de triage (2000) au dispositif de pré-stockage (3000), dans lequel le dispositif de transfert de groupes de paquets (4000) a un état d'appui de paquet et un état de poussée de groupes de paquets, et est configuré comme suit :
dans l'état d'appui de paquet, le dispositif de transfert de groupes de paquets (4000) est situé en amont d'une extrémité de réception de paquets du dispositif de triage (2000), et au moins une partie du dispositif de transfert de groupes de paquets (4000) affleure la surface supérieure du dispositif de triage (2000), de sorte que les paquets (G) soient acheminés par le dispositif de transfert de groupes de paquets (4000) jusqu'au dispositif de triage (2000) ; et
dans l'état de poussée de groupes de paquets, le dispositif de transfert de groupes de paquets (4000) est situé au-dessus du dispositif de triage (2000) pour pousser le groupe de paquets sur le dispositif de triage (2000) vers le dispositif de pré-stockage (3000).

5. Équipement de chargement et de déchargement selon l'une des revendications 1 à 4, dans lequel le dispositif de pré-stockage (3000) et le dispositif de triage (2000) peuvent commuter entre une station de pré-stockage et une station de triage, et leurs fonctions sont interchangées après la commutation.

6. Équipement de chargement et de déchargement selon la revendication 1, dans lequel l'équipement de chargement et de déchargement comprend en outre un dispositif d'acheminement de paquets configuré pour acheminer les paquets (G) vers le dispositif de triage (2000), et le dispositif d'acheminement de paquets comprend :
un mécanisme d'acheminement de paquets (12100) comprenant un partie d'acheminement de paquets pour acheminer les paquets (G) ;
un mécanisme de limitation de passage de paquets (12002), configuré pour limiter de manière réglable la largeur et/ou la position d'un passage de paquets lorsque les paquets (G) sont acheminés sur la partie d'acheminement de paquets ; et
un mécanisme de sortie de paquets (12003) comprenant une partie d'application de force de sortie (12039) configurée pour appliquer une force de sortie aux paquets (G) dans le passage de paquets, et pour délivrer les paquets (G) au dispositif de triage (2000) ; et
dans lequel le mécanisme de limitation de passage de paquets (12002) est connecté au mécanisme de sortie de paquets (12003), le mécanisme de limitation de passage de paquets (12002) est configuré pour, lors du réglage de la largeur et/ou de la position du passage de paquets, entraîner le mécanisme de sortie de paquets (12003) pour se déplacer le long de la direction de la largeur du passage de paquets, de sorte que la partie d'application de force de sortie (12039) du mécanisme de sortie de paquets (12003) soit située dans le passage de paquets dans la direction de la largeur du passage de paquets.

7. Équipement de chargement et de déchargement selon la revendication 1, dans lequel le dispositif d'empilage (5000) comprend un bras mécanique (5006) formant un mécanisme à quatre liens (5001) avec le bâti (1000) ; dans l'état de travail d'empilage, la plaque de support de pré-stockage (3001) est connectée à un élément de tige du mécanisme à quatre liens (5001) loin du bâti (1000), de sorte que la plaque de support de pré-stockage (3001) soit entraînée pour se déplacer à proximité du poste d'empilage par l'oscillation du mécanisme à quatre liens (5001), et le bras mécanique (5006) est configuré de manière à ce que la longueur d'au moins un élément de tige utilisé pour former le mécanisme à quatre liens (5001) soit réglable, de sorte que l'angle d'inclinaison de la plaque de support de pré-stockage (3001) soit réglé selon l'état de fonctionnement actuel.

8. Équipement de chargement et de déchargement selon la revendication 1, dans lequel le dispositif d'empilage (5000) comprend un bras mécanique (5006) et un mécanisme d'expulsion de groupe de paquets connecté au bras mécanique (5006), la plaque de support de pré-stockage (3001) est pourvue d'une extrémité de connexion pour se connecter au bras mécanique (5006) ; dans l'état de travail d'empilage, le mécanisme d'expulsion de groupe de paquets est disposé de manière rotative sur un côté de l'extrémité de connexion de la plaque de support de pré-stockage (3001), et le mécanisme d'expulsion de groupe de paquets est configuré pour tourner jusqu'à une première position de mécanisme d'expulsion de groupe de paquets dans un état de non-travail, de manière à réduire l'espace occupé sur le côté de l'extrémité de connexion de la plaque de support de pré-stockage (3001), et pour tourner jusqu'à une deuxième position de mécanisme d'expulsion de groupe de paquets dans l'état de travail, de manière à expulser les groupes de paquets sur la plaque de support de pré-stockage (3001).

9. Équipement de chargement et de déchargement selon la revendication 8, dans lequel le mécanisme d'expulsion de groupe de paquets comprend une pluralité d'éléments d'expulsion de paquets (5103) qui sont disposés à intervalles sur la direction de la longueur de la plaque de support de pré-stockage (3001) dans l'état de travail d'empilage.

10. Équipement de chargement et de déchargement selon la revendication 1, dans lequel,
le dispositif d'empilage (5000) comprend un premier mécanisme de connexion de plaque de support de pré-stockage qui a un état verrouillé de connexion du dispositif d'empilage (5000) avec la plaque de support de pré-stockage (3001) et un état déverrouillé de déconnexion du dispositif d'empilage (5000) de la plaque de support de pré-stockage (3001) ; et/ou
le dispositif de pré-stockage (3000) comprend un deuxième mécanisme de connexion de plaque de support de pré-stockage qui a un état verrouillé de connexion de la plaque de support de pré-stockage (3001) avec la structure de support de pré-stockage (3002) et un état déverrouillé de déconnexion de la plaque de support de pré-stockage (3001) de la structure de support de pré-stockage (3002).

11. Équipement de chargement et de déchargement selon la revendication 10, dans lequel,
le dispositif d'empilage (5000) comprend le premier mécanisme de connexion de plaque de support de pré-stockage, et le dispositif de pré-stockage (3000) comprend le deuxième mécanisme de connexion de plaque de support de pré-stockage ;
le premier mécanisme de connexion de plaque de support de pré-stockage et le deuxième mécanisme de connexion de plaque de support de pré-stockage sont disposés indépendamment, et sont configurés de sorte que lorsqu'un mécanisme de connexion passe à l'état verrouillé, l'autre mécanisme de connexion se trouve d'abord à l'état déverrouillé ; ou
le premier mécanisme de connexion de plaque de support de pré-stockage et le deuxième mécanisme de connexion de plaque de support de pré-stockage sont disposés de manière à être reliés, et sont configurés de sorte que lorsqu'un mécanisme de connexion passe à l'état verrouillé, l'autre mécanisme de connexion se trouve à l'état déverrouillé.

12. Équipement de chargement et de déchargement selon la revendication 10, dans lequel le premier mécanisme de connexion de plaque de support de pré-stockage comprend :
une partie d'entraînement de composant de connexion de bras de plaque (5203) ;
une première partie de positionnement de connexion de bras de plaque disposée sur la plaque de support de pré-stockage (3001) ; et
une deuxième partie de positionnement de connexion de bras de plaque disposée à l'extrémité de sortie de la partie d'entraînement de composant de connexion de bras de plaque (5203) ; et
la partie d'entraînement de composant de connexion de bras de plaque (5203) est configurée pour amener la première partie de positionnement de connexion de bras de plaque et la deuxième partie de positionnement de connexion de bras de plaque à s'engager ou à se dégager par le déplacement de sa propre extrémité de sortie, afin de connecter ou de déconnecter le bras mécanique (5006) et la plaque de support de pré-stockage (3001) .

13. Équipement de chargement et de déchargement selon la revendication 10, dans lequel le dispositif de pré-stockage (3000) comprend une plate-forme d'appui de plaque de support de pré-stockage (3201), un poste d'installation de connexion de plate-forme de plaque (3211) est disposé dans la plate-forme d'appui de plaque de support de pré-stockage (3201), et le deuxième mécanisme de connexion de plaque de support de pré-stockage comprend :
une partie d'entraînement de composant de connexion de plate-forme de plaque (3207) disposée dans le poste d'installation de connexion de plate-forme de plaque (3211) ;
une première partie de positionnement de connexion de plate-forme de plaque disposée sur la plaque de support de pré-stockage (3001) ; et
une deuxième partie de positionnement de connexion de plate-forme de plaque disposée à l'extrémité de sortie de la partie d'entraînement de composant de connexion de plate-forme de plaque (3207) ; et
dans lequel la partie d'entraînement de composant de connexion de plate-forme de plaque (3207) est configurée pour engager ou dégager la première partie de positionnement de connexion de plate-forme de plaque et la deuxième partie de positionnement de connexion de plate-forme de plaque par le déplacement de sa propre extrémité de sortie, afin de connecter ou de déconnecter la plaque de support de pré-stockage (3001) et la plate-forme d'appui de plaque de support de pré-stockage (3201).

14. Équipement de chargement et de déchargement selon l'une des revendications 1 à 13, comprenant en outre un dispositif de déplacement configuré pour porter et déplacer l'équipement de chargement et de déchargement ; dans lequel le dispositif de déplacement comprend un mécanisme d'avance de type à chenilles, l'équipement de chargement et de déchargement comprend un corps principal de chargement et de déchargement (6070) chargé sur le mécanisme d'avance de type à chenilles et avançant le long du mécanisme d'avance de type à chenilles, le mécanisme d'avance de type à chenilles comprend :
une voie de déplacement (6010) ;
un mécanisme de support de voie (6020) configuré pour régler la distance entre la voie de déplacement (6010) et une surface de référence de voie (6040) ; et
un mécanisme d'entraînement de voie (6030) configuré pour entraîner la voie de déplacement (6010) pour se déplacer par rapport à la surface de référence de voie (6040).
